# NEUE EUROPÄISCHE PATENTSCHRIFT

(11) **EP 0 394 417 B2**
(45) Veröffentlichungstag und Bekanntmachung des Hinweises auf die Entscheidung über den Einspruch: **04.08.1999**
(45) Hinweis auf die Patenterteilung: 26.10.1994
(21) Anmeldenummer: 89911996.0
(22) Anmeldetag: 09.10.1989
(51) Int. Cl.: C09K 19/42, G02F 1/137

(54) **ANZEIGE MIT SUPERGEDREHTEN FLÜSSIGKRISTALLEN**
SUPERTWIST LIQUID CRYSTAL DISPLAY
AFFICHAGE A CRISTAUX LIQUIDES SUPERTWISTES

(30) Priorität: 20.10.1988 DE 3835804
(43) Veröffentlichungstag der Anmeldung: 31.10.1990
(73) Patentinhaber: MERCK PATENT GmbH, 64271 Darmstadt (DE)
(72) Erfinder: WEBER, Georg, D-6106 Erzhausen (DE); PLACH, Herbert, D-6100 Darmstadt (DE); OYAMA, Takamasa, Kanagawa (JP); YOSHITAKE, Hiroki, Kanagawa 234 (JP); SCHEUBLE, Bernhard Bluff 100 100-1, Yamate-cho, Kanagawa 231 (JP); HITTICH, Reinhard, D-6101 Modautal 1 (DE); KURMEIER, Hans-Adolf, D-6104 Seeheim-Jugenheim (DE); POETSCH, Eike, D-6109 Mühltal 6 (DE); STAHL, Klaus-Peter, D-6100 Darmstadt (DE)
(86) Internationale Anmeldenummer: EP8901187
(87) Internationale Veröffentlichungsnummer: WO9004622

(56) Entgegenhaltungen:
- EP-A- 0 260 450
- EP-A- 0 261 614
- EP-A- 0 315 050
- EP-A- 0 332 005
- WO-A-89/03867
- WO-A-89/06677
- WO-A-89/08691
- WO-A-89/08692
- JP-A- 60 051 778
- US-A- 4 799 774
- WO 89/03867
- WO 89/06677
- WO 89/08691

## Beschreibung

Die Erfindung betrifft Supertwist-Flüssigkristallanzeigen (SFA) mit sehr kurzen Schaltzeiten und guten Steilheiten und Winkelabhängigkeiten sowie die darin verwendeten neuen nematischen Flüssigkristallmischungen.

SFA gemäß des Oberbegriffs sind bekannt, z.B. aus EP 0 131 216 B1; DE 34 23 993 A1; EP 0 098 070 A2; M. Schadt und F. Leenhouts, 17. Freiburger Arbeitstagung Flüssigkristalle (8.-10.04.87); K. Kawasaki et al., SID 87 Digest 391 (20.6); M. Schadt und F. Leenhouts, SID 87 Digest 372 (20.1); K. Katoh et al., Japanese Journal of Applied Physics, Vol. 26, No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984), M. Schadt und F. Leenhouts, Appl. Phys. Lett. 50 (5), 236 (1987) und E.P. Raynes, Mol. Cryst. Liq. Cryst. Letters Vol. 4 (1), pp. 1-8 (1986). Der Begriff SFA umfaßt hier jedes höher verdrillte Anzeigeelement mit einem Verdrillungswinkel dem Betrage nach zwischen 160° und 360°, wie beispielsweise die Anzeigeelemente nach Waters et al. (C.M. Waters et al., Proc. Soc. Inf. Disp. (New York) (1985) (3rd Intern. Display Conference, Kobe, Japan), die STN-LCD's (DE OS 35 03 259), SBE-LCD's (T.J. Scheffer und J. Nehring, Appl. Phys. Lett. 45 (1984)1021), OMI-LCD's (M. Schadt und F. Leenhouts, Appl. Phys. Lett. 50 (1987), 236), DST-LCD'S (EP OS 0 246 842) oder BW-STN-LCD's (K. Kawasaki et al., SID 87 Digest 391 (20.6)).

Derartige SFA zeichnen sich im Vergleich zu Standard-TN-Anzeigen durch wesentlich bessere Steilheiten der elektrooptischen Kennlinie und damit verbundenen besseren Kontrastwerten sowie durch eine wesentlich geringere Winkelabhängigkeit des Kontrastes aus. Von besonderem Interesse sind SFA mit sehr kurzen Schaltzeiten insbesondere auch bei tieferen Temperaturen. Zur Erzielung von kurzen Schaltzeiten wurden bisher insbesondere die Viskositäten der Flüssigkristallmischungen optimiert unter Verwendung von meist monotropen Zusätzen mit relativ hohem Dampfdruck. Die erzielten Schaltzeiten waren jedoch nicht für jede Anwendung ausreichend.

Aus EP-A-261 614 sind Supertwist-Fiüssigkristallanzeigezellen bekannt, die eine besonders steile Transmissionskennlinie aufweisen und hoch multiplexierbar sind, was unter anderem auf die Verwendung einer Komponente C, bestehend aus einer oder mehreren Verbindungen mit einer dielektrischen Anisotropie von unter -1.5, zurückzuführen ist. Die erfindungsgemäßen Flüssigkristallmischungen sind frei von Komponenten mit einer dielektrischen Anisotropie von unter -1.5 und zeichnen sich insbesondere durch besonders kurze Schaltzeiten aus.

Ähnliche Flüssigkristallmischungen mit einem dielektrischen Verhältnis Δ ε/ε ⊥ < 2.0 sind bekannt aus WO 89/08691. Weitere ähnliche Mischungen sind beschrieben in EP-A-315050.

Es besteht somit immer noch ein großer Bedarf nach SFA mit sehr kurzen Schaltzeiten bei gleichzeitig großem Arbeitstemperaturbereich, hoher Kennliniensteilheit, guter Winkelabhängigkeit des Kontrastes und niedriger Schwellenspannung.

Der Erfindung liegt die Aufgabe zugrunde, SFA bereitzustellen, die die oben angegebenen Nachteile nicht oder nur in geringerem Maße und gleichzeitig sehr kurze Schaltzeiten aufweisen.

Es wurde nun gefunden, daß diese Aufgabe gelöst werden kann, wenn man nematische, Flüssigkristallmischungen wie in Anspruch 1 definiert verwendet.

Gegenstand der Erfindung ist somit ein SFA mit
- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 160 und 360°, dadurch gekennzeichnet, daß die nematische Flüssigkristallmischung der Definition in Anspruch 1 entspricht.

Bevorzugte Ausführungsformen werden in den Ansprüchen 2 bis 13 beschrieben.

Gegenstand der Erfindung sind auch entsprechende Flüssigkristallmischungen zur Verwendung in SFA.

Die einzelnen Verbindungen der Formeln AIII bis AVI, BI bis BIV und Cl bis CIII oder auch andere Verbindungen, die in den erfindungsgemäßen SFA verwendet werden können, sind entweder bekannt, oder sie können analog zu den bekannten Verbindungen hergestellt werden.

Bevorzugte erfindungsgemäß verwendbare Flüssigkristallmischungen enthalten eine oder mehrere Verbindungen aus der Gruppe A in einem Anteil von 4 % bis 40 %, vorzugsweise 10 % bis 32 %. Verbindungen der Formeln AIII sind bevorzugt. In einer besonders bevorzugten Ausführungsform enthalten die Mischungen gleichzeitig (a) Verbindungen der Formel AV und oder AVI und (b) Verbindungen der Formel AIII und/oder AIV. R¹ und R² bedeuten vorzugsweise jeweils unabhängig voneinander n-Alkyl mit 1 bis 7 C-Atomen oder (trans)-n-Alkenyl mit 3 bis 7 C-Atomen.

Der Anteil der Komponente(n) aus Gruppe B1 beträgt vorzugsweise 5 % bis 45 %, insbesondere bevorzugt ca. 10 % bis 40 %. Komponenten der Formeln BIII und BIV sind bevorzugt. Besonders bevorzugte Verbindungen der Formel BIII sind diejenigen der folgenden Teilformeln: 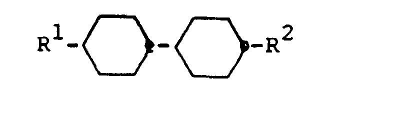 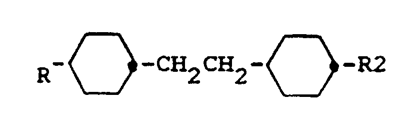 worin
- R¹: CH₃-(CH₂)ₙ-O-, CH₃-(CH₂)ₜ-, trans-H-(CH₂)ᵣ-CH = CH-(CH₂CH₂)ₛ-CH₂O- oder trans-H-(CH₂)ᵣ)-CH = CH-(CH₂CH₂)ₛ-,
- R²: CH₃-(CH₂)ₜ-
- n: 1, 2, 3 oder 4
- r: 0, 1, 2 oder 3
- s: 0 oder 1, und
- t: 1, 2, 3 oder 4 ist.

Ferner bevorzugt sind diejenigen der Teilformel 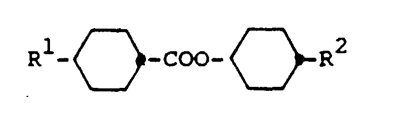 worin R¹ und R² die oben angegebene Bedeutung haben.

Der Anteil der Verbindungen der Formel BIII der oben angegebenen Teilformeln ist vorzugsweise ca. 5 % bis 45 %, insbesondere bevorzugt ca. 10 % bis 35 %. Besonders bevorzugte Verbindungen der Formel BIV sind diejenigen der folgenden Teilformel: 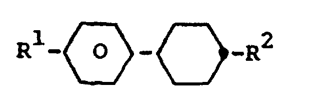 worin
- R¹: CH₃-(CH₂)ₙ-O- oder trans-H-(CH₂)ᵣ-CH = CH-(CH₂CH₂)ₛ-CH₂O- und R² CH₃-(CH₂)ₜ- ist, wobei
- n: 1, 2, 3 oder 4,
- r: 0, 1, 2 oder 3,
- s: 0 oder 1, und
- t: 1, 2, 3 oder 4 ist.

Der Anteil dieser Verbindungen, bzw. der Verbindungen der Formel BIV, ist vorzugsweise ca. 5 % bis 40 %, insbesondere bevorzugt ca. 10 % bis 35 %.

Vorzugsweise enthalten die Mischungen Verbindungen der Formel III, insbesondere solche der Teilformel 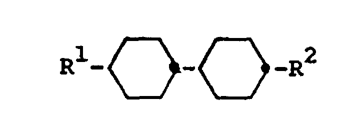 In einer besonders bevorzugten Ausführungsform enthalten die Mischungen gleichzeitig Verbindungen der Formeln BIII und BIV, wobei der Gesamtanteil für Komponenten der Gruppe B1 gewahrt bleibt.

Falls Verbindungen der Formeln Bl und/oder BIII vorhanden sind, bedeuten R¹ und R² vorzugsweise jeweils unabhängig voneinander n-Alkyl mit 1 bis 7 C-Atomen oder (trans)-n-Alkenyl mit 3 bis 7 C-Atomen. Z² ist vorzugsweise eine Einfachbindung. Bl ist besonders bevorzugt.

Ferner bevorzugt sind erfindungsgemäße Mischungen, die einer oder mehrere Verbindungen der Formel BIV enthalten, worin 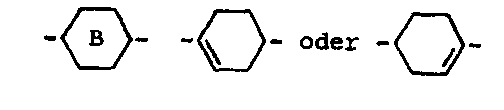 bedeutet und R¹ und R² eine der oben angegebenen bevorzugten Bedeutungen haben, insbesondere bevorzugt n-Alkyl mit 1 bis 7 C-Atomen bedeuten.

In jedem Fall bleibt der Gesamtanteil für Komponenten der Gruppe B1 gewahrt.

Der Anteil der Verbindungen der Gruppe B2 beträgt vorzugsweise ca. 5 % bis 45 %, insbesondere bevorzugt 5 % bis 20 %. Der Anteil (bevorzugte Bereiche) für BV bis BVII ist wie folgt:
- BV: ca. 5 % bis 30 %, vorzugsweise ca. 5 % bis 15 %
- Summe BVI und BVII:: ca. 5 % bis 25 %, vorzugsweise ca. 10 % bis 20 %.

Bevorzugte Verbindungen der Gruppe B2 sind im folgenden angegeben: 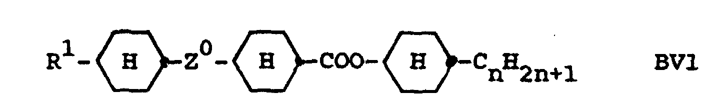 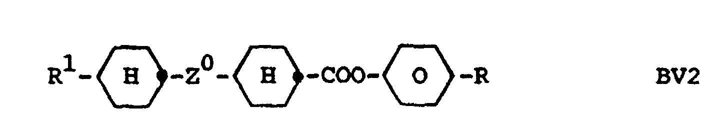 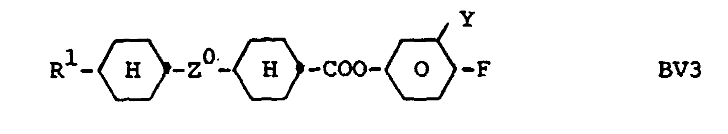 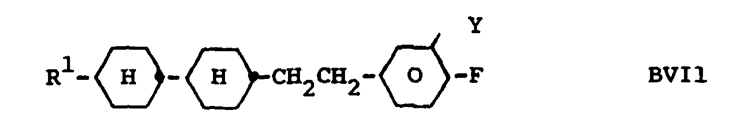 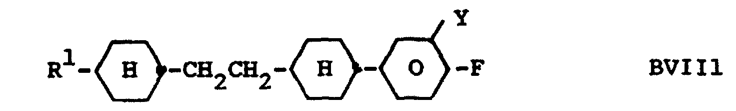 R¹ ist vorzugsweise n-Alkyl mit 1 bis 7 C-Atomen oder (Trans)-n-Alkenyl mit 3 bis 7 C-Atomen. Z⁰ ist vorzugsweise eine Einfachbindung. R hat vorzugsweise die oben für R¹ angegebene bevorzugte Bedeutung oder bedeutet Fluor. Y ist vorzugsweise Fluor.

Vorzugsweise enthalten die erfindungsgemäßen Mischungen eine oder mehrere Verbindungen ausgewählt aus der Gruppe bestehend aus BV3, BVI1 und BVII1 in einem Gesamtanteil von ca. 5 bis 35 %.

In einer besonders bevorzugten Ausführungsform enthalten die erfindungsgemäßen Mischungen neben BV3, BVI1, BVII1 und BV2 (R = F) weitere terminal fluorierte Verbindungen zum Beispiel ausgewählt aus der Gruppe bestehend aus: 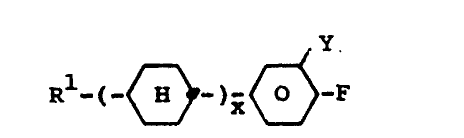 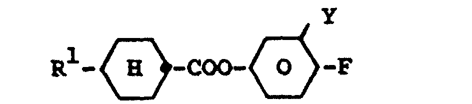 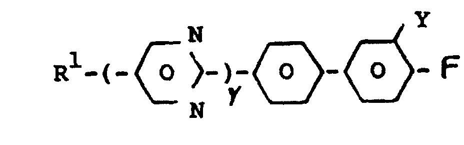 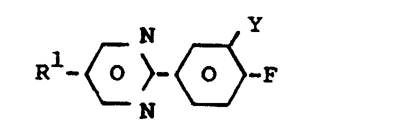 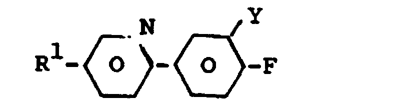 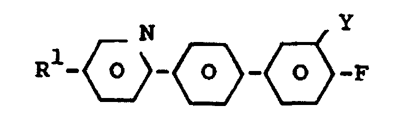 worin R¹ vorzugsweise n-Alkyl mit 1 bis 7 C-Atomen oder (trans)-n-Alkenyl mit 3 bis 7 C-Atomen, x 1 oder 2, y 0 oder 1 und Y H oder F bedeutet.

Der Gesamtanteil aller terminal fluorierter Verbindungen beträgt vorzugsweise ca. 5 % bis 65 %, insbesondere ca. 15 % bis 40 %..

Der Anteil der Verbindungen aus Gruppe B3 beträgt vorzugsweise ca. 5 % bis 30 %, insbesondere bevorzugt ca. 10 % bis 20 %. R¹ ist vorzugsweise n-Alkyl oder n-Alkoxy mit jeweils 1 bis 9 C-Atomen. R² ist vorzugsweise n-Alkyl mit 1 bis 9 C-Atomen. Es können jedoch auch analoge Verbindungen mit Alkenyl-bzw. Alkenyloxy-Gruppen eingesetzt werden. Verbindungen der Formel BVIII sind bevorzugt. 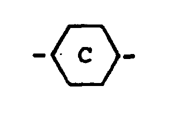 ist vorzugsweise 1,4-Phenylen.

Die erfindungsgemäßen Mischungen enthalten Verbindungen aus mindestens einer der Gruppen B1, B2 und B3. Vorzugsweise enthalten sie eine oder mehrere Verbindungen aus Gruppe B1 und eine oder mehrere Verbindungen aus Gruppe B2 und/oder B3.

Der Anteil der Verbindungen der Komponente C ist vorzugsweise ca. 10 % bis 80 %, insbesondere ca. 20 % bis 70 %. Der Fachmann kann zur Einstellung der gewünschten Schwellen spannung leicht diesen Anteil einstellen, wobei prinzipiell alle üblichen Flüssigkristallverbindungen mit Δε > + 1,5 verwendet werden können. Falls überwiegend weniger stark positive terminal fluorierte Verbindungen (siehe oben) verwendet werden, bewegt sich der Gesamtanteil mehr im oberen Bereich (ca. 35 % bis 80 %), während bei Verwendung von terminal cyansubstituierten Verbindungen der Anteil niedriger sein kann (ca. 10 % bis 35 %). Besonders bevorzugte Verbindungen sind neben den oben angegebenen terminal fluorierten Verbindungen die hier folgenden genannten bevorzugten Cyanverbindungen: 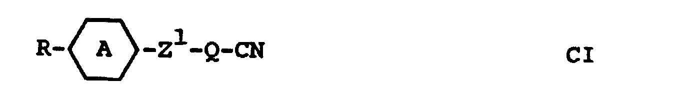 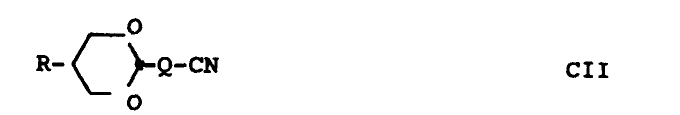 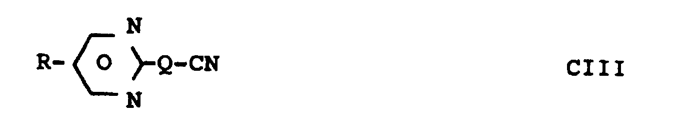 worin
- R: die in Anspruch 1 angegebene Bedeutung hat,
- Q: 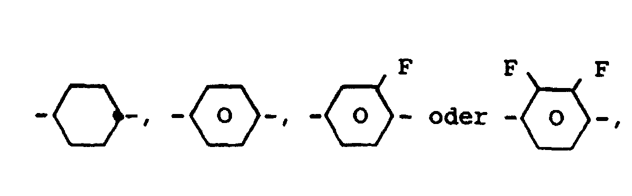
- Z¹: 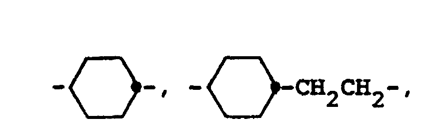 eine Einfachbindung, -CH₂CH₂-, -CO-O- oder -O-CO- und 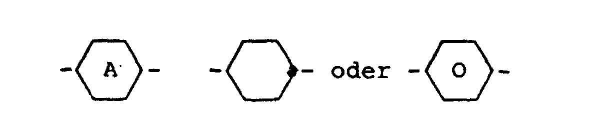 bedeutet.

Einige besonders bevorzugte kleinere Gruppen sind im folgenden angegeben: 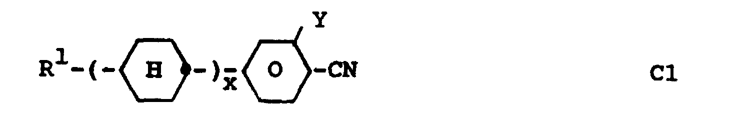 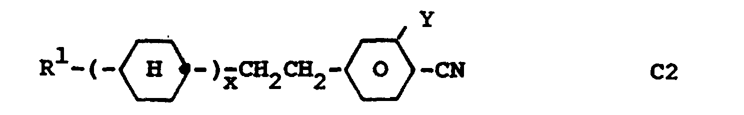 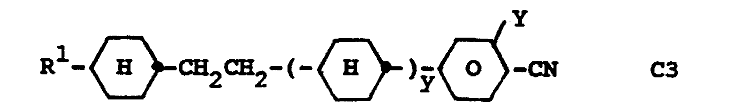 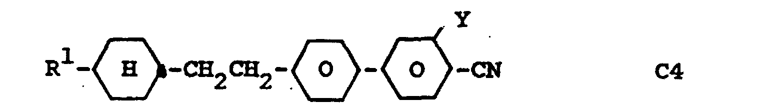 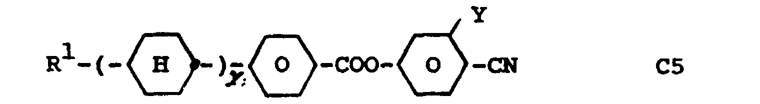 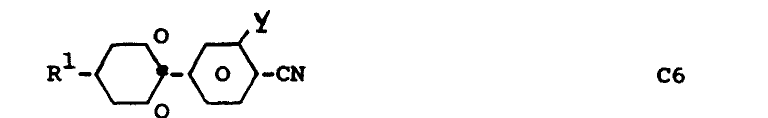 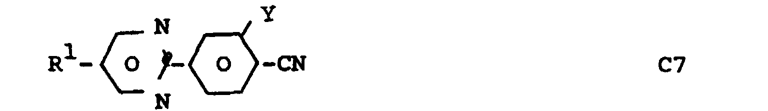 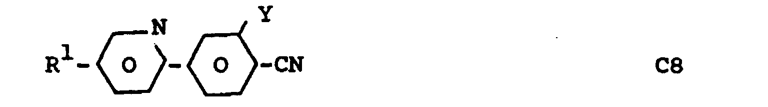 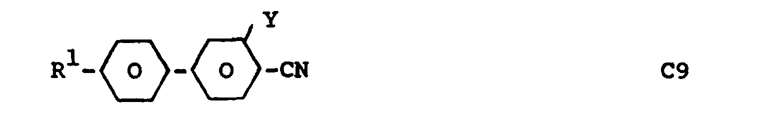 R¹ bedeutet vorzugsweise n-Alkyl mit 1 bis 7 C-Atomen, n-Oxaalkyl mit 3 bis 7 C-Atomen (z.B. n-Alkoxymethyl) oder n-Alkenyl mit 3-7 C-Atomen. Y ist H oder Fluor; x ist 1 oder 2; y ist 0 oder 1.

Ferner bevorzugt sind Isothiocyanate, z.B. der Formel 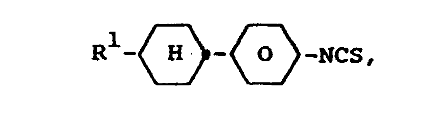 worin R¹ n-Alkyl mit 1 bis 7 C-Atomen oder n-Alkenyl mit 3 bis 7 C-Atomen bedeutet.

In einer besonders bevorzugten Ausführungsform enthalten die Mischungen ca. 5 % bis 35 %, insbesondere bevorzugt ca. 10 % bis 20 % an flüssigkristallinen Tolan-Verbindungen. Hierdurch kann bei geringeren Schichtdicken (ca. 5-6 µm) gearbeitet werden, wodurch die Schaltzeiten deutlich kürzer werden. Besonders bevorzugte Tolane sind im folgenden angegeben: 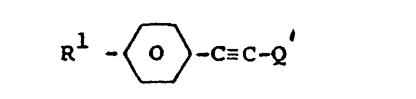 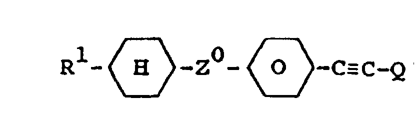
- R¹: ist vorzugsweise n-Alkyl mit 1 bis 7 C-Atomen,
- Z⁰: ist -CH₂CH₂- oder eine Einfachbindung,
- Q¹: ist 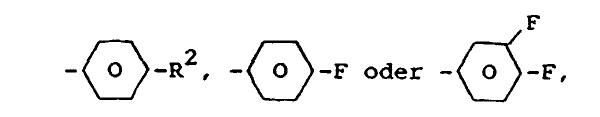 wobei
- R²: n-Alkyl oder n-Alkoxy mit jeweils 1 bis 7 C-Atomen oder n-Alkenyl oder n-Alkenyloxy mit jeweils 3 bis 7 C-Atomen bedeutet.

In weiteren besonders bevorzugten Ausführungsformen enthalten die Mischungen
- 30-60 Gew.% Komponente C, 20-70 Gew.% Verbindungen aus den Gruppen A und B und eine sich zu 100 Gew.% addierende Menge der Komponente E,
- mindestens zwei Verbindungen der Formel AIII oder AV,
- Verbindungen der Formel AIII und AV,
- eine Komponente C, die eine oder mehrere Verbindungen mit einer 4-Fluorphenyl-Gruppe oder einer 3,4-Difluorphenyl-Gruppe enthält,
- mindestens eine Verbindung aus folgender Gruppe: 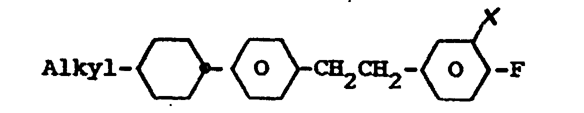 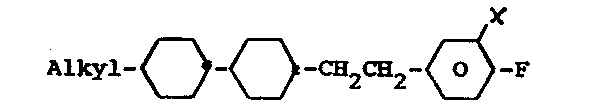 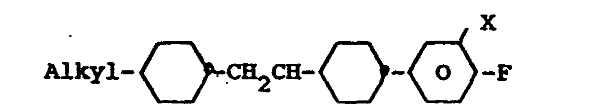 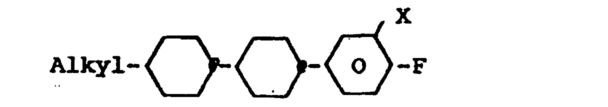 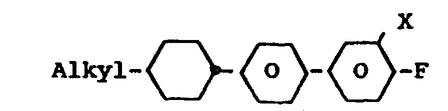 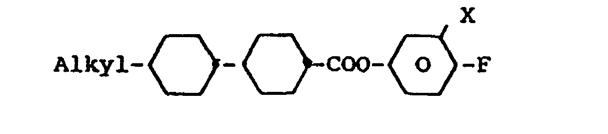 worin Alkyl eine geradkettige Alkylgruppe mit 2-7 C-Atomen und X H oder F ist,
- eine oder mehrere Verbindungen, worin R eine trans-Alkenylgruppe oder eine trans-Alkenyloxygruppe ist,
- eine oder mehrere Verbindungen ausgewählt aus der folgenden Gruppe 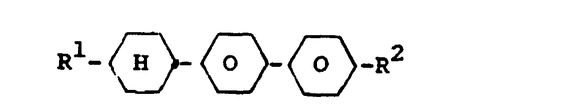 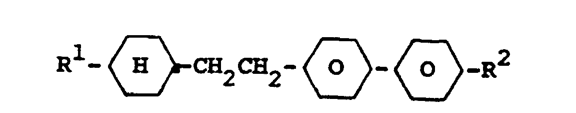 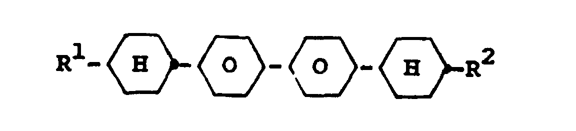 worin R¹ und R² die bei Komponente A angegebenen bevorzugten Bedeutungen haben und eine der beiden 1,4-Phenylengruppen auch durch Fluor substituiert sein kann; der Anteil dieser Verbindungen beträgt 0 % bis 25 %, vorzugsweise ca. 5 % bis 15 %.

Für die Komponente E stehen dem Fachmann eine Vielzahl, zum Teil kommerziell erhältlicher chiraler Dotierstoffe zur Verfügung. Deren Wahl ist an sich nicht kritisch.

Der Aufbau der erfindungsgemäßen Flüssigkristall-Anzeigeelemente aus Polarisatoren, Elektrodengrundplatten und Elektroden mit einer solchen Oberflächenbehandlung, daß die Vorzugsorientierung (Direktor) der jeweils daran angrenzenden Flüssigkristall-Moleküle von der einen zur anderen Elektrode gewöhnlich um betragsmäßig 160° bis 360° gegeneinander verdreht ist, entspricht der für derartige Anzeigeelemente üblichen Bauweise. Dabei ist der Begriff der üblichen Bauweise hier weit gefaßt und umfaßt auch alle literaturbekannten Abwandlungen und Modifikationen der Supertwistzelle, insbesondere auch Matrix-Anzeigeelemente sowie die zusätzliche Magnete enthaltenden Anzeigeelemente nach der DE-OS 2 748 738. Der Oberflächentiltwinkel an den beiden Trägerplatten kann gleich oder verschieden sein. Gleiche Tiltwinkel sind bevorzugt.

Ein wesentlicher Unterschied der erfindungsgemäßen Anzeigeelemente zu den bisher üblichen auf der Basis der verdrillten nematischen Zelle besteht jedoch in der Wahl der Flüssigkristallkomponenten der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe zugesetzt werden.

Die erfindungsgemäßen Flüssigkristallmischungen können neben den hier genannten Komponenten durchaus noch weitere, übliche Komponenten enthalten. Der Fachmann kann in Routineversuchen feststellen, welche weiteren Komponente und in welcher Menge diese eingesetzt werden können, ohne die erfindungsgemäßen Vorteile zunichte zu machen. Vorzugsweise bestehen die Mischungen überwiegend aus den genannten Komponenten (zu mehr als 60%) und insbesondere im wesentlichen aus diesen Komponenten (zu mehr als 80 %, besonders bevorzugt zu 100 %).

Die folgenden Beispiele sollen die Erfindung erläutern. ohne sie zu begrenzen.

Es bedeutet:
- S-N: Phasenübergangs-Temperatur smektisch-nematisch,
- Klp.: Klärpunkt,
- Visk.: Viskosität (m Pa.s),
- Tₒₙ: Zeit vom Einschalten bis zur Erreichung von 90 % des maximalen Kontrastes
- T_{off}: Zeit vom Ausschalten bis zur Erreichung von 10 % des maximalen Kontrastes
Das SFA wird im Multiplexbetrieb angesteuert (Multiplexverhältnis 1:100, Bias 1:11, Betriebsspannung 18,5 Volt).

Vor- und nachstehend sind alle Temperaturen in °C angegeben. Die Prozentzahlen sind Gewichtsprozente. Die Werte für die Schaltzeiten und Viskositäten beziehen sich auf 20 °C.

### Beispiel 1

Ein SFA vom Typ OMI mit folgenden Parametern:

| | |
|---|---|
| Verdrillungswinkel | 180° |
| Anstellwinkel | 1° |
| d/p (Schichtdicke/Ganghöhe) | 0,35 |
| d.Δn | 0,5 |

enthaltend eine Flüssigkristallmischung mit folgenden Parametern:

| | |
|---|---|
| Klärpunkt | 90° |
| Δn | 0,1023 |
| Viskosität | 19 mPa.s |
| Δε | + 7,4 |

und bestehend aus
14,7 % p-trans-4-Propylcyclohexyl-benzonitril,
5 % p-trans-4-Ethylcyclohexyl-benzonitril,
10,8 % p-trans-4-Butylcyclohexyl-benzonitril,
6 % p-trans-4-Pentylcyclohexyl-benzonitril,
5 % trans-1-p-Methoxyphenyl-4-propylcyclohexan,
9,8 % trans,trans-4-Methoxy-4'-propylcyclohexylcyclohexan,
8 % 1-[trans-4-(trans-4-Propylcyclohexyl)-cyclohexyl]-2-(p-methylphenyl)-ethan,
8 % 1-[trans-4-(trans-4-Propylcyclohexyl)-cyclohexyl]-2-(p-ethylphenyl)-ethan,
8 % 1-[trans-4-(trans-4-Propylcyclohexyl)-cyclohexyl]-2-(p-propylphenyl)-ethan,
8 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-2-(p-fluorphenyl)-ethan,
8 % 1-[trans-4-(trans-4-Propylcyclohexyl)-cyclohexyl]-2-(p-cyanphenyl)-ethan und
0,7 % optisch aktives p-(p-n-Hexylbenzoyloxy)-benzoesäure-2-octylester
zeigt eine Schaltzeit von Tₒₙ 73 msec und T_{off} 90 msec.

### Beispiel 2

Ein SFA vom Typ STN mit folgenden Parametern:

| | |
|---|---|
| Verdrillungswinkel | 220° |
| Anstellwinkel | 1° |
| d/p | 0,5 |
| d.Δn | 0,85 |

enthaltend eine Flüssigkristallmischung mit folgenden Parametern:

| | |
|---|---|
| Klärpunkt | 85° |
| Δn | 0,1494 |
| Viskosität | 15 mPa.s |

und bestehend aus einer Basismischung enthaltend
13 % p-trans-4-Propylcyclohexylbenzonitril,
7 % trans-1-p-Methoxyphenyl-4-propylcyclohexan,
15 % trans-1-p-Isothiocyanato-4-propylcyclohexan,
7 % 1-[trans-4-(trans-4-Propylcyclohexyl)-cyclohexyl]-2-(p-methylphenyl)-ethan,
7 % 1-[trans-4-(trans-4-Propylcyclohexyl)-cyclohexyl]-2-(p-ethylphenyl)-ethan,
7 % 1-[trans-4-(trans-4-Propylcyclohexyl)-cyclohexyl]-2-(p-propylphenyl)-ethan,
7 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-2-(p-fluorphenyl)-ethan,
9 % 1-[trans-4-(trans-4-Propylcyclohexyl)-cyclohexyl]-2-(p-cyanphenyl)-ethan,
5 % 4-Butyl-4'-propyl-tolan,
5 % 4-Pentyl-4'-propyl-tolan,
5 % 4-Butyl-4'-pentyl-tolan und
5 % 4-Methoxy-4'-ethyl-tolan,
und einer geeigneten chiralen Komponente (z.B. 0,7 % p-(p-n-Hexylbenzoyloxy)-benzoesäure-2-octylester) zeigt kurze Schaltzeiten.

### Beispiel 3

Ein SFA vom Typ OMI mit folgenden Parametern:

| | |
|---|---|
| Verdrillungswinkel | 180° |
| Anstellwinkel | 1° |
| d/p (Schichtdicke/Ganghöhe) | 0,35 |
| d.Δn | 0,5 |

enthaltend eine Flüssigkristallmischung mit folgenden Parametern:

| | |
|---|---|
| Klärpunkt | 91° |
| Δn | 0,1020 |
| Viskosität | 20,7 mPa.s |
| Δε | + 6,8 |

und bestehend aus
13 % p-trans-4-Propylcyclohexyl-benzonitril,
14,3 % 1-(trans-4-Propylcyplohexyl)-2-(p-cyanphenyl)-ethan,
12 % 1-(trans-4-Pentylcyclohexyl)-2-(p-cyanphenyl)-ethan,
7 % trans,trans-4-Propoxy-4'-propylcyclohexyl-cyclohexan,
12 % trans,trans-4-Ethoxy-4'-pentylcyclohexyl-cyclohexan,
6 % 1-[trans-4-(trans-4-Propylcyclohexyl)-cyclohexyl]-2-(p-methylphenyl)ethan,
6 % 1-[trans-4-(trans-4-Propylcyclohexyl)-cyclohexyl]-2-(p-ethylphenyl)-ethan,
6 % 1-[trans-4-(trans-4-Propylcyclohexyl)cyclohexyl]-2-(p-propylphenyl)-ethan,
6 % 1-[trans-4-(trans-4-Propylcyclohexyl)-cyclohexyl]-2-(p-pentylphenyl)-ethan,
5 % 1-[trans-4-(trans-4-Propylcyclohexyl)-cyclohexyl]-2-(p-fluorphenyl)-ethan,
5 % 1-[trans-4-(trans-4-Propylcyclohexyl)-cyclohexyl]-2-(p-cyanphenyl)-ethan
4 % 4,4'-Bis-(trans-4-propylcyclohexyl)-biphenyl,
3 % 4,4'-Bis-(trans-4-pentylcyclohexyl)-biphenyl und
0,7 % optisch aktives p-(p-n-Hexylbenzoyloxy)-benzoesäure-2-octylester
zeigt eine Schaltzeit von Tₒₙ 92 msec und T_{off} 104 msec bei einer Betriebsspannung von 21 Volt.

### Beispiel 4

Ein SFA vom Typ OMI mit folgenden Parametern:

| | |
|---|---|
| Verdrillungswinkel | 180° |
| Anstellwinkel | 1° |
| d/p (Schichtdicke/Ganghöhe) | 0,35 |
| d.Δn | 0,5 |

enthaltend eine Flüssigkristallmischung mit folgenden Parametern:

| | |
|---|---|
| Klärpunkt | 88° |
| Δn | 0,1003 |
| Viskosität | 20 mPa.s |
| Δε | + 6,8 |

und bestehend aus
5 % p-trans-4-Propylcyclohexyl-benzonitril,
5 % p-trans-4-Ethylcyclohexyl-benzonitril,
14,3 % 1-(trans-4-Propylcyclohexyl)-2-(p-cyanphenyl)-ethan,
12 % 1 -(trans-4-Pentylcyclohexyl)-2-(p-cyanphenyl)-ethan,
5 % trans-1-p-Methoxyphenyl-4-propylcyclohexan,
10 % trans,trans-4-Ethoxy-4'-pentylcyclohexyl-cyclohexan,
8 % 1-[trans-4-(trans-4-Propylcyclohexyl)cyclohexyl]-2-(p-methylphenyl)-ethan,
8 % 1-[trans-4-(trans-4-Propylcyclohexyl)-cyclohexyl]-2-(p-ethylphenyl)-ethan,
8 % 1-[trans-4-(trans-4-Propylcyclohexyl)-cyclohexyl]-2-(p-propylphenyl)-ethan,
8 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-2-(p-fluorphenyl)-ethan,
8 % 1-[trans-4-(trans-4-Propylcyclohexyl)cyclohexyl]-2-(p-cyanphenyl)-ethan und
0,7 % optisch aktives p-(p-n-Hexylbenzoyloxy)-benzoesäure-2-octylester
zeigt eine Schaltzeit von Tₒₙ 79 msec und T_{off} 94 msec bei einer Betriebsspannung von 20,5 Volt.

Im folgenden sind Beispiele für erfindungsgemäße Flüssigkristallmischungen angegeben, welche nach Dotierung mit den gebräuchlichen chiralen Komponenten in SFA kurze Schaltzeiten zeigen:

### Beispiel 5

Eine Flüssigkristallmischung bestehend aus
15 % p-trans-4-Propylcyclohexylbenzonitril,
11 % p-trans-4-Butylcyclohexylbenzonitril,
4 % trans-1-p-Methoxyphenyl-4-propylcyclohexan,
14 % trans,trans-4-Methoxy-4'-pentylcyclohexylcyclohexan,
14 % trans,trans-4-Ethoxy-4'-pentylcyclohexylcyclohexan,
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
6 % 1-[trans-4-(trans-4-Propylcyclohexyl)-cyclohexyl]-2-(p-propylphenyl)ethan,
6 % 1-[trans-4-(trans-4-Propylcyclohexyl)-cyclohexyl]-2-(p-pentylphenyl)-ethan,
6 % 1-[trans-4-(trans-4-Propylcyclohexyl)-cyclohexyl]-2-(p-cyanphenyl)-ethan,
6 % 1-[trans-4-(trans-4-Propylcyclohexyl)-cyclohexyl]-2-(p-fluorphenyl)ethan,
3 % 4,4'-Bis-(trans-4-propylcyclohexyl)-biphenyl und
3 % 4-(trans-4-Pentylcyclohexyl)-4'-(trans-4-propylcyclohexyl)-biphenyl
zeigt folgende Parameter:

| | |
|---|---|
| Klärpunkt | 90° |
| Δn | 0,0929 |
| Viskosität | 18 mPa.s |
| Δε | + 5,4 |

### Beispiel 6

Eine Flüssigkristallmischung bestehend aus
12 % p-trans-4-Propylcyclohexylbenzonitril,
10 % p-trans-4-Pentylcyclohexylbenzonitril,
7 % 2-p-Cyanphenyl-5-propyl-1,3-dioxan,
18 % trans,trans-4-Propoxy-4'-propylcyclohexylcyclohexan,
7 % trans,trans-4-Propylcyclohexylcyclohexan-4'-carbonsäure-p-fluorphenylester,
7 % trans,trans-4-Pentylcyclohexylcyclohexan-4'-carbonsäure-p-fluorphenylester,
5 % trans,trans-4-Propylcyclohexylcyclohexan-4'-carbonsäure-p-propylphenylester,
5 % trans,trans-4-Propylcyclohexylcyclonexan-4'-carbonsäure-p-pentylphenylester,
9 % 1-[trans-4-(trans-4-Propylcyclohexyl)-cyclohexyl]-2-(p-methylphenyl)-ethan,
10 % 1-[trans-4-(trans-4-Propylcyclohexyl)-cyclohexyl]-2-(p-fluorphenyl)-ethan und
10 % 1-[trans-4-(trans-4-Pentylcyclohexyl)-cyclohexyl]-2-(p-fluorphenyl)-ethan
zeigt folgende Parameter:

| | |
|---|---|
| Klärpunkt | 101° |
| Δn | 0,0899 |
| Viskosität | 20 mPa.s |
| Δε | + 6,5 |

### Beispiel 7

Eine Flüssigkristallmischung bestehend aus
16 % p-trans-4-Propylcyclohexylbenzonitril,
11 % p-trans-4-Butylcyclohexylbenzonitril,
6 % 2-p-Cyanphenyl-5-ethyl-1,3-dioxan,
9 % 2-p-Cyanphenyl-5-propyl-1,3-dioxan,
2 % p-Ethylbenzoesäure-(4-cyan-3-fluorphenylester),
3 % p-Propylbenzoesäure-(4-cyan-3-fluorphenylester),
8 % trans,trans-4-Propoxy-4'-propylcyclohexylcyclohexan,
7 % trans,trans-4-Propylcyclohexyl-cyclohexan-4'-carbonsäure-p-fluorphenylester,
7 % trans,trans-4-Pentylcyclohexyl-cyclohexan-4'-carbonsäure-p-fluorphenylester
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ehtylphenyl)-ethan,
6 % 1-[trans-4-(trans-4-Propylcyclohexyl)-cyclohexyl]-2-(p-propylphenyl)-ethan,
6 % 1-[trans-4-(trans-4-Propylcyclohexyl)-cyclohexyl]-2-(p-cyanphenyl)-ethan und
7 % 1-[trans-4-(trans-4-Propylcyclohexyl)-cyclohexyl]-2-(p-fluorphenyl)-ethan
zeigt folgende Parameter:

| | |
|---|---|
| Klärpunkt | 86° |
| Δn | 0,1073 |
| Viskosität | 24 mPa.s |

### Beispiel 8

Eine Flüssigkristallmischung bestehend aus
13 % p-trans-4-Propylcyclohexylbenzonitril,
11 % p-trans-4-Butylcyclohexylbenzonitril,
12 % p-trans-4-Ethylcyclohexylbenzonitril,
19 % trans,trans-4-Methoxy-4'-propylcyclohexylcyclohexan,
4 % 4-(trans-4-Propylcyclohexyl)-4'-methoxy-tolan,
3 % 4-(trans-4-Propylcyclohexyl)-4'-ethoxy-tolan,
7 % 1-[trans-4-(trans-4-Propylcyclohexyl)-cyclohexyl]-2-(p-methylphenyl)-ethan,
7 % 1-[trans-4-(trans-4-Propylcyclohexyl)-cyclohexyl]-2-(p-ethylphenyl)-ethan,
7 % 1-[trans-4-(trans-4-Propylcyclohexyl)-cyclohexyl]-2-(p-propylphenyl)-ethan,
7 % 1 -[trans-4-(trans-4-Propylcyclohexyl)-cyclohexyl]-2-(p-pentylphenyl)-ethan und
10 % 1-[trans-4-(trans-4-Propylcyclohexyl)-cyclohexyl]-2-(p-cyanphenyl)-ethan
zeigt folgende Parameter:

| | |
|---|---|
| Klärpunkt | 90° |
| Δn | 0,1108 |
| Viskosität | 22 mPa.s |

### Beispiel 9

Eine Flüssigkristallmischung bestehend aus
2 % p-Ethylbenzoesäure-(4-cyan-3-fluorphenylester),
3 % p-Propylbenzoesäure-(4-cyan-3-fluorphenylester),
8 % p-Pentylbenzoesäure-(4-cyan-3-fluorphenylester),
7 % p-(trans-4-Propylcyclohexyl)-benzoesäure-(4-cyan-3-fluorphenylester),
7 % p-(trans-4-Butylcyclohexyl)-benzoesäure-(4-cyan-3-fluorphenylester),
6 % p-(trans-4-Pentylcyclohexyl)-benzoesäure-(4-cyan-3-fluorphenylester),
16 % trans,trans-4-Methoxy-4'-propylcyclohexylcyclohexan,
20 % trans,trans-4-Methoxy-4'-pentylcyclohexylcyclohexan,
8 % 1-[trans-4-(trans-4-Propylcyclohexyl)-cyclohexyl]-2-(p-methylphenyl)-ethan,
8 % 1-[trans-4-(trans-4-Propylcyclohexyl)-cyclohexyl]-2-(p-ethylphenyl)-ethan,
8 % 1-[trans-4-(trans-4-Propylcyclohexyl)-cyclohexyl]-2-(p-propylphenyl)-ethan und
7 % 1-[trans-4-(trans-4-Propylcyclohexyl)-cyclohexyl)-2-(p-pentylphenyl)-ethan
zeigt folgende Parameter:

| | |
|---|---|
| Klärpunkt | 91° |
| Δn | 0,1003 |
| Viskosität | 28 mPa.s |

### Beispiel 10

Eine Flüssigkristallmischung bestehend aus
20 % p-trans-4-Propylcyclohexylbenzonitril,
10 % p-trans-4-Pentylcyclohexylbenzonitril,
10 % p-trans-4-Ethylcyclohexylbenzonitril,
3 % p-Ethylbenzoesäure-(4-cyan-3-fluorphenylester),
4 % p-Propylbenzoesäure-(4-cyan-3-fluorphenylester),
7 % trans-1-p-Methoxyphenyl-4-propylcyclohexan,
8 % 1-[trans-4-(trans-4-Propylcyclohexyl)-cyclohexyl]-2-(p-methylphenyl)-ethan,
8 % 1-[trans-4-(trans-4-Propylcyclohexyl)-cyclohexyl]-2-(p-ethylphenyl)-ethan,
8 % 1-[trans-4-(trans-4-Propylcyclohexyl)-cyclohexyl]-2-(p-propylphenyl)-ethan,
8 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-2-(p-fluorphenyl)-ethan und
6 % 1-[trans-4-(trans-4-Pentylcyclohexyl)-cyclohexyl]-2-(p-fluorphenyl)-ethan
zeigt folgende Parameter:

| | |
|---|---|
| Klärpunkt | 80° |
| Δn | 0,1092 |
| Viskosität | 19 mPa.s |

### Beispiel 11

Eine Flüssigkristallmischung bestehend aus
20 % p-trans-4-Propylcyclohexylbenzonitril,
13 % p-trans-4-Pentylcyclohexylbenzonitril,
12 % p-trans-4-Ethylcyclohexylbenzonitril,
5 % p-(trans-4-Propylcyclohexyl)-benzoesäure-(4-cyan-3-fluorphenylester),
8 % trans-1-p-Methoxyphenyl-4-propylcyclohexan,
7 % 1-[trans-4-(trans-4-Propylcyclohexyl)-cyclohexyl]-2-(p-methylphenyl)-ethan,
8 % 1-[trans-4-(trans-4-Propylcyclohexyl)-cyclohexyl]-2-(p-ethylphenyl)-ethan,
8 % 1-[trans-4-(trans-4-Propylcyclohexyl)-cyclohexyl]-2-(p-propylphenyl)-ethan,
5 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-2-(p-fluorphenyl)-ethan und
6 % 1-[trans-4-(trans-4-Pentylcyclohexyl)-cyclohexyl]-2-(p-fluorphenyl)-ethan,
zeigt folgende Parameter:

| | |
|---|---|
| Klärpunkt | 83° |
| Δn | 0,1097 |
| Viskosität | 20 mPa.s |

### Beispiel 12

Eine Flüssigkristallmischung bestehend aus
20 % p-trans-4-Propylcyclohexylbenzonitril,
7 % p-trans-4-Pentylcyclohexylbenzonitril,
10 % p-trans-4-Ethylcyclohexylbenzonitril,
17 % 1-(trans-4-Propylcyclohexyl)-2-(p-cyanphenyl)-ethan,
5 % trans,trans-4-Propylcyclohexyl-cyclohexan-4'-carbonsäure-(p-fluorphenylester),
5 % trans,trans-4-Pentylcyclohexyl-cyclohexan-4'-carbonsäure-(p-fluorphenylester),
7 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
6 % 1-[trans-4-(trans-4-Propylcyclohexyl)-cyclohexyl]-2-(p-propylphenyl)-ethan,
9 % 1-[trans-4-(trans-4-Propylcyclohexyl)-cyclohexyl]-2-(p-fluorphenyl)-ethan und
8 % 1-[trans-4-(trans-4-Pentylcyclohexyl)-cyclohexyl]-2-(p-fluorphenyl)-ethan
zeigt folgende Parameter:

| | |
|---|---|
| Klärpunkt | 84° |
| Δn | 0,1082 |
| Viskosität | 21 mPa.s |

### Beispiel 13

Eine Flüssigkristallmischung bestehend aus
20 % p-trans-4-Propylcyclohexylbenzonitril,
10 % p-trans-4-Pentylcyclohexylbenzonitril,
10 % p-trans-4-Butylcyclohexylbenzonitril,
3 % p-Ethylbenzoesäure-(4-cyan-3-fluorphenylester),
4 % p-Propylbenzoesäure-(4-cyan-3-fluorphenylester),
11 % trans-1-p-Methoxyphenyl-4-propylcyclohexan,
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
8 % 1-[trans-4-(trans-4-Propylcyclohexyl)-cyclohexyl]-2-(p-propylphenyl)-ethan,
8 % 1-[trans-4-(trans-4-Propylcyclohexyl)-cyclohexyl]-2-(p-pentylphenyl)-ethan,
9 % 1-[trans-4-(trans-4-Propylcyclohexyl)-cyclohexyl]-2-(p-fluorphenyl)-ethan und
5 % 1-[trans-4-(trans-4-Propylcyclohexyl)-cyclohexyl]-2-(p-cyanphenyl)-ethan,
zeigt folgende Parameter:

| | |
|---|---|
| Klärpunkt | 81° |
| Δn | 0,1112 |
| Viskosität | 20 mPa.s |

### Beispiel 14

Eine Flüssigkristallmischung bestehend aus
20 % p-trans-4-Propylcyclohexylbenzonitril,
10 % p-trans-4-Pentylcyclohexylbenzonitril,
10 % p-trans-4-Butylcyclohexylbenzonitril,
3 % p-Ethylbenzoesäure-(4-cyan-3-fluorphenylester),
4 % p-Propylbenzoesäure-(4-cyan-3-fluorphenylester),
10 % trans-1-p-Methoxyphenyl-4-propylcyclohexan,
6 % trans,trans-4-Propylcyclohexylcyclohexan-4'-carbonsäure-(p-fluorphenylester),
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
8 % 1-(trans-4-(trans-4-Propylcyclohexyl)-cyclohexyl]-2-(p-propylphenyl)-ethan,
8 % 1-[trans-4-(trans-4-Propylcyclohexyl)-cyclohexyl]-2-(p-pentylphenyl)-ethan und
9 % 1-[trans-4-(trans-4-Propylcyclohexyl)-cyclohexyl]-2-(p-fluorphenyl)-ethan
zeigt folgende Parameter:

| | |
|---|---|
| Klärpunkt | 80° |
| Δn | 0,1087 |
| Viskosität | 19 mPa.s |

### Beispiel 15

Eine Flüssigkristallmischung bestehend aus
20 % p-trans-4-Propylcyclohexylbenzonitril,
10 % p-trans-4-Pentylcyclohexylbenzonitril,
10 % p-trans-4-Butylcyclohexylbenzonitril,
3 % p-Ethylbenzoesäure-(4-cyan-3-fluorphenylester),
4 % p-Propylbenzoesäure-(4-cyan-3-fluorphenylester),
10 % trans-1-p-Methoxyphenyl-4-propylcyclohexan,
6 % trans,trans-4-Propylcyclohexylcyclohexan-4'-carbonsäure-(p-fluorphenylester),
6 % trans,trans-4-Pentylcyclohexylcyclohexan-4'-carbonsäure-(p-fluorphenylester),
5 % 1-[trans-4-(trans-4-Propylcyclohexyl)-cyclohexyl]-2-(p-methylphenyl)-ethan,
5 % 1-[trans-4-(trans-4-Propylcyclohexyl)-cyclohexyl]-2-(p-ethylphenyl)-ethan,
6 % 1-[trans-4-(trans-4-Propylcyclohexyl)-cyclohexyl]-2-(p-propylphenyl)-ethan,
6 % 1-[trans-4-(trans-4-Propylcyclohexyl)-cyclohexyl]-2-(p-pentylphenyl)-ethan und
9 % 1-[trans-4-(trans-4-Propylcyclohexyl)-cyclohexyl]-2-(p-fluorphenyl)-ethan
zeigt folgende Parameter:

| | |
|---|---|
| Klärpunkt | 81° |
| Δn | 0,1085 |
| Viskosität | 20 mPa.s |

### Beispiel 16

Eine Flüssigkristallmischung bestehend aus
20 % p-trans-4-Propylcyclohexylbenzonitril,
10 % p-trans-4-Pentylcyclohexylbenzonitril,
10 % p-trans-4-Butylcyclohexylbenzonitril,
3 % p-Ethylbenzoesäure-(4-cyan-3-fluorphenylester),
4 % p-Propylbenzoesäure-(4-cyan-3-fluorphenylester),
12 % trans-1-p-Methoxyphenyl-4-propylcyclohexan,
5 % trans,trans-4-Propylcyclohexylcyclohexan-4'-carbonsäure-(p-propylphenylester),
5 % trans,trans-4-Propylcyclohexylcyclohexan-4'-carbonsäure-(p-pentylphenylester)
4 % 1-[trans-4-(trans-4-Propylcyclohexyl)-cyclohexyl]-2-(p-methylphenyl)-ethan,
5 % 1-[trans-4-(trans-4-Propylcyclohexyl)-cyclohexyl]-2-(p-ethylphenyl)-ethan,
5 % 1-[trans-4-(trans-4-Propylcyclohexyl)-cyclohexyl]-2-(p-propylphenyl)-ethan,
5 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-2-(p-fluorphenyl)-ethan und
4 % 1-[trans-4-(trans-4-Pentylcyclohexyl)-cyclohexyl]-2-(p-fluorphenyl)-ethan
zeigt folgende Parameter:

| | |
|---|---|
| Klärpunkt | 79° |
| Δn | 0,1087 |
| Viskosität | 19 mPa.s |

### Beispiel 17

Eine Flüssigkristallmischung bestehend aus
3 % p-Ethylbenzoesäure-(4-cyan-3-fluorphenylester),
4 % p-Propylbenzoesäure-(4-cyan-3-fluorphenylester),
9 % p-Pentylbenzoesäure-(4-cyan-3-fluorphenylester),
4 % p-Heptylbenzoesäure-(4-cyan-3-fluorphenylester),
6 % p-(trans-4-Propylcyclohexyl)-benzoesäure-(4-cyan-3-fluorphenylester),
6 % p-(trans-4-Butylcyclohexyl)-benzoesäure-(4-cyan-3-fluorphenylester),
19 % trans-1-p-Methoxyphenyl-4-propylcyclohexan,
17 % trans,trans-4-Propoxy-4'-propylcyclohexylcyclohexan,
6 % trans,trans-4-Propylcyclohexylcyclohexan-4'-carbonsäure-(p-fluorphenylester),
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
7 % 1-[trans-4-(trans-4-Propylcyclohexyl)-cyclohexyl]-2-(p-propylphenyl)-ethan und
7 % 1-[trans-4-(trans-4-Propylcyclohexyl)-cyclohexyl]-2-(p-pentylphenyl)-ethan,
zeigt folgende Parameter:

| | |
|---|---|
| Klärpunkt | 79° |
| Δn | 0,1054 |
| Viskosität | 22 mPa.s |

### Beispiel 18

Eine Flüssigkristallmischung bestehend aus
10 % p-trans-4-Propylcyclohexylbenzonitril,
3 % p-Ethylbenzoesäure-(4-cyan-3-fluorphenylester),
4 % p-Propylbenzoesäure-(4-cyan-3-fluorphenylester),
10 % p-Pentylbenzoesäure-(4-cyan-3-fluorphenylester),
6 % p-(trans-4-Propylcyclohexyl)-benzoesäure-(4-cyan-3-fluorphenylester),
4 % p-(trans-4-Butylcyclohexyl)-benzoesäure-(4-cyan-3-fluorphenylester),
18 % trans-1 -p-Methoxyphenyl-4-propylcyclohexan,
10 % trans,trans-4-Propoxy-4'-propylcyclohexylcyclohexan
6 % 1-[trans-4-(trans-4-Propylcyclohexyl)-cyclohexyl]2-(p-methylphenyl)-ethan,
7 % 1-[trans-4-(trans-4-Propylcyclohexyl)-cyclohexyl]-2-(methylphenyl)-ethan,
7 % 1-[trans-4-(trans-4-Propylcyclohexyl)-cyclohexyl]-2-(p-propylphenyl)-ethan,
7 % 1-[trans-4-(trans-4-Propylcyclohexyl)-cyclohexyl]-2-(p-pentylphenyl)-ethan und
8 % 1-[trans-4-(trans-4-Propylcyclohexyl)-cyclohexyl]-2-(p-fluorphenyl)-ethan,
zeigt folgende Parameter:

| | |
|---|---|
| Klärpunkt | 78° |
| Δn | 0,1085 |
| Viskosität | 21 mPa.s |

### Beispiel 19

Eine Flüssigkristallmischung bestehend aus
20 % p-trans-4-Propylcyclohexylbenzonitril,
6 % p-trans-4-Pentylcyclohexylbenzonitril,
3 % p-Ethylbenzoesäure-(4-cyan-3-fluorphenylester),
4 % p-Propylbenzoesäure-(4-cyan-3-fluorphenylester),
9 % p-Pentylbenzoesäure-(4-cyan-3-fluorphenylester),
10 % trans-1-p-Methoxyphenyl-4-propylcyclohexan,
7 % trans-1-p-Ethoxyphenyl-4-propylcyclohexan,
6 % trans,trans-4-Propylcyclohexylcyclohexan-4'-carbonsäure-(p-fluorphenylester),
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
7 % 1-[trans-4-(trans-4-Propylcyclohexyl)-cyclohexyl]-2-(p-propylphenyl)-ethan,
7 % 1-[trans-4-(trans-4-Propylcyclohexyl)-cyclohexyl]-2-(p-pentylphenyl)-ethan und
9 % 1 -[trans-4-(trans-4-Propylcyclohexyl)-cyclohexyl]-2-(p-fluorphenyl)-ethan,
zeigt folgende Parameter:

| | |
|---|---|
| Klärpunkt | 74° |
| Δn | 0,1101 |
| Viskosität | 19 mPa.s |

Die Mischungen der Beispiele 9 bis 21 eignen sich insbesondere für OMI-Anwendungen.

In den folgenden Tabellen 1 bis 16 ist die Zusammensetzung der Mischungen der Beispiele 22 bis 129 angegeben, wobei die einzelnen Verbindungen wie folgt codiert sind:
- AIII1:: 1-[trans-4-(trans-4-Propylcyclohexyl)-cyclohexyl]-(2-p-methylphenyl)-ethan
- AIII2:: 1-[trans-4-(trans-4-Propylcyclohexyl)-cyclohexyl]-(2-p-ethylphenyl)-ethan
- AIII3:: 1-[trans-4-(trans-4-Propylcyclohexyl)-cyclohexyl]-(2-p-propylphenyl)-ethan
- AIII4:: 1-[trans-4-(trans-4-Propylcyclohexyl)-cyclohexyl]-(2-p-butylphenyl)-ethan
- AIII5:: 1-[trans-4-(trans-4-Propylcyclohexyl)-cyclohexyl]-(2-p-pentylphenyl)-ethan
- BIII1:: trans,trans-4-Propyl-4'-methoxy-cyclohexylcyclohexan
- BIII2:: trans,trans-4-Propyl-4'-ethoxy-cyclohexylcyclohexan
- BIII3:: trans,trans-4-Propyl-4'-propoxy-cyclohexylcyclohexan
- BIII4:: trans,trans-4-Pentyl-4'-methoxy-cyclohexylcyclohexan
- BIII5:: trans,trans-4-Pentyl-4'-ethoxy-cyclohexylcyclohexan
- BIII6:: trans,trans-4-Propyl-4'-butyryloxy-cyclohexylcyclohexan
- BIII7:: trans,trans-4-Propyl-4'-hexanoyloxy-cyclohexylcyclohexan
- BIII8:: trans-4-Propylcyclohexylcarbonsäure-(trans-4-propylcyclohexylester)
- BIII9:: trans-4-Pentylcyclohexylcarbonsäure-(trans-4-propylcyclohexylester)
- BIV1:: trans-1-p-Methoxyphenyl-4-propylcyclohexan
- BIV2:: trans-1-p-Ethoxyphenyl-4-propylcyclohexan
- BIV3:: trans-1-p-Butoxyphenyl-4-propylcyclohexan
- BIV4:: trans-1-p-Methoxyphenyl-4-pentylcyclohexan
- BIV5:: trans-1-p-Propylphenyl-4-pentylcyclohexan
- BIV6:: trans-1-p-Ethylphenyl-4-pentylcyclohexan
- BV1:: trans,trans-4-Propylcyclohexylcyclohexan-4'-carbonsäure-(p-fluorphenylester)
- BV2:: trans,trans-4-Pentylcyclohexylcyclohexan-4'-carbonsäure-(p-fluorphenylester)
- BV3:: trans,trans-4-Propylcyclohexylcyclohexan-4'-carbonsäure-(trans-4-propylcyclohexylester)
- BV4:: trans,trans-4-Propylcyclohexylcyclohexan-4'-carbonsäure-(trans-4-pentylcyclohexylester)
- BV5:: trans,trans-4-Butylcyclohexylcyclohexan-4'-carbonsäure-(trans-4-propylcyclohexylester)
- BV6:: trans,trans-4-Butylcyclohexylcyclohexan-4'-carbonsäure-(trans-4-pentylcyclohexylester)
- BV7:: trans,trans-4-Propylcyclohexylcyclohexan-4'-carbonsäure-(p-propylphenylester)
- BV8:: trans,trans-4-Propylcyclohexylcyclohexan-4'-carbonsäure-(p-pentylphenylester)
- BV9:: trans,trans-4-Butylcyclohexylcyclohexan-4'-carbonsäure-(p-propylphenylester)
- BV10:: trans,trans-4-Butylcyclohexylcyclohexan-4'-carbonsäure-(p-pentylphenylester)
- BVI1:: 1-[trans-4-(trans-4-Propylcyclohexyl)-cyclohexyl]-2-(p-fluorphenyl)-ethan
- BV12:: 1-[trans-4-(trans-4-Pentylcyclohexyl)-cyclohexyl]-2-(p-fluorphenyl)-ethan
- BVIII1:: 2-p-Ethylphenyl-5-propyl-pyrimidin
- BVIII2:: 2-p-Propylphenyl-5-propyl-pyrimidin
- BVIII3:: 2-p-Propylphenyl-5-pentyl-pyrimidin
- BVIII4:: 2-p-Ethylphenyl-5-heptyl-pyrimidin
- BVIII5:: 2-p-Pentyloxyphenyl-5-hexyl-pyrimidin
- BVIII6:: 2-p-Heptyloxyphenyl-5-hexyl-pyrimidin
- BVIII7:: 2-p-Nonyloxyphenyl-5-hexyl-pyrimidin
- BVIII8:: 2-p-Heptyloxyphenyl-5-heptyl-pyrimidin
- BVIII9:: 2-p-Nonyloxyphenyl-5-heptyl-pyrimidin
- BVIII10:: 2-p-Hexyloxyphenyl-5-nonyl-pyrimidin
- BVIII11:: 2-p-Nonyloxyphenyl-5-nonyl-pyrimidin
- C1:: p-trans-4-Ethylcyclohexylbenzonitri1
- C2:: p-trans-4-Propylcyclohexylbenzonitril
- C3:: p-trans-4-Butylcyclohexylbenzonitril
- C4:: p-trans-4-Pentylcyclohexylbenzonitril
- C5:: 1-(trans-4-Propylcyclohexyl)-2-(p-cyanphenyl)-ethan
- C6:: 1-(trans-4-Pentylcyclohexyl)-2-(p-cyanphenyl)-ethan
- C7:: 4-Ethyl-4'-cyanbiphenyl
- C8:: 4-Propyl-4'-cyanbiphenyl
- C9:: 4-Pentyl-4'-cyanbiphenyl
- C10:: 2-p-Cyanphenyl-5-propyl-1,3-dioxan
- C11:: 2-p-Cyanphenyl-5-butyl-1,3-dioxan
- C12:: 2-p-Cyanphenyl-5-pentyl-1,3-dioxan
- C13:: trans-1-p-Isothiocyanatophenyl-4-propylcyclohexan
- C14:: 1-[trans-4-(trans-4-Propylcyclohexyl)-cyclohexyl]-2-(p-cyanphenyl)-ethan
- C15:: p-Ethylbenzoesäure-(4-cyan-3-fluorphenylester)
- C16 :: p-Propylbenzoesäure-(4-cyan-3-fluorphenylester)
- C17:: p-Pentylbenzoesäure-(4-cyan-3-fluorphenylester)
- C18:: p-Heptylbenzoesäure-(4-cyan-3-fluorphenylester)
- C19:: p-(trans-4-Propylcyclohexyl)-benzoesäure-(4-cyan-3-fluorphenylester)
- C20:: p-(trans-4-Butylcyclohexyl)-benzoesäure-(4-cyan-3-fluorphenylester)
- C21:: p-(trans-4-Pentylcyclohexyl)-benzoesäure-(4-cyan-3-fluorphenylester)
- C22:: 2-(3-Fluor-4-cyanphenyl)-5-pentyl-pyrimidin
- C23:: 2-(3-Fluor-4-cyanphenyl)-5-hexyl-pyrimidin
- C24:: 2-(3-Fluor-4-cyanphenyl)-5-heptyl-pyrimidin
- F1:: trans-1-p-Fluorphenyl-4-pentylcyclohexan
- F2:: trans-1-p-Fluorphenyl-4-hexylcyclohexan
- F3:: trans-1-p-Fluorphenyl-4-heptylcyclohexan
- H1:: 4-Butyl-4'-propyl-tolan
- H2:: 4-Pentyl-4'-propyl-tolan
- H3:: 4-Butyl-4'-pentyl-tolan
- H4:: 4-Ethyl-4'-methoxy-tolan
- H5:: 4-Methyl-4'-ethoxy-tolan
- H6:: 4-(trans-4-Propylcyclohexyl)-4'-methoxy-tolan
- H7:: 4-(trans-4-Propylcyclohexyl)-4'-ethoxy-tolan
- H8:: 4-(trans-4-Propylcyclohexyl)-4'-propoxy-tolan
- K1:: 4-Ethyl-4'-(trans-4-propylcyclohexyl)-biphenyl
- K2:: 4-Ethyl-4'-(trans-4-pentylcyclohexyl)-biphenyl
- K3:: 4-Nonyl-4'-(trans-4-pentylcyclohexyl)-biphenyl
- K4:: 4-Ethyl-4'-(trans-4-pentylcyclohexyl)-2'-flourbiphenyl
- K5:: 1-(trans-4-Pentylcyclohexyl)-2-(4'-ethyl-2'-fluorbiphenyl-4-yl)-ethan
- L1:: 4,4'-Bis-(trans-4-propylcyclohexyl)-biphenyl
- L2:: 4-(trans-4-Pentylcyclohexyl)-4'-(trans-4-propylcyclohexyl)-biphenyl
- L3:: 4,4'-Bis-(trans-4-pentylcyclohexyl)-biphenyl
- L4:: 4,4-Bis-(trans-4-propylcyclohexyl)-2-fluorbiphenyl
- L5:: 4-(trans-4-Pentylcyclohexyl)-4'-(trans-4-propylcyclohexyl)-2-fluorbiphenyl
- L6:: 4,4'-Bis-(trans-4-pentylcyclohexyl)-2-flourbiphenyl

Die Daten zu den Beispielen 22 bis 129 sind in Tabelle 17 zu finden.

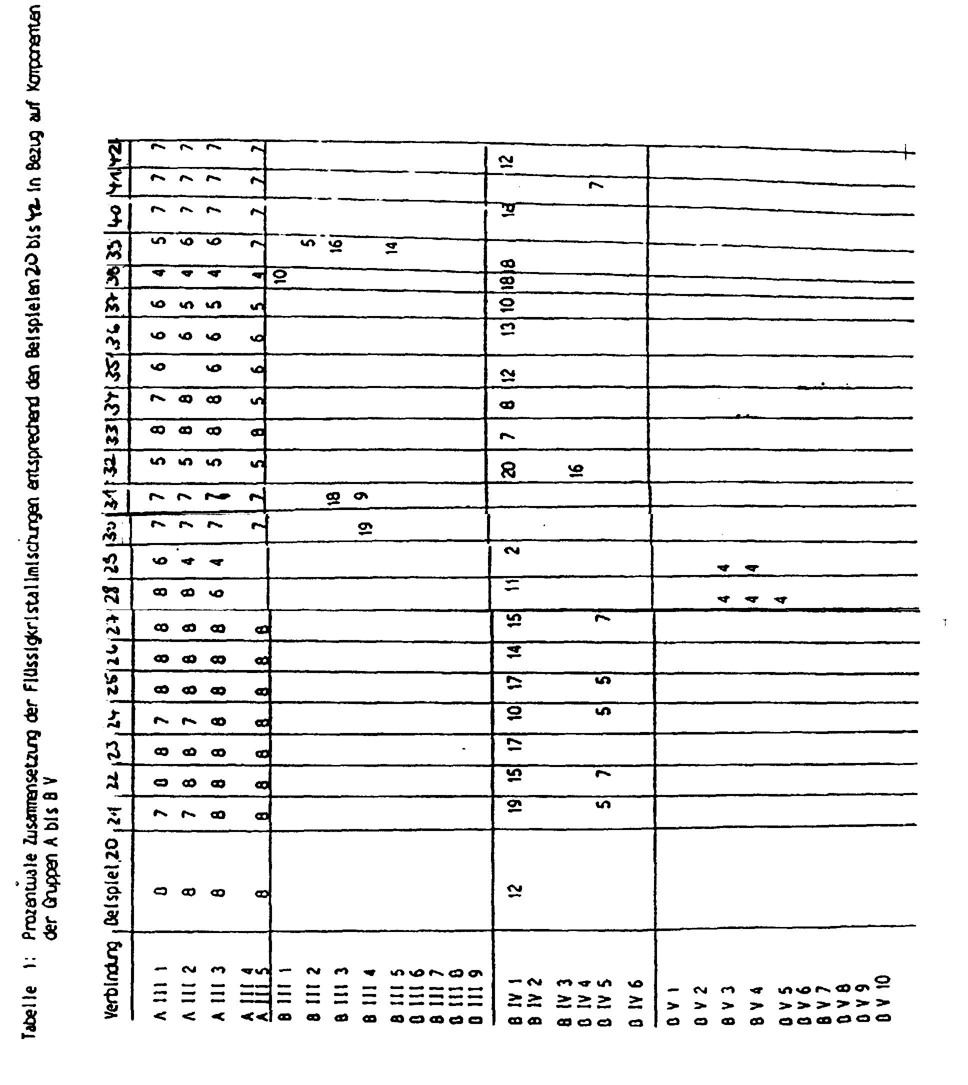

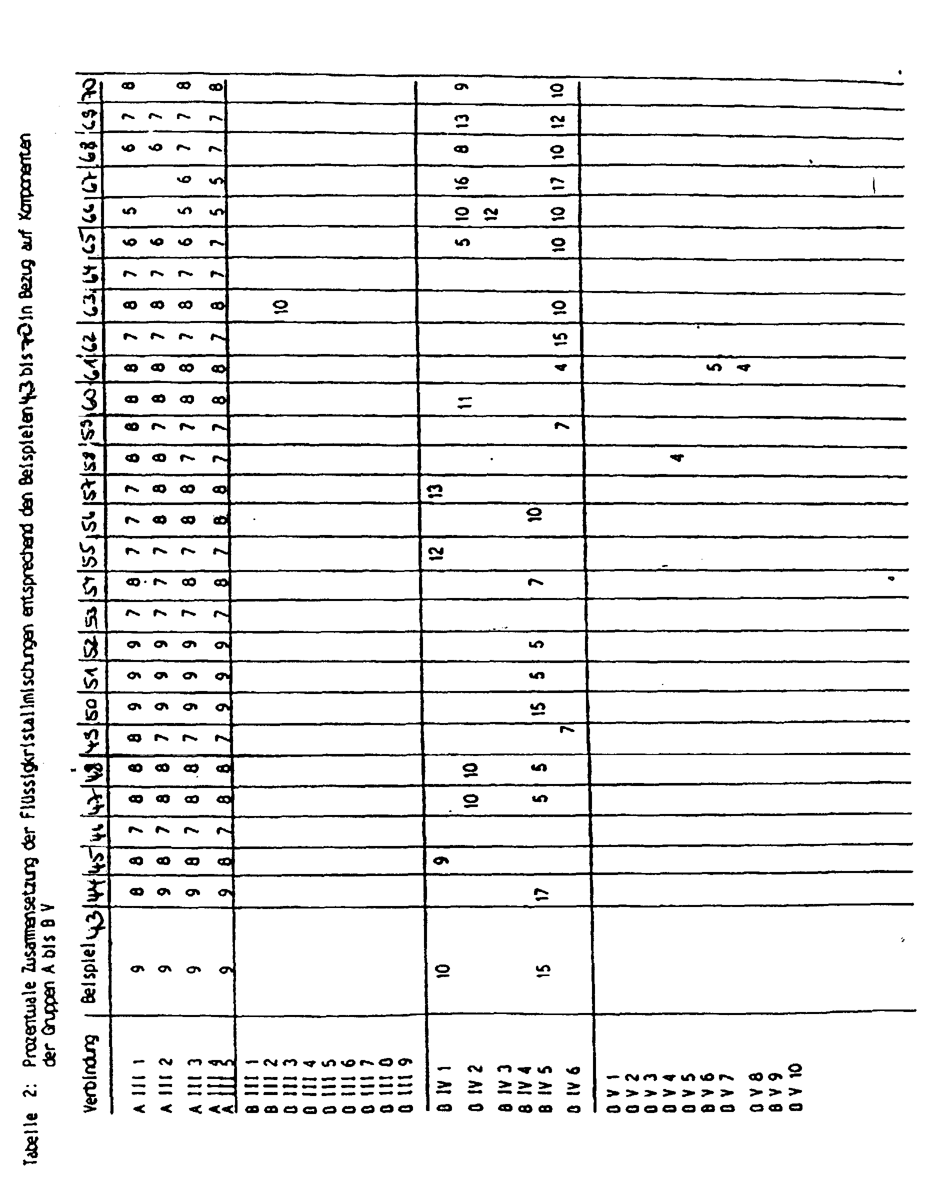

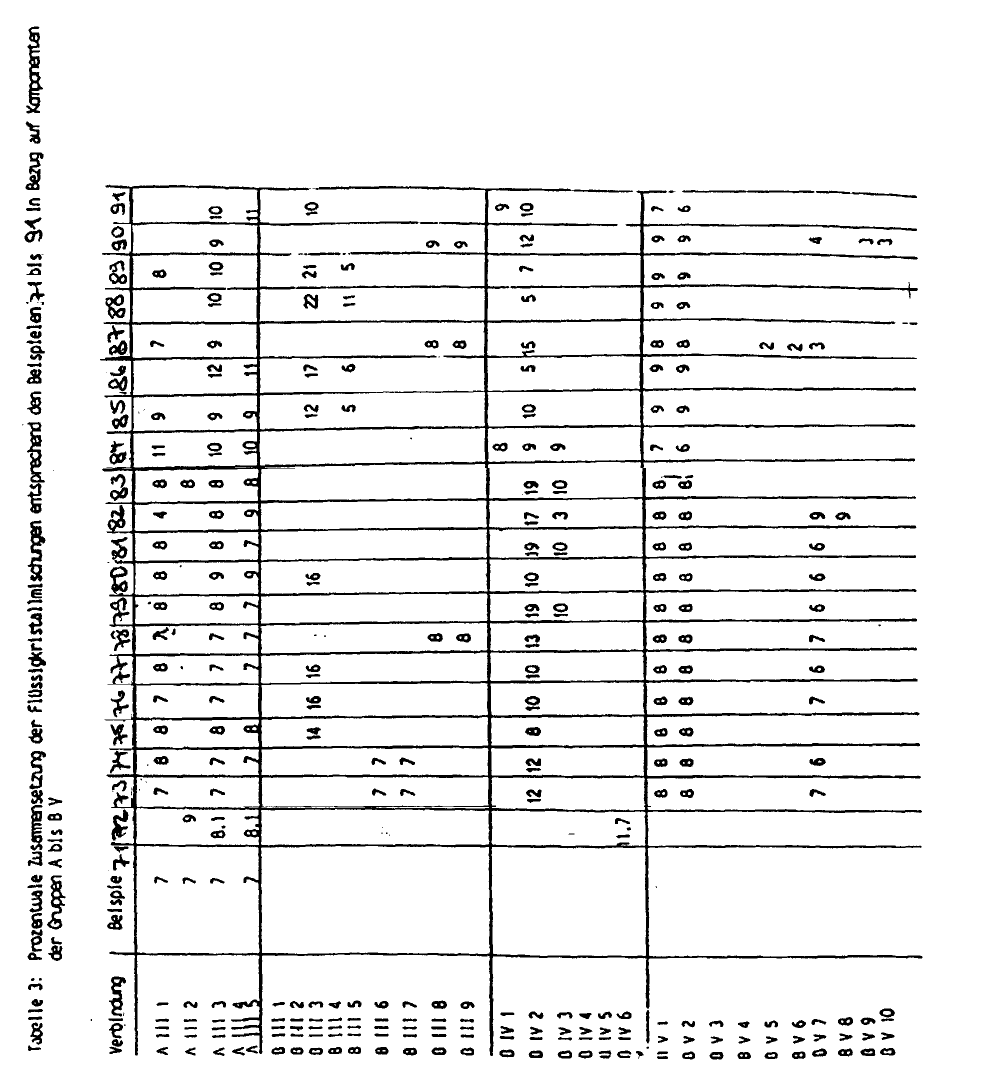

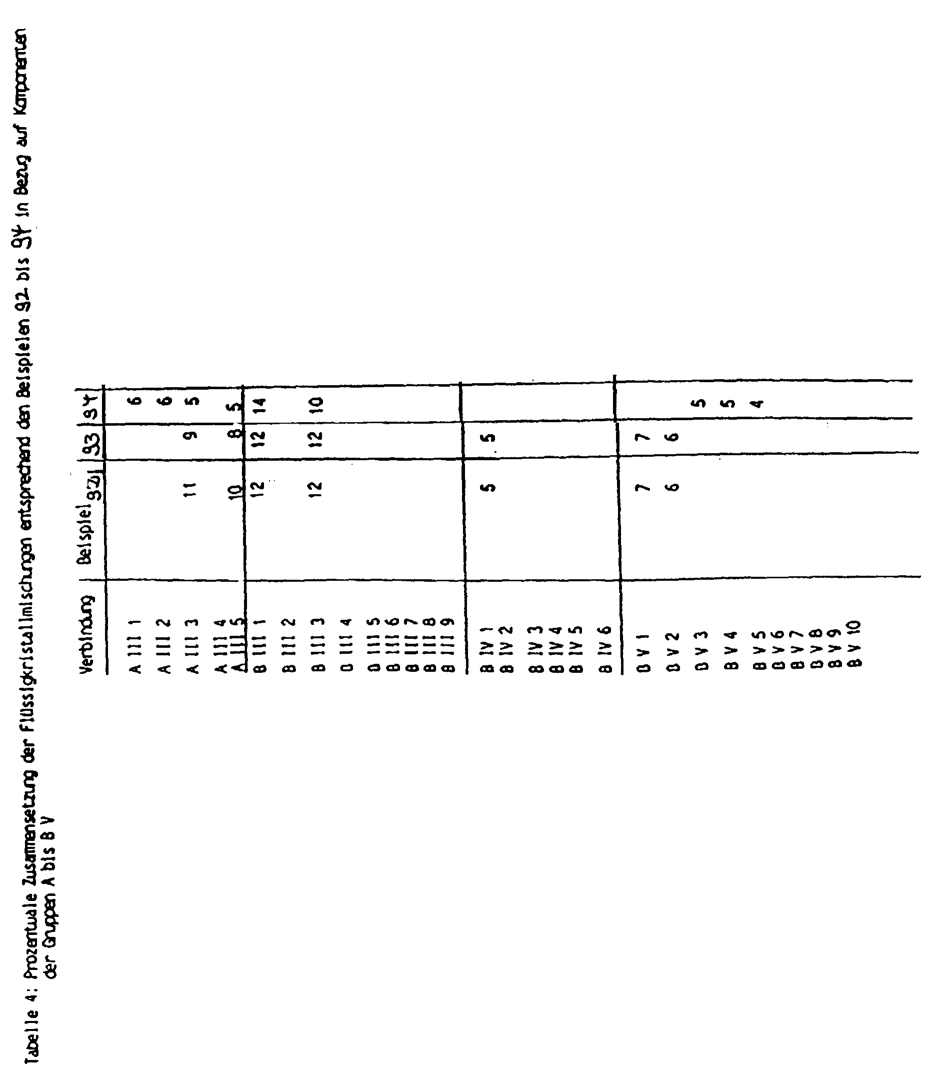

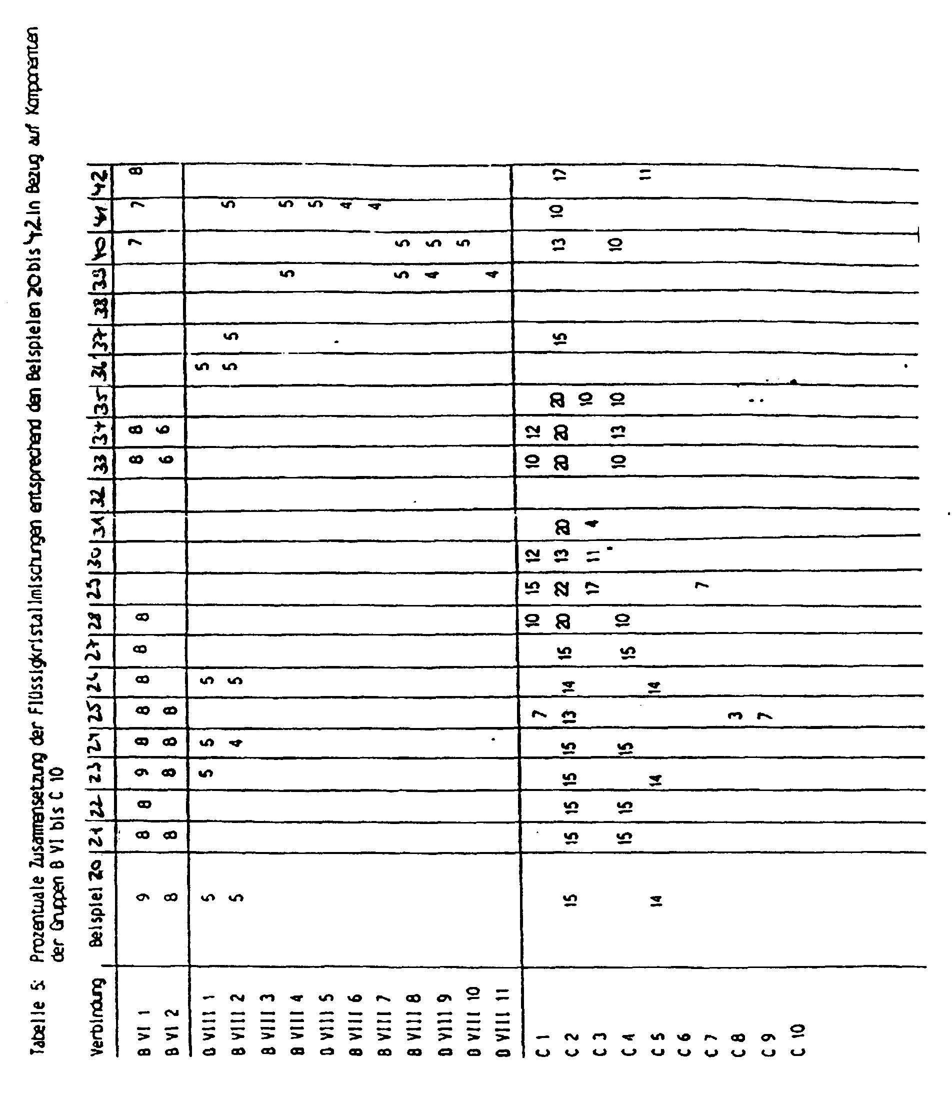

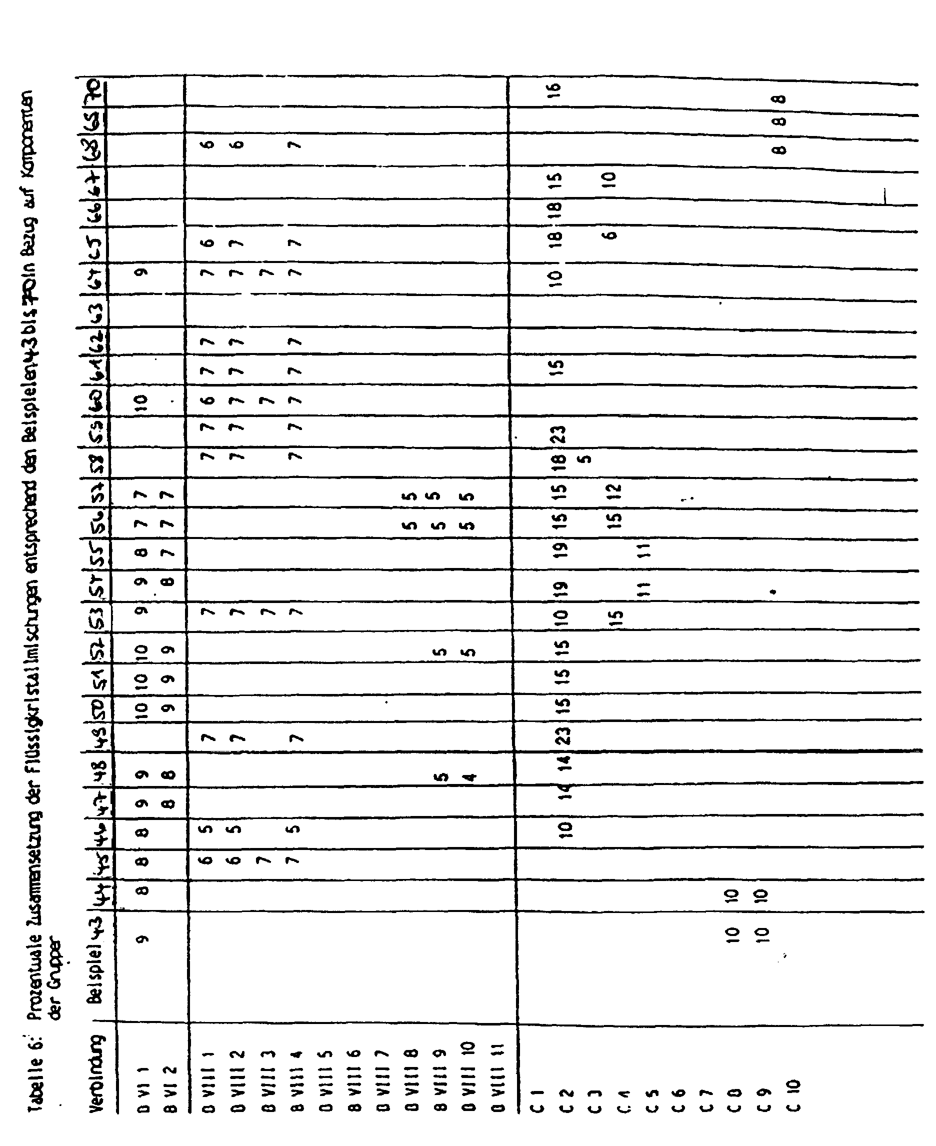

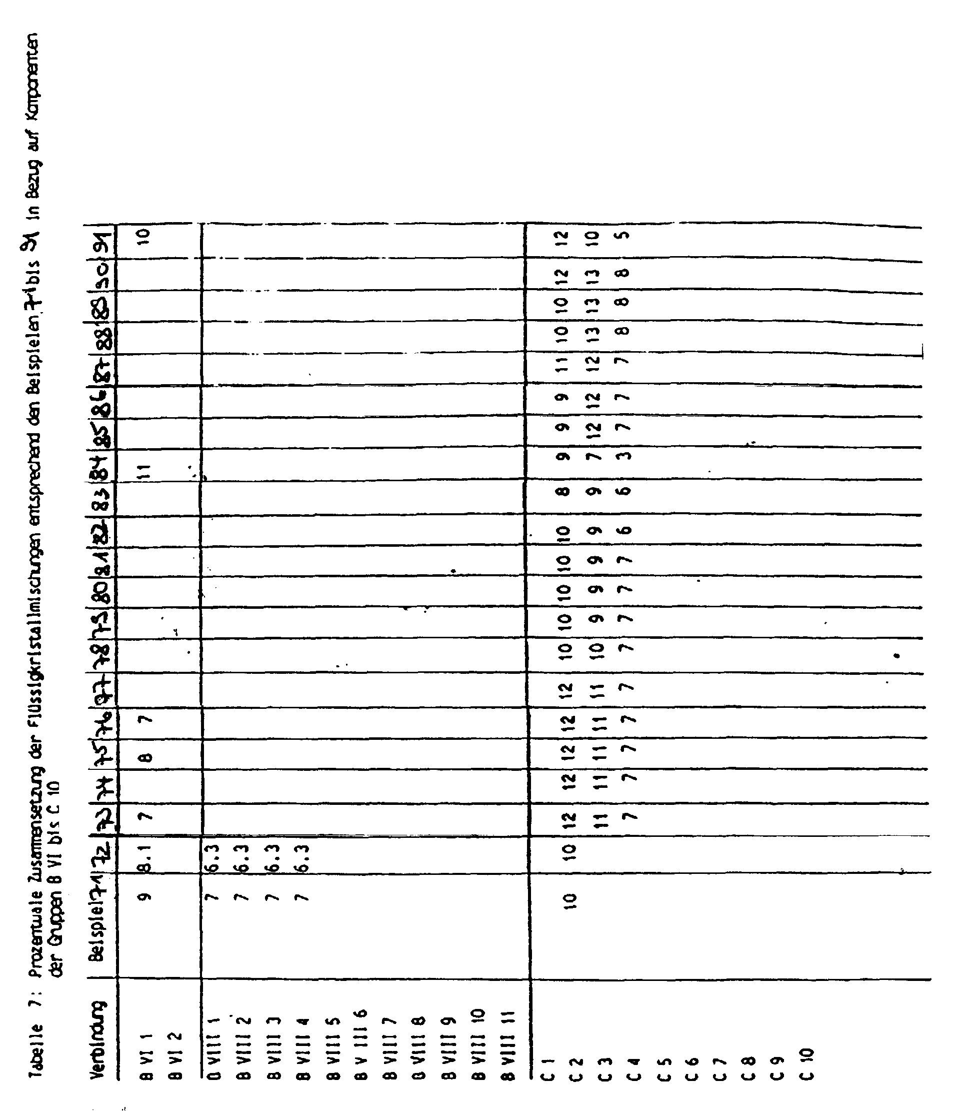

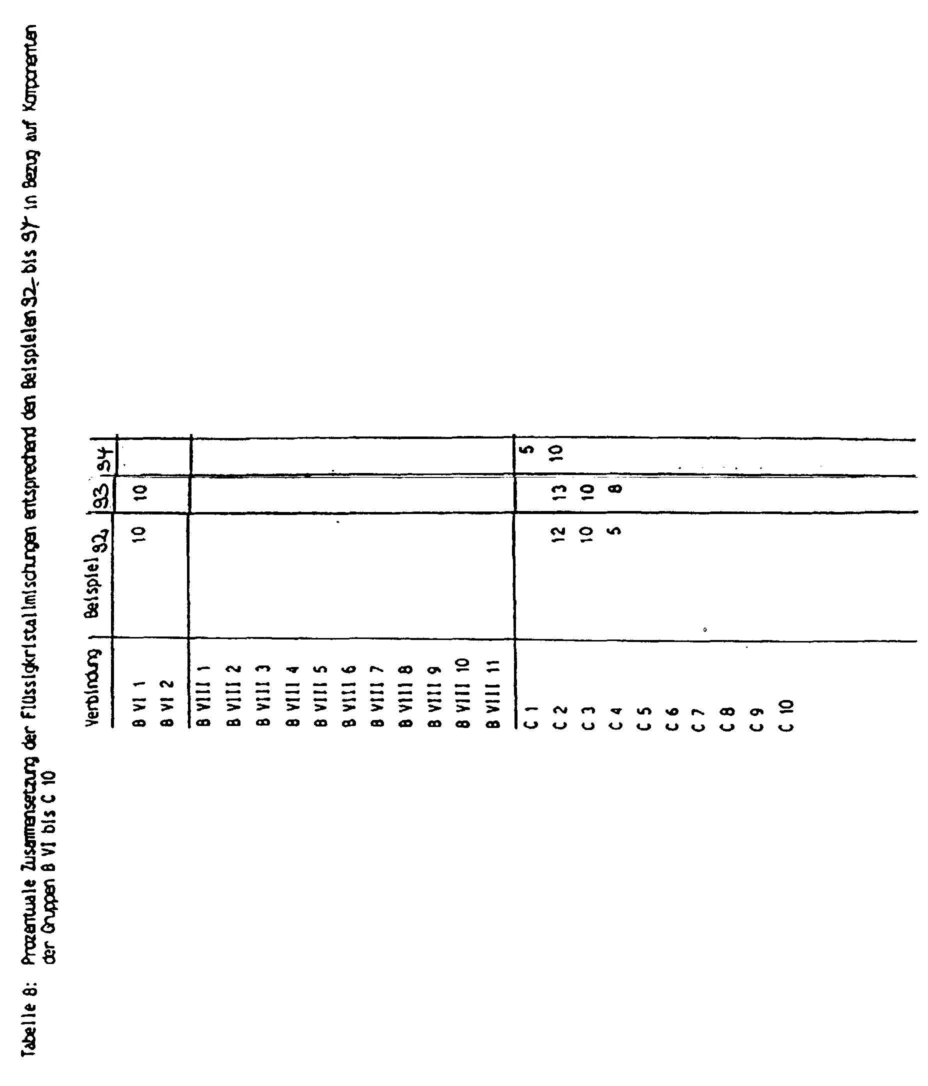

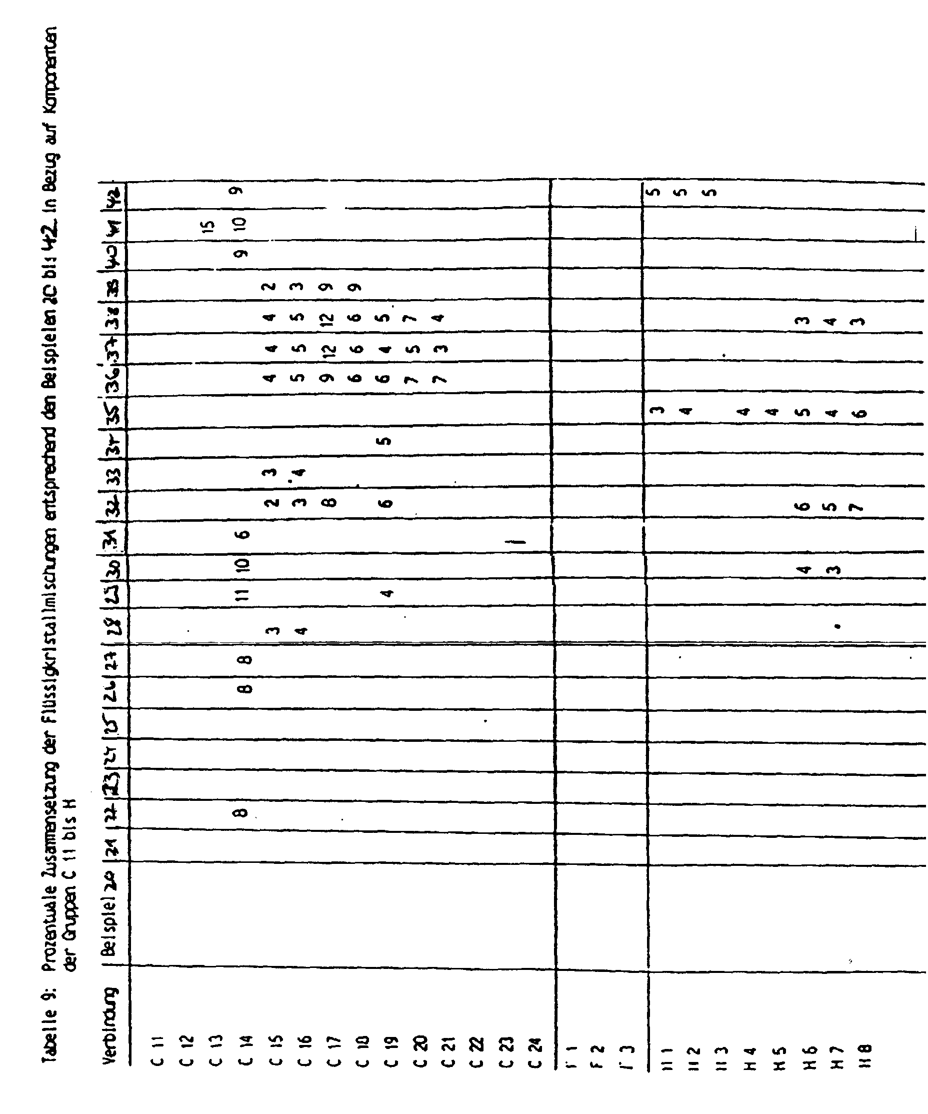

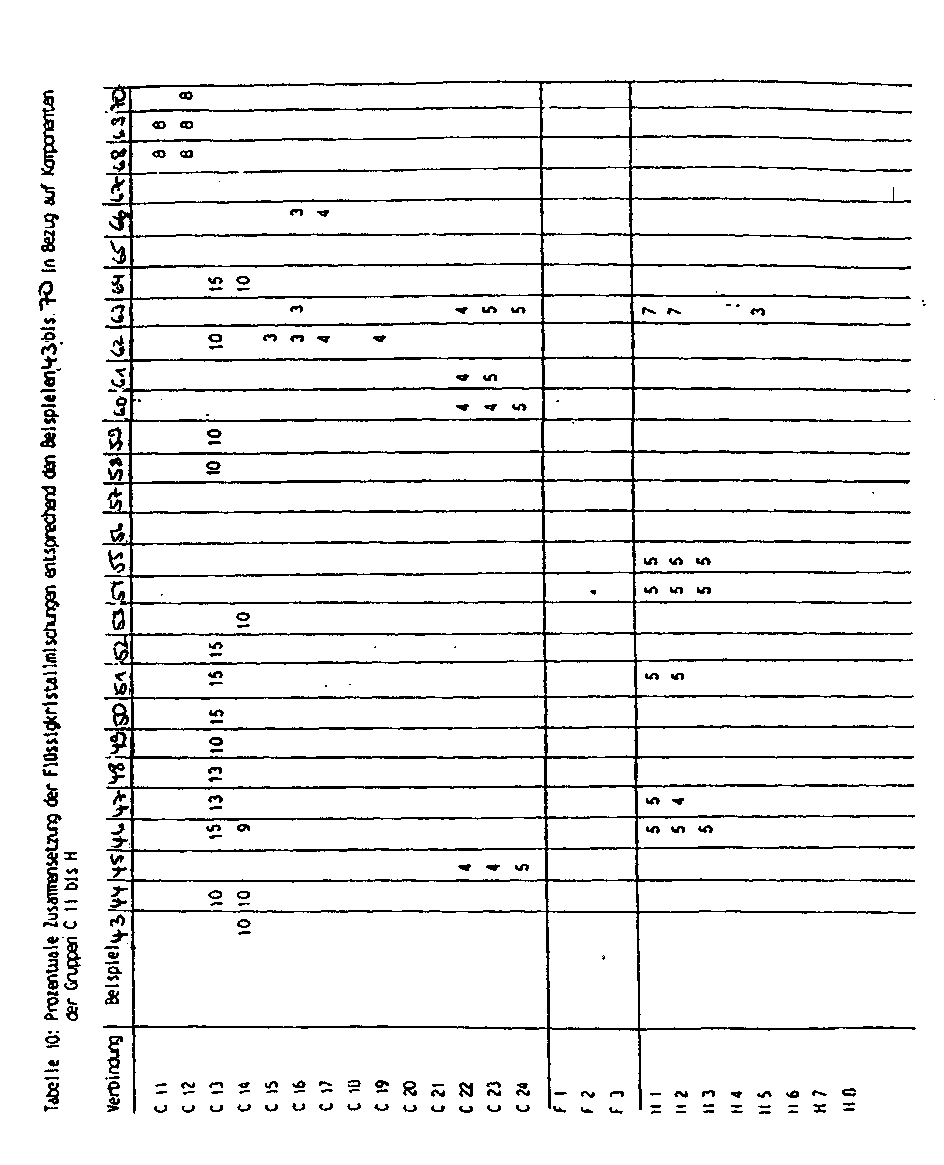

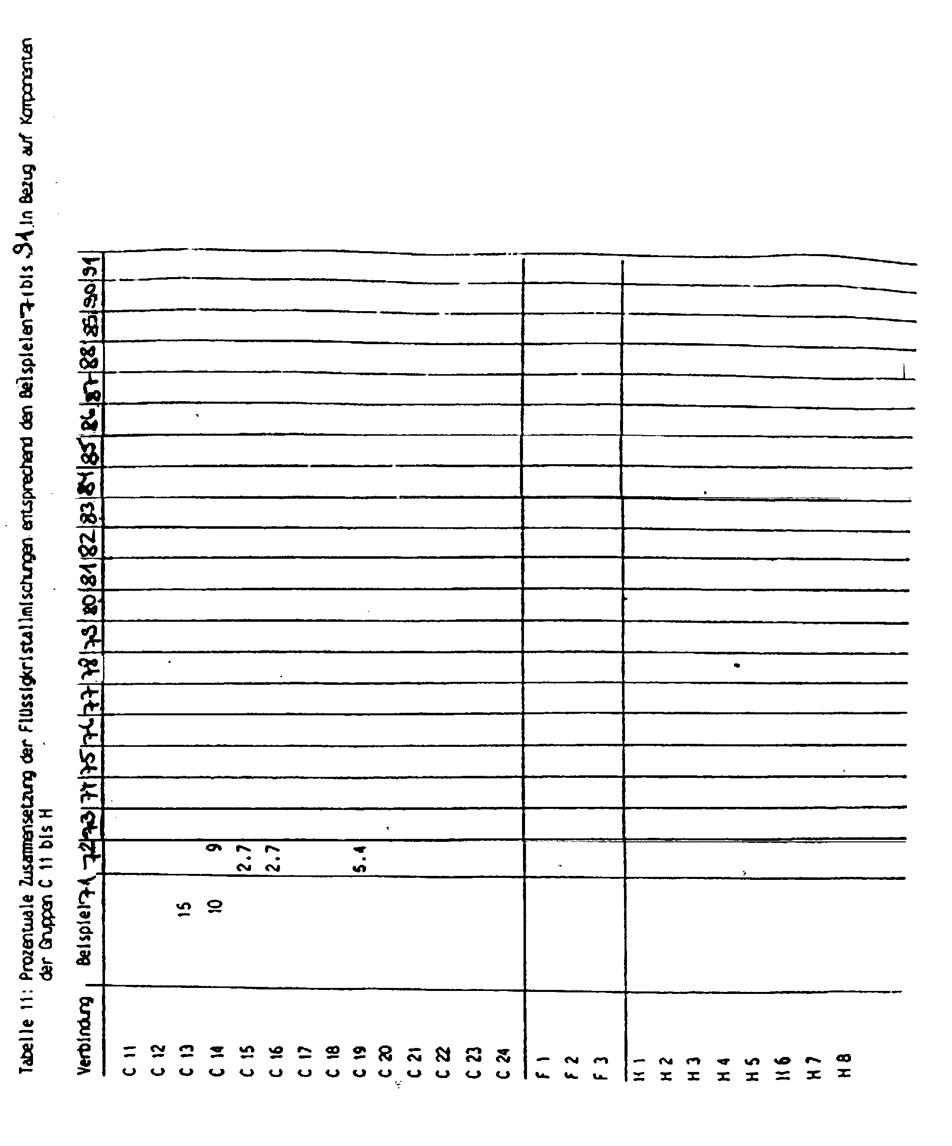

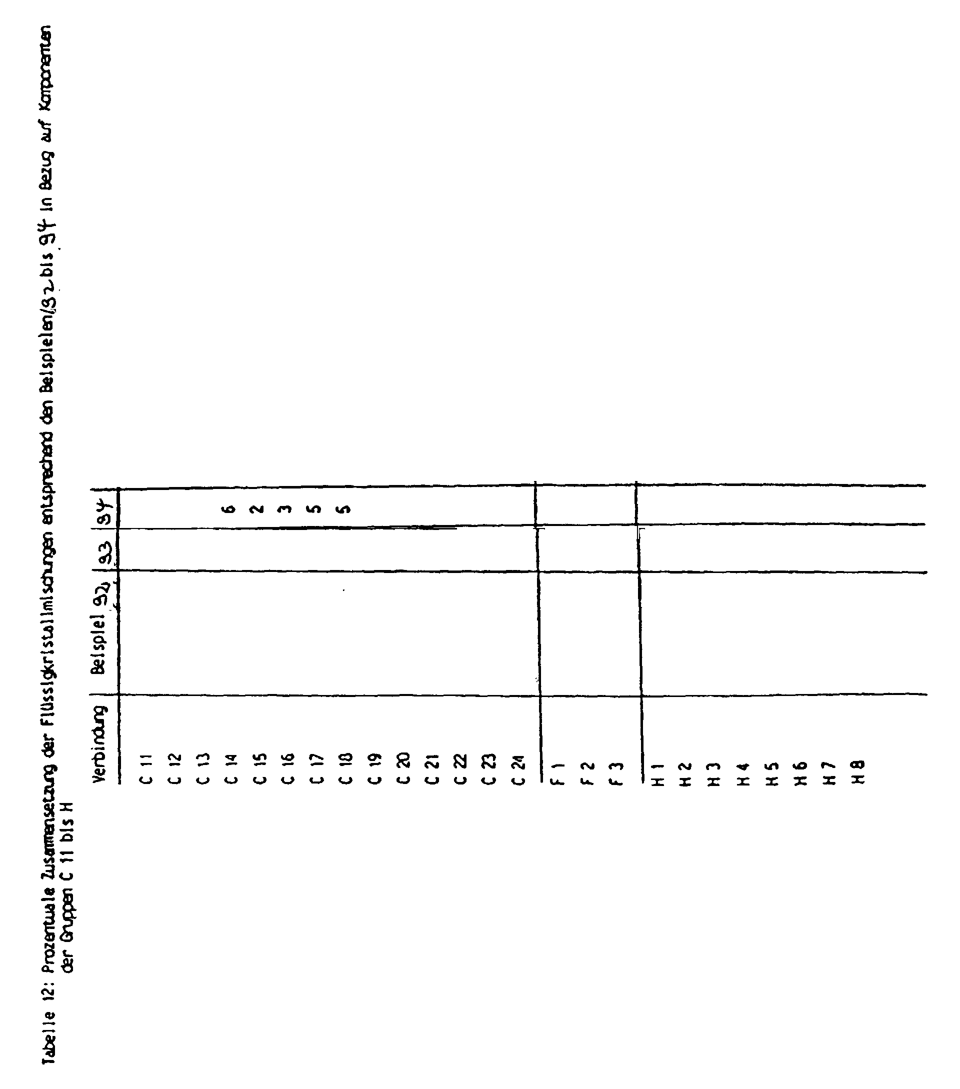

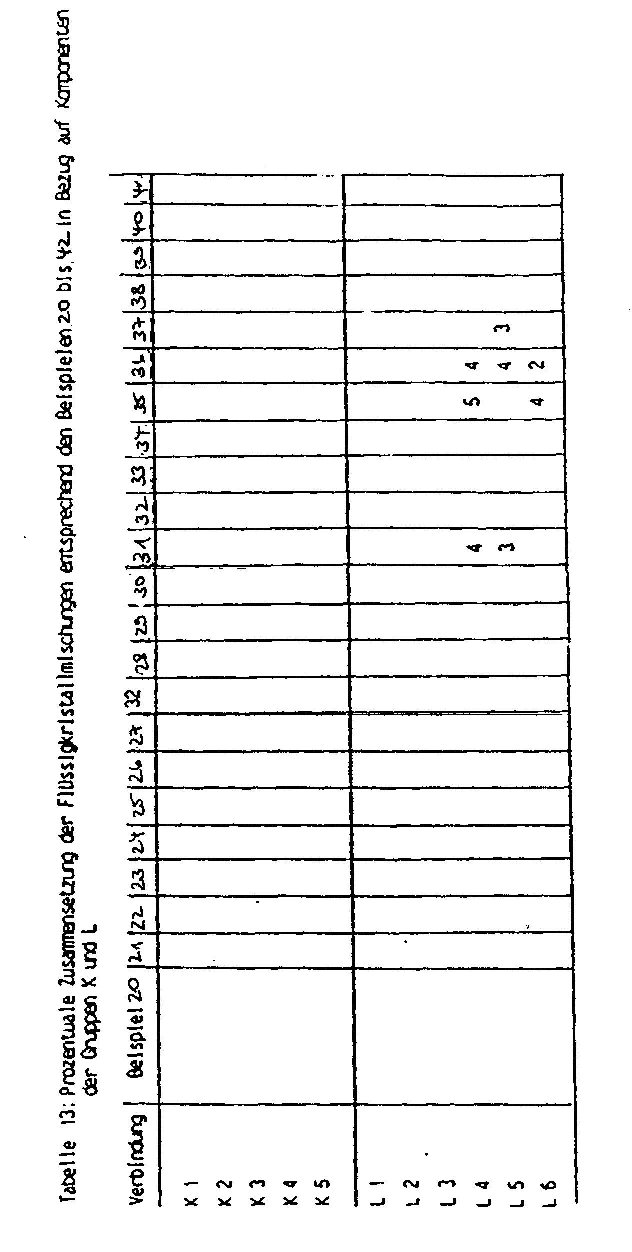

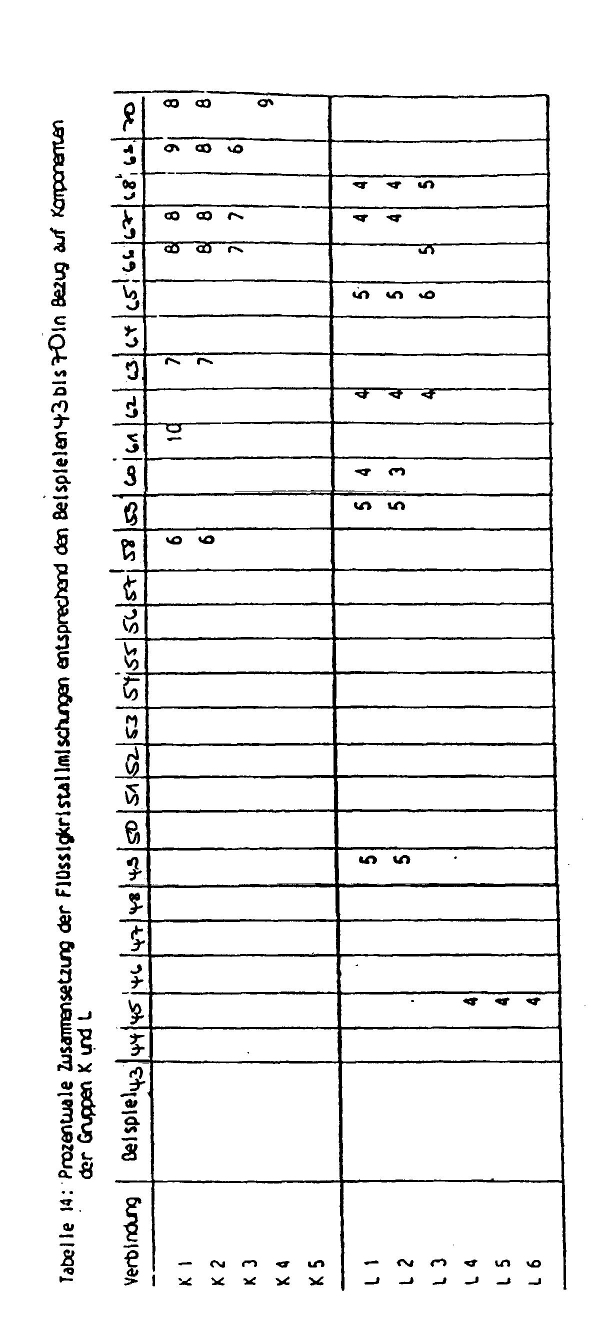

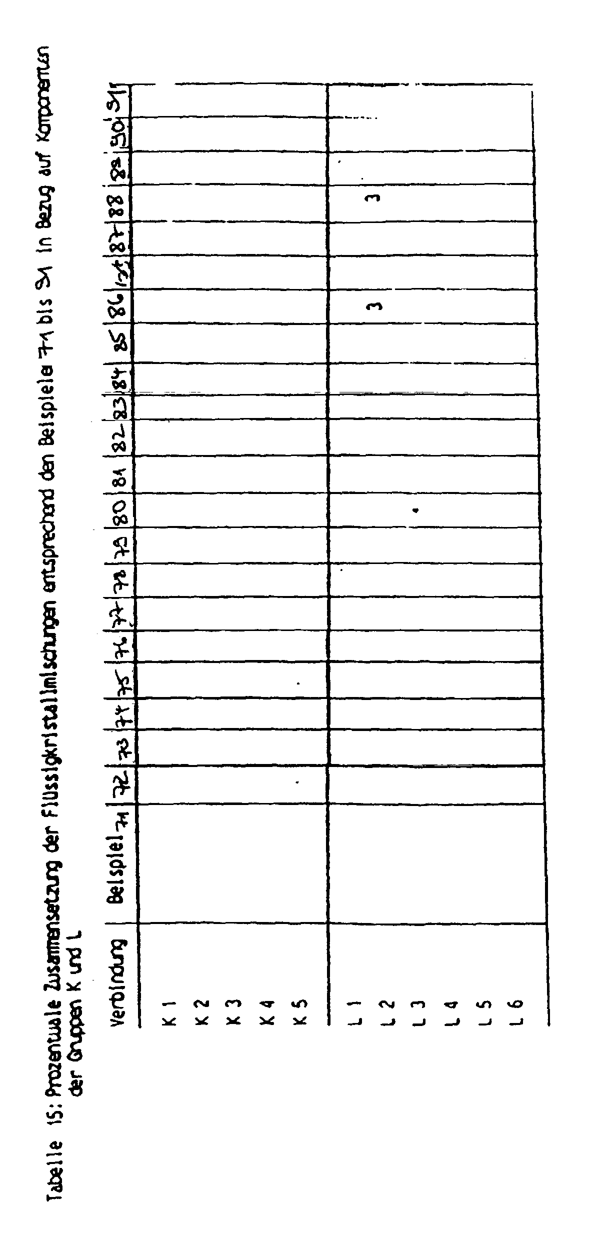

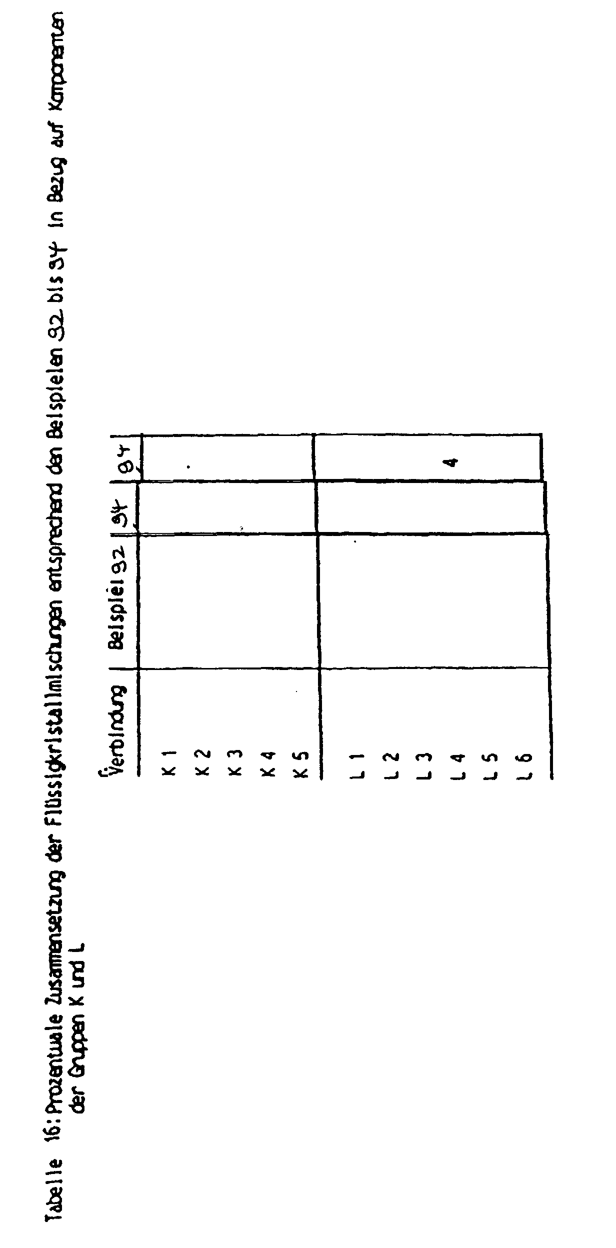

**Tabelle 17:**

| Physikalische Daten zu den Beispielen 20 bis 94 | | | | | |
|---|---|---|---|---|---|
| Beispiel | Klärpunkt (°C) | Viskosität bei 20° (mPa.S) | Δn | Schwellenspannung V (10, 0, 20) (Volt) | bevortugte Anwendung |
| 20 | 79 | 16 | 0.1068 | 2.06 (1ST) | TFT |
| 21 | 76 | 15 | 0.0969 | 2.06 (1ST) | TFT |
| 22 | 82 | 17 | 0.1019 | 2.00 | TFT |
| 23 | 80 | 16 | 0.1019 | 1.98 (5.44) | TFT |
| 24 | 75 | 16 | 0.1043 | 2.05 (5.38) | TFT |
| 25 | 73 | 15 | 0.1059 | 1.89 (5.18) | TFT |
| 26 | 81 | 17 | 0.1106 | - | TFT |
| 27 | 82 | 17 | 0.1019 | - | TFT |
| 28 | 77 | 20 | 0.1048 | 1.45 (5.31) | OMI |
| 29 | 79 | 25 | 0.1266 | 1.75 (9.81) | STN |
| 30 | 90 | 22 | 0.1108 | 1.99 (5.03) | OMI |
| 31 | 108 | 22 | 0.0999 | 2.42 (5.60) | TFT 2nd |
| 32 | 105 | 22 | 0.1447 | 2.30 (8.32) | GH |
| 33 | 80 | 19 | 0.1092 | 1.49 (5.07) | OMI |
| 34 | 83 | 20 | 0.1097 | 1.70 (5.02) | OMI |
| 35 | 82 | 18 | 0.1576 | 2.17 (2nd) | NTN |
| 36 | 99 | 41 | 0.1450 | 1.46 (2nd) | STN Low Duty |
| 37 | 87 | 37 | 0.1405 | 1.39 (2nd) | STN Low Duty |
| 38 | 89 | 34 | 0.1406 | 1.32 (2nd) | STN Low Duty |
| 39 | 64 | 31 | 0.1019 | 1.61 (5.51) | Low DN mpx |
| 40 | 86 | 19 | 0.1115 | 2.70 (2nd) | DSTN |
| 41 | 81 | 21 | 0.1310 | 2.68 (2nd) | DSTN |
| 42 | 82 | 16 | 0.1240 | 2.55 (2nd) | DSTN |
| 43 | 82 | 16 | 0.1181 | 2.70 (2nd) | DSTN |
| 44 | 81 | 16 | 0.1292 | 2.59 (2nd) | DSTN |
| 45 | 88 | 27 | 0.1355 | 2.71 (2nd) | DSTN |
| 46 | 80 | 18 | 0.1509 | 2.64 (2nd) | DSTN |
| 47 | 81 | 14 | 0.1226 | 2.81 | DSTN |
| 48 | 85 | 16 | 0.1144 | 2.83 | DSTN |
| 49 | 78 | 17 | 0.1335 | 2.45 (2nd) | DSTN |
| 50 | 81 | 14 | 0.1072 | 2.29 | DSTN |
| 51 | 89 | 16 | 0.1271 | 2.82 (2nd) | DSTN |
| 52 | 93 | 18 | 0.1186 | 2.83 (2nd) | DSTN |
| 53 | 84 | 20 | 0.1250 | 2.59 | DSTN |
| 54 | 78 | - | - | - | DSTN |
| 55 | 76 | SW | - | - | DSTN |
| 56 | 80 | - | - | - | DSTN |
| 57 | 85 | SW | - | - | DSTN |
| 58 | 80 | 18 | 0.1339 | 2.75 (2nd) | DSTN High Response |
| 59 | 78 | 17 | 0.1335 | 2.45 (2nd) | TYPE |
| 60 | 72 | 27 | 0.1480 | 2.53 | TYPE |
| 61 | 83 | 24 | 0.1313 | - | TYPE |
| 62 | 79 | 23 | 0.1366 | - | TYPE |
| 63 | 76 | SW | - | - | TYPE |
| 64 | 81 | 18 | 0.1382 | 2.64 | TYPE |
| 65 | 86 | 18 | 0.1251 | 2.708 | DSTN |
| 66 | 80 | 18 | 0.1180 | 2.273 | DSTN |
| 67 | 84 | 17 | 0.1167 | 2.705 | DSTN |
| 68 | 79 | 23 | 0.1189 | 2.43 (2nd) | DSTN |
| 69 | 85 | 20 | 0.1122 | 2.55 (2nd) | DSTN |
| 70 | 81 | 19 | 0.1219 | 2.29 | DSTN |
| 71 | 81 | 18 | 0.1387 | 2.64 | DSTN |
| 72 | 75 | 22 | 0.1241 | 2.21 (2nd) | DSTN |
| 73 | 91 | 19 | 0.0939 | 2.03 (1st) | TFT TV |
| 74 | 91 | 19 | 0.0945 | 2.00 (1st) | TFT TV |
| 75 | 91 | 18 | 0.0929 | 2.08 (1st) | TFT |
| 76 | 89 | 18 | 0.0916 | 1.98 (1st) | TFT |
| 77 | 90 | 18 | 0.0923 | 2.03 (1st) | TFT |
| 78 | 88 | 19 | 0.0903 | 2.07 (1st) | TFT |
| 79 | 87 | 17 | 0.0979 | 1.96 | TFT |
| 80 | 94 | 18 | 0.0914 | 2.17 (1st) | TFT TV |
| 81 | 87 | 17 | 0.0979 | 1.96 | TFT |
| 82 | 104 | 19 | 0.0985 | 2.18 | TFT |
| 83 | 88 | 17 | 0.0967 | 2.10 | TFT TV |
| 84 | 93 | - | 0.0950 | 2.27 | TFT TV |
| 85 | 90 | 18 | 0.0910 | 2.01 | TFT TV |
| 86 | 93 | 18 | 0.0901 | 2.04 | TFT TV |
| 87 | 82 | 18 | 0.0895 | 1.81 | TFT TV |
| 88 | 79 | 17 | 0.0856 | 1.80 | TFT TV |
| 89 | 80 | 16 | 0.0867 | 1.80 | TFT TV |
| 90 | 80 | 19 | 0.0865 | 1.67 | TFT TV |
| 91 | 81 | - | 0.0909 | 1.82 | TFT |
| 92 | 81 | 17 | 0.0845 | 1.83 | TFT TV USE |
| 93 | 77 | 17 | 0.0858 | 1.74 | TFT TV USE |
| 94 | 90 | 23 | 0.0959 | 1.55 | OMI |

Die folgenden Beispiele betreffen weitere erfindungsgemäße Mischungen:

### Beispiel 95

Man stellt eine Flüssigkristallmischung her bestehend aus:
13 % p-trans-4-Propylcyclohexyl-benzonitril,
14,3 % 1-(trans-4-Propylcyclohexyl)-2-(p-cyanphenyl)-ethan,
12 % 1-(trans-4-Pentylcyclohexyl)-2-(p-cyanphenyl)-ethan,
7 % 5-Propyl-2-(trans-4-ethylcyclohexyl)-trans-1,3-dioxan,
12 % 4-(trans-4-Propylcyclohexyl)-1-Propylcyclohex-1-en,
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
6 % 1-[trans-4-(trans-4-Propylcyclohexyl)-cyclohexyl]-2-(p-propylphenyl)-ethan,
6 % 1-[trans-4-(trans-4-Propylcyclohexyl)-cyclohexyl]-2-(p-pentylphenyl)-ethan,
5 % 1-[trans-4-(trans-4-Propylcyclohexyl)-cyclohexyl]-2-(3,4-difluorphenyl)-ethan,
5 % 1-(trans-4-Propylcyclohexyl)-2-[trans-4-(3-fluor-4-cyanphenyl)-cyclohexyl]-ethan,
4 % 4,4'-Bis-(trans-4-propylcyclohexyl)-biphenyl,
3 % 4,4'-Bis-(trans-4-pentylcyclohexyl)-biphenyl und
0,7 % optisch aktiver p-(p-n-Hexylbenzoyloxy)-benzoesäure-2-octylester.

### Beispiel 96

Man stellt eine Flüssigkristallmischung her bestehend aus:
5 % p-trans-4-Propylcyclohexyl-benzonitril,
5 % p-trans-4-Ethylcyclohexyl-benzonitril,
14,3 % 1-(trans-4-Propylcyclohexyl)-2-(p-cyanphenyl)-ethan,
12 % 1-(trans-4-Pentylcyclohexy)-2-(p-cyanphenyl)-ethan,
10 % trans-1-p-Methoxyphenyl-4-propylcyclohexan,
5 % 1,2-Bis-(trans-4-Propylcyclohexyl)-ethan,
8 % 1-[trans-4-(trans-4-Propylcyclohexyl)-cyclohexyl]-2-(p-methylphenyl)-ethan,
8 % 1-[trans-4-(trans-4-Propylcyclohexyl)-cyclohexyl]-2-(p-ethylphenyl)-ethan
8 % 1-[trans-4-(trans-4-Propylcyclohexyl)-cyclohexyl]-2-(p-propylphenyl)-ethan
8 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-3,4-difluorbenzol
8 % 4-(trans-4-Propylcyclohexyl)-3'-fluor-4'-cyanbiphenyl und
0,7 % optisch aktiver p-(p-n-Hexylbenzoyloxy)-benzoesäure-2-octylester.

### Beispiel 97

Man stellt eine Flüssigkristallmischung her bestehend aus:
15 % p-trans-4-Propylcyclohexylbenzonitril,
11 % p-trans-4-Butylcyclohexylbenzonitril,
4 % trans-1-p-Methoxyphenyl-4-propylcyclohexan,
14 % trans,trans-4-Methoxy-4'-pentylcyclohexylcyclohexan,
14 % trans,trans-4-Ethoxy-4'-pentylcyclohexylcyclohexan,
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
6 % 1-[trans-4-(trans-4-Propylcyclohexyl)-cyclohexyl]-2-(p-propylphenyl)-ethan,
6 % 1-[trans-4-(trans-4-Propylcyclohexyl)-cyclohexyl]-2-(p-pentylphenyl)-ethan,
6 % 1-[trans-4-(trans-4-Propylcyclohexyl)-cyclohexyl]-2-(p-cyanphenyl)-ethan,
6 % 1-[trans-4-(trans-4-Propylcyclohexyl)-cyclohexyl]-2-(p-fluorphenyl)-ethan,
3 % 4,4'-Bis-(trans-4-propylcyclohexyl)-biphenyl und
3 % 2-(p-Pentylphenyl)-5-propyl-pyridin.

In den folgenden Tabellen sind Eigenschaften und Zusammsetzung der Mischungen der folgenden Beispiele angegeben, wobei die einzelnen Verbindungen wie folgt codiert sind:
- ECCP-31:: 1-[trans-4-(trans-4-Propylcyclohexyl)-cyclohexyl]-(2-p-methylphenyl)-ethan
- ECCP-32:: 1-[trans-4-(trans-4-Propylcyclohexyl)-cyclohexyl]-(2-p-ethylphenyl)-ethan
- ECCP-33:: 1-[trans-4-(trans-4-Propylcyclohexyl)-cyclohexyl]-(2-p-propylphenyl)-ethan
- ECCP-34: 1-[trans-4-(trans-4-Propylcyclohexyl)-cyclohexyl]-(2-p-butylphenyl)-ethan
- ECCP-35:: 1-[trans-4-(trans-4-Propylcyclohexyl)-cyclohexyl]-(2-p-pentylphenyl)-ethan
- CCH-301:: trans, trans-4-Propyl-4'-methoxy-cyclohexylcyclohexan
- CCH-302:: trans, trans-4-Propyl-4'-ethoxy-cyclohexylcyclohexan
- CCH-303:: trans,trans-4-Propyl-4'-propoxy-cyclohexylcyclohexan
- CCH-501:: trans,trans-4-Pentyl-4'-methoxy-cyclohexylcyclohexan
- CCH-502:: trans,trans-4-Pentyl-4'-ethoxy-cyclohexylcyclohexan
- C-33:: trans,trans-4-Propyl-4'-butyryloxy-cyclohexylcyclohexan
- C-35:: trans,trans-4-Propyl-4'-hexanoyloxy-cyclohexylcyclohexan
- OS-33:: trans-4-Propylcyclohexylcarbonsäure-(trans-4-propylcyclohexylester)
- OS-53:: trans-4-Pentylcyclohexylcarbonsäure-(trans-4-propylcyclohexylester)
- PCH-301:: trans-1-p-Methoxyphenyl-4-propylcyclohexan
- PCH-302:: trans-1-p-Ethoxyphenyl-4-propylcyclohexan
- PCH-304:: trans-1-p-Butoxyphenyl-4-propylcyclohexan
- PCH-501:: trans-1-p-Methoxyphenyl-4-pentylcyclohexan
- PCH-53:: trans-1-p-Propylphenyl-4-pentylcyclohexan
- PCH-52:: trans-1-p-Ethylphenyl-4-pentylcyclohexan
- CP-3F:: trans,trans-4-Propylcyclohexylcyclohexan-4'-carbonsäure-(p-fluorphenylester)
- CP-5F:: trans,trans-4-Pentylcyclohexylcyclohexan-4'-carbonsäure-(p-fluorphenylester)
- CH-33:: trans,trans-4-Propylcyclohexylcyclohexan-4'-carbonsäure-(trans-4-propylcyclohexylester)
- CH-35:: trans,trans-4-Propylcyclohexylcyclohexan-4'-carbonsäure-(trans-4-pentylcyclohexylester)
- CH-43:: trans,trans-4-Butylcyclohexylcyclohexan-4'-carbonsäure-(trans-4-propylcyclohexylester)
- CH-45:: trans,trans-4-Butylcyclohexylcyclohexan-4'-carbonsäure-(trans-4-pentylcyclohexylester)
- CP-33:: trans,trans-4-Propylcyclohexylcyclohexan-4'-carbonsäure-(p-propylphenylester)
- CP-35:: trans,trans-4-Propylcyclohexylcyclohexan-4'-carbonsäure-(p-pentylphenylester)
- CP-43:: trans,trans-4-Butylcyclohexylcyclohexan-4'-carbonsäure-(p-propylphenylester)
- CP-45:: trans,trans-4-Butylcyclohexylcyclohexan-4'-carbonsäure-(p-pentylphenylester)
- ECCP-3F:: 1-[trans-4-(trans-4-Propylcyclohexyl)-cyclohexyl]-2-(p-fluorphenyl)-ethan
- ECCP-5F:: 1-[trans-4-(trans-4-Pentylcyclohexyl)-cyclohexyl]-2-(p-fluorphenyl)-ethan
- PYP-32:: 2-p-Ethylphenyl-5-propyl-pyrimidin
- PYP-33:: 2-p-Propylphenyl-5-propyl-pyrimidin
- PYP-53:: 2-p-Propylphenyl-5-pentyl-pyrimidin
- PYP-72:: 2-p-Ethylphenyl-5-heptyl-pyrimidin
- PYP-605:: 2-p-Pentyloxyphenyl-5-hexyl-pyrimidin
- PYP-607:: 2-p-Heptyloxyphenyl-5-hexyl-pyrimidin
- PYP-609:: 2-p-Nonyloxyphenyl-5-hexyl-pyrimidin
- PYP-707:: 2-p-Heptyloxyphenyl-5-heptyl-pyrimidin
- PYP-709:: 2-p-Nonyloxyphenyl-5-heptyl-pyrimidin
- PYP-706:: 2-p-Hexyloxyphenyl-5-nonyl-pyrimidin
- PYP-909:: 2-p-Nonyloxyphenyl-5-nonyl-pyrimidin
- PCH-2:: p-trans-4-Ethylcyclohexylbenzonitril
- PCH-3:: p-trans-4-Propylcylohexylbenzonitril
- PCH-4:: p-trans-4-Butylcyclohexylbenzonitril
- PCH-5:: p-trans-4-Pentylcyclohexylbenzonitril
- G9 = EPCH-3:: 1-(trans-4-Propylcyclohexyl)-2-(p-cyanphenyl)-ethan
- G15 = EPCH-5:: 1-(trans-4-Pentylcyclohexyl)-2-(p-cyanphenyl)-ethan
- K6:: 4-Ethyl-4'-cyanbiphenyl
- K9:: 4-Propyl-4'-cyanbiphenyl
- K15:: 4-Pentyl-4'-cyanbiphenyl
- PDX-3:: 2-p-Cyanphenyl-5-propyl-1,3-dioxan
- PDX-4:: 2-p-Cyanphenyl-5-butyl-1,3-dioxan
- PDX-5:: 2-p-Cyanphenyl-5-pentyl-1,3-dioxan
- PCH-3S:: trans-1-p-lsothiocyanatophenyl-4-propylcyclohexan
- ECCP-3:: 1-[trans-4-(trans-4-Propylcyclohexyl)-cyclohexyl]-2-(p-cyanphenyl)-ethan
- ME-2N,F:: p-Ethylbenzoesäure-(4-cyan-3-fluorphenylester)
- ME-3N,F:: p-Propylbenzoesäure-(4-cyan-3-fluorphenylester)
- ME-5N,F:: p-Pentylbenzoesäure-(4-cyan-3-fluorphenylester)
- ME-7N,F:: p-Heptylbenzoesäure-(4-cyan-3-fluorphenylester)
- HP-3N,F:: p-(trans-4-Propylcyclohexyl)-benzoesäure-(4-cyan-3-fluorphenylester)
- HP-4N,F:: p-(trans-4-Butylcyclohexyl)-benzoesäure-(4-cyan-3-fluorphenylester)
- HP-5N,F:: p-(trans-4-Pentylcyclohexyl)-benzoesäure-(4-cyan-3-fluorphenylester)
- PYP-5N,F:: 2-(3-Fluor-4-cyanphenyl)-5-pentyl-pyrimidin
- PYP-6N,F:: 2-(3-Fluor-4-cyanphenyl)-5-hexyl-pyrimidin
- PYP-7N,F:: 2-(3-Fluor-4-cyanphenyl)-5-heptyl-pyrimidin
- PCH-5F:: trans-1-p-Fluorphenyl-4-pentylcyclohexan
- PCH-7F:: trans-1-p-Fluorophenyl-4-hexylcyclohexan trans-1-p-Fluorphenyl-4-heptylcyclohexan
- PTP-34:: 4-Butyl-4'-propyl-tolan
- PTP-35:: 4-Pentyl-4'-propyl-tolan
- PTP-45:: 4-Butyl-4'-pentyl-tolan
- PTP-201:: 4-Ethyl-4'-methoxy-tolan
- PTP-102:: 4-Methyl-4'-ethoxy-tolan
- CPTP-301:: 4-(trans-4-Propylcyclohexyl)-4'-methoxy-tolan
- CPTP-302:: 4-(trans-4-Propylcyclohexyl)-4'-ethoxy-tolan
- CPTP-303:: 4-(trans-4-Propylcyclohexyl)-4'-propoxy-tolan
- BCH-32:: 4-Ethyl-4'-(trans-4-propylcyclohexyl)-biphenyl
- BCH-52:: 4-Ethyl-4'-(trans-4-pentylcyclohexyl)-biphenyl
- BCH-59:: 4-Nonyl-4'-(trans-4-pentylcyclohexyl)-biphenyl
- BCH-52F:: 4-Ethyl-4'-(trans-4-pentylcyclohexyl)-2'-fluorbiphenyl
- I52:: 1-(trans-4-Pentylcyclohexyl)-2-(4'-ethyl-2'-fluorbiphenyl-4-yl)-ethan
- CBC-33:: 4,4'-Bis-(trans-4-propylcyclohexyl)-biphenyl
- CBC-35: (= CBC-53): 4-(trans-4-Pentylcyclohexyl)-4'-(trans-4-propylcyclohexyl)-biphenyl
- CBC-55:: 4,4'-Bis-(trans-4-pentylcyclohexyl)-biphenyl
- CBC-33F:: 4,4-Bis-(trans-4-propylcyclohexyl)-2-fluorbiphenyl
- CBC-35F: (= CBC-53F): 4-(trans-4-Pentylcyclohexyl)-4'-(trans-4-propylcyclohexyl)-2-fluorbiphenyl
- CBC-55F:: 4,4'-Bis-(trans-4-pentylcyclohexyl)-2-fluorbiphenyl.
- D-301:: trans-4-Propylcyclohexancarbonsäure-(p-methoxyphenylester)
- D-401:: trans-4-Butylcyclohexancarbonsäure-(p-methoxyphenylester)
- D-501:: trans-4-Pentylcyclohexancarbonsäure-(p-methoxyphenylester)
- D-302:: trans-4-Propylcyclohexancarbonsäure-(p-ethoxyphenylester)
- D-402:: trans-4-Butylcyclohexancarbonsäure-(p-ethoxyphenylester)
- PYP-3N.F:: 2-(3-Fluor-4-cyanphenyl)-5-propylpyrimidin
- CBC-44:: 4,4'-bis-(trans-4-Butylcyclohexyl)-biphenyl
- PYP-3F:: 2-(p-Fluorphenyl)-5-propylpyrimidin
- PYP-5F:: 2-(p-Fluorphenyl)-5-pentylpyrimidin
- PYP-35:: 2-(p-Pentylphenyl)-5-propylpyrimidin
- PYP-53:: 2-(p-Propylphenyl)-5-pentylpyrimidin
- PYP-50CF₃:: 2-(p-Trifluormethoxyphenyl)-5-pentylpyrimidin
- PYP-70CF₃:: 2-(p-Trifluormethoxyphenyl)-5-heptylpyrimidin
- I 32:: 1-(trans-4-Propylcyclohexyl)-2-(4'-ethyl-2'-fluorbiphenyl-4-yl)-ethan
- I 35:: 1 -(trans-4-Propylcyclohexyl)-2-(4'-pentyl-2'-fluorbiphenyl-4-yl)-ethan
- ME-2N:: p-Ethylbenzoesäure-(p-cyanphenylester)
- ME-3N:: p-Propylbenzoesäure-(p-cyanphenylester)
- ME-4NF:: p-Butylbenzoesäure-(3-fluor-4-cyanphenylester)
- BCH-5:: 4-Cyan-4'-(trans-4-pentylcyclohexyl)-biphenyl
- BCH-30CF₃ :: 4-Trifluormethoxy-4'(trans-4-propylcyclohexyl)-biphenyl
- BCH-50CF₃:: 4-Trifluomethoxy-4'(trans-4-pentylcyclohexyl)-biphenyl
- CCP-30CF₃:: 1-[trans-4-(trans-4-propylcyclohexyl)-cyclohexyl)-4-trifluormethoxybenzol
- ECCP-30CF₃ :: 1-[trans-4-(trans-4-Propylcyclohexyl)-cyclohexyl]-2-p-trifluormethoxyphenyl)-ethan
- ECCP-50CF₃:: 1-[trans-4-(trans-4-Pentylcyclohexyl)-cyclohexyl]-2-(p-trifluormethoxyphenyl)-ethan
- ECCP-3F.F:: 1-[trans-4-(trans-4-Propylcyclohexyl)-cyclohexyl]-2-(3,4-difluorphenyl)-ethan
- CCPC-33:: trans-4-(trans-4-Propylcyclohexyl)-cyclohexancarbonsäure-p-(trans-4-propylcyclohexyl)-phenylester
- CCPC-34:: trans-4-(trans-4-(Propylcyclohexyl)-cyclohexancarbonsäure-p-(trans-4-butylcyclohexyl)-phenylester
- CCPC-35:: trans-4-(trans-4-Propylcyclohexyl)-cyclohexancarbonsäure-p-(trans-4-pentylcyclohexyl)-phenylester
- K12:: 4-Butyl-4'-cyanbiphenyl
- K18:: 4-Hexyl-4'-cyanbiphenyl
- T15:: 4-p-Cyanphenyl-4'-pentylbiphenyl
- DR-31:: trans-4-Propylcyclohexancarbonsäure-(2-methylpyridin-5-ylester)
- DR-41:: trans-4-Butylcyclohexancarbönsäure-(2-methylpyridin-5-ylester)
- DR-51:: trans-4-Pentylcyclohexancarbonsäure-(2-methylpyridin-5-ylester)
- CP-33F:: trans-4-(trans-4-Propylcyclohexyl)-cyclohexancarbonsäure-(2-fluor-4-propylphenylester)
- CP-35F:: trans-4-(trans-4-Propylcyclohexyl)-cyclohexancarbonsäure-(2-fluor-4-pentylphenylester)
- CP-55F:: trans-4-(trans-4-Pentylcyclohexyl)-cyclohexancarbonsäure-(2-fluor-4-pentylphenylester)
- HP-2N.F.: p-(trans-4-Ethylcyclohexyl)-benzoesäure-(3-fluor-4-cyanphenylester)
- EHP-3F.F:: p-(trans-4-Propylcyclohexylethyl)-benzoesäure-(3,4-difluorphenylester)
- PCH-50CF₂:: trans-1-p-(Difluormethoxyphenyl)-4-pentylcyclohexan
- PCH-7:: trans-1-p-(Cyanphenyl)-4-heptylcyclohexan
- PDX-2:: 2-p-Cyanphenyl-5-ethyl-1,3-dioxan
- OS-35:: trans-4-Propylcyclohexancarbonsäure-(trans-4-pentylcyclohexylester)
- CCH-3:: trans,trans-4-Propylcyclohexylcyclohexan-4'-carbonitril
- M3:: 4-Methoxy-4'-cyanbiphenyl
- M9:: 4-Propoxy-4'-cyanbiphenyl
- T-3FN:: 4-(p-Cyanphenyl)-2-fluor-4'-propylbiphenyl

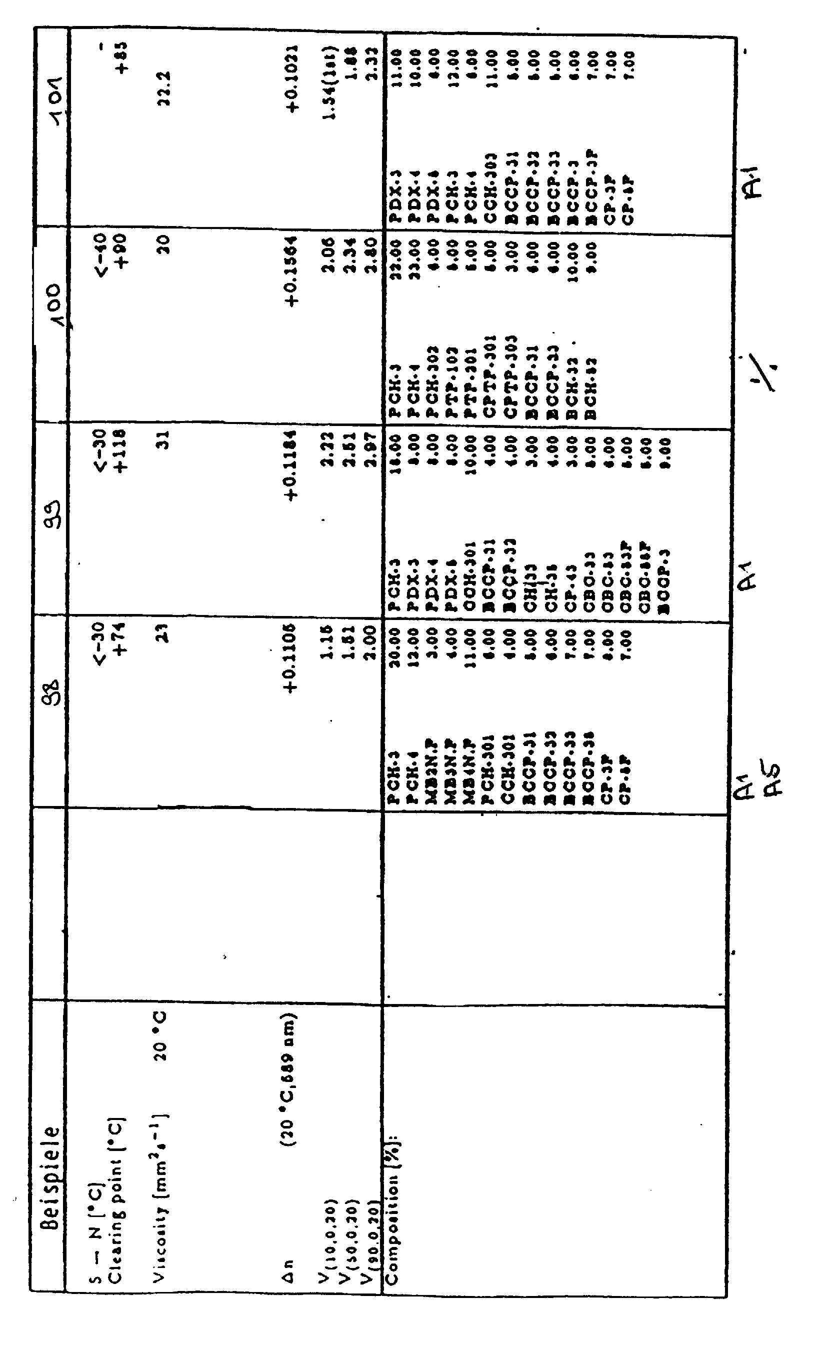

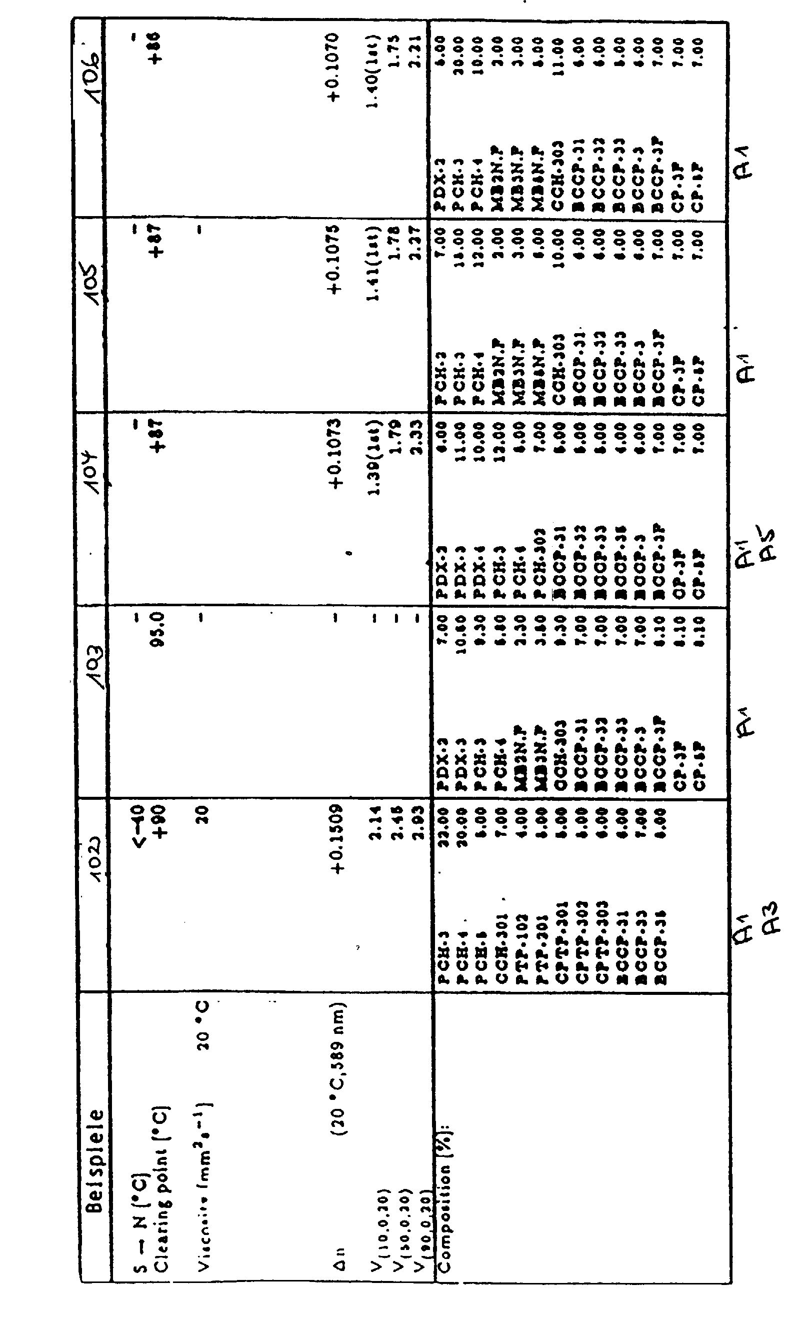

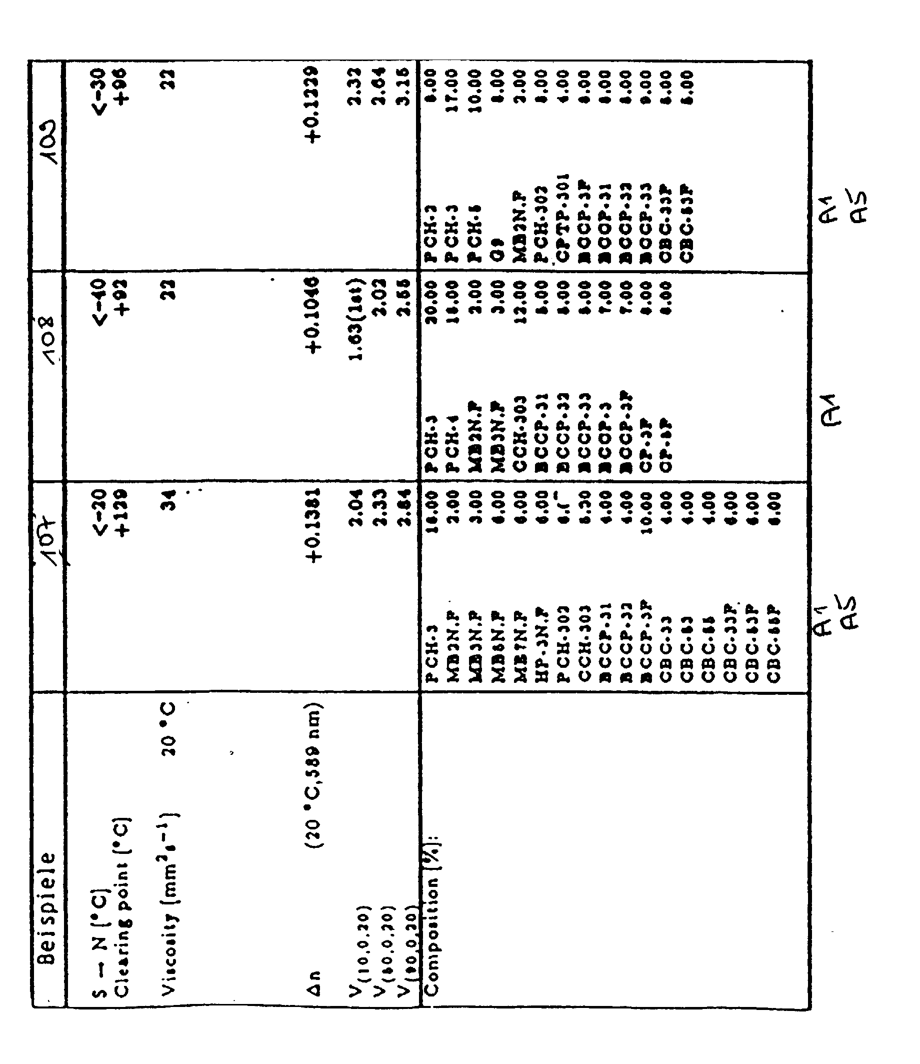

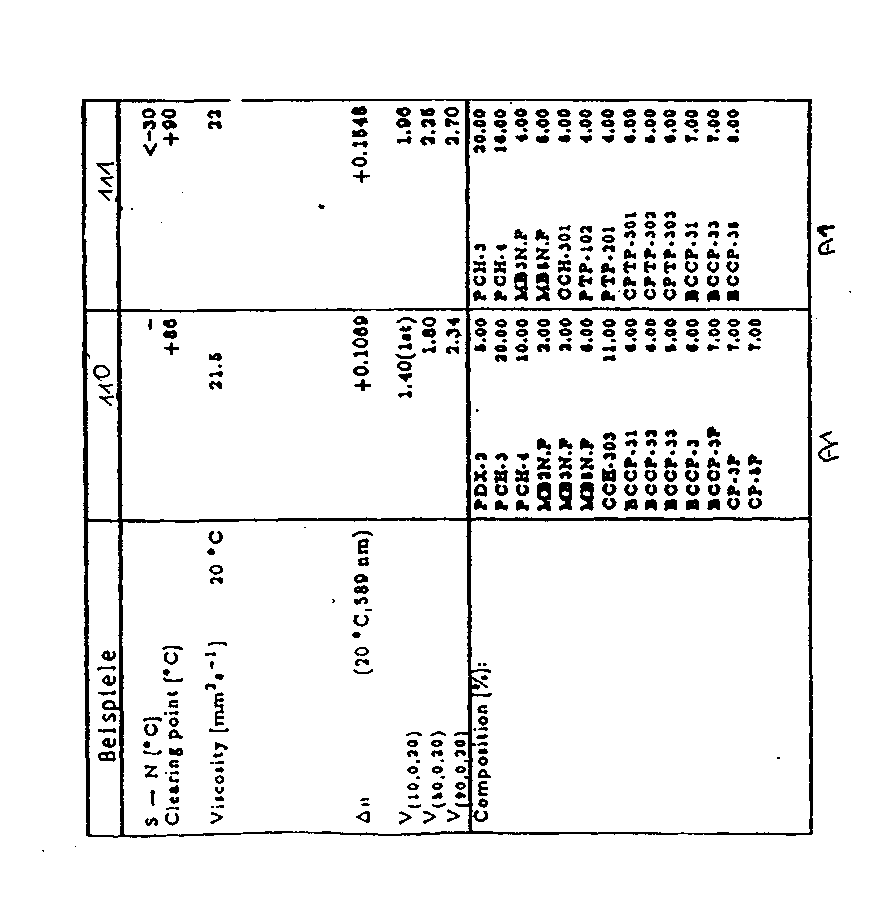

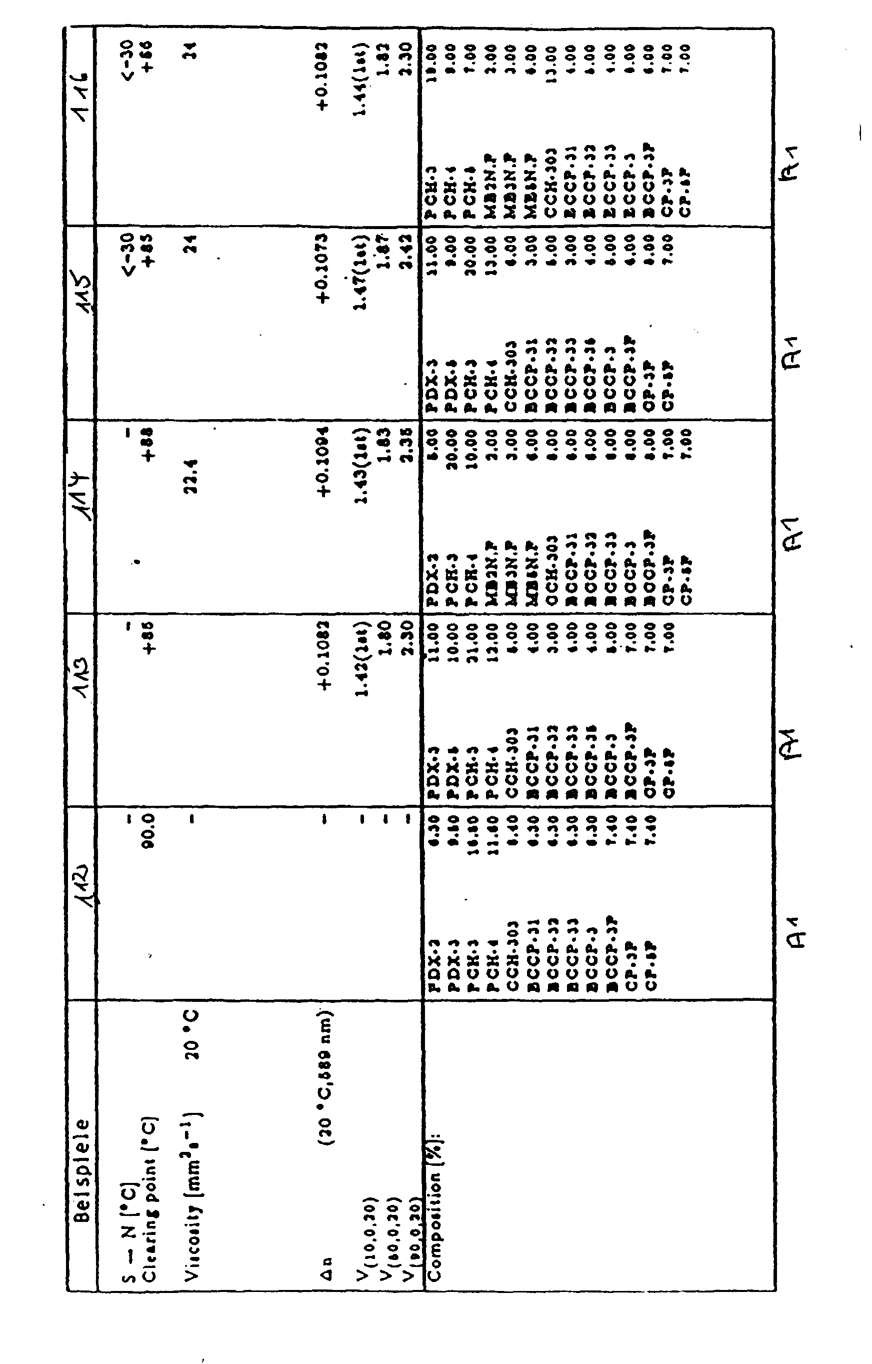

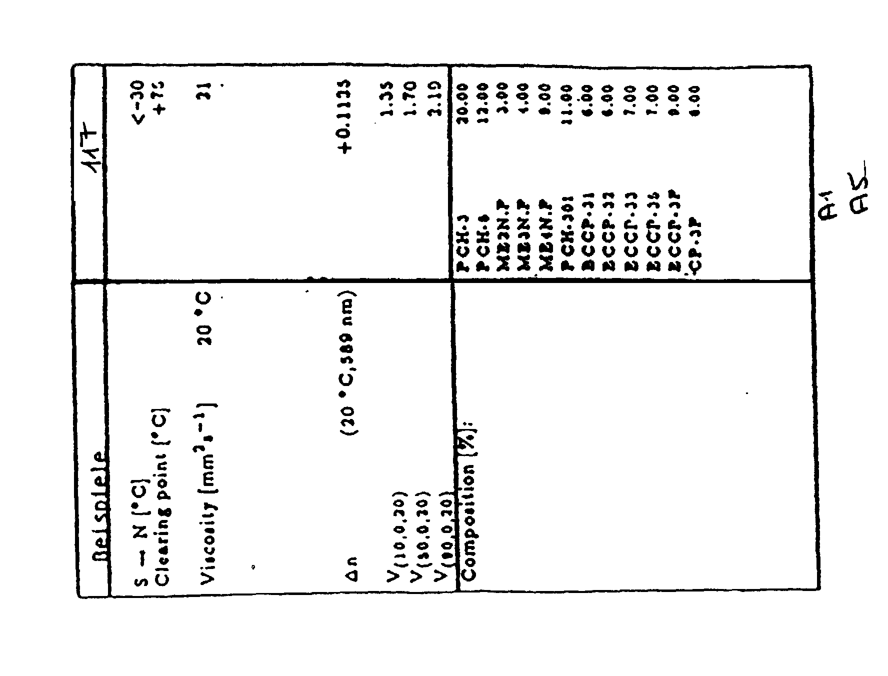

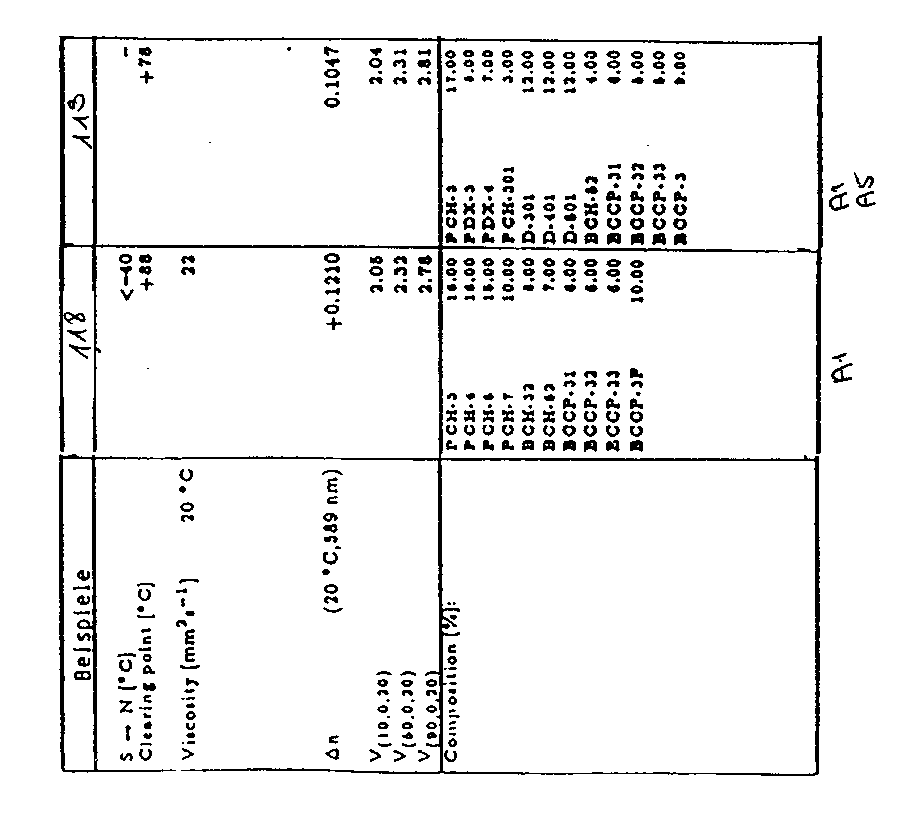

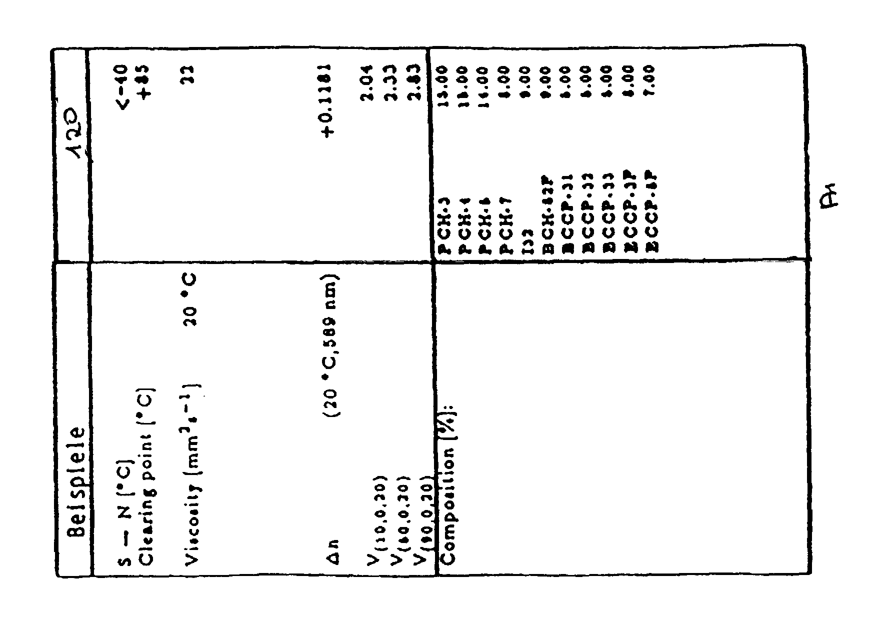

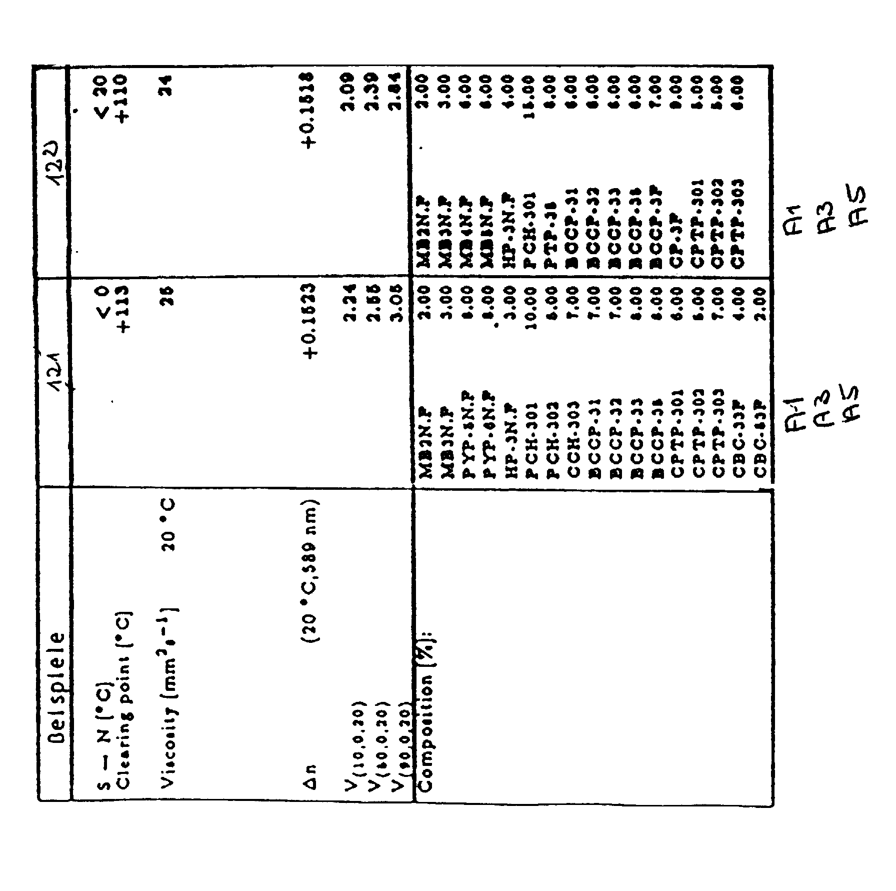

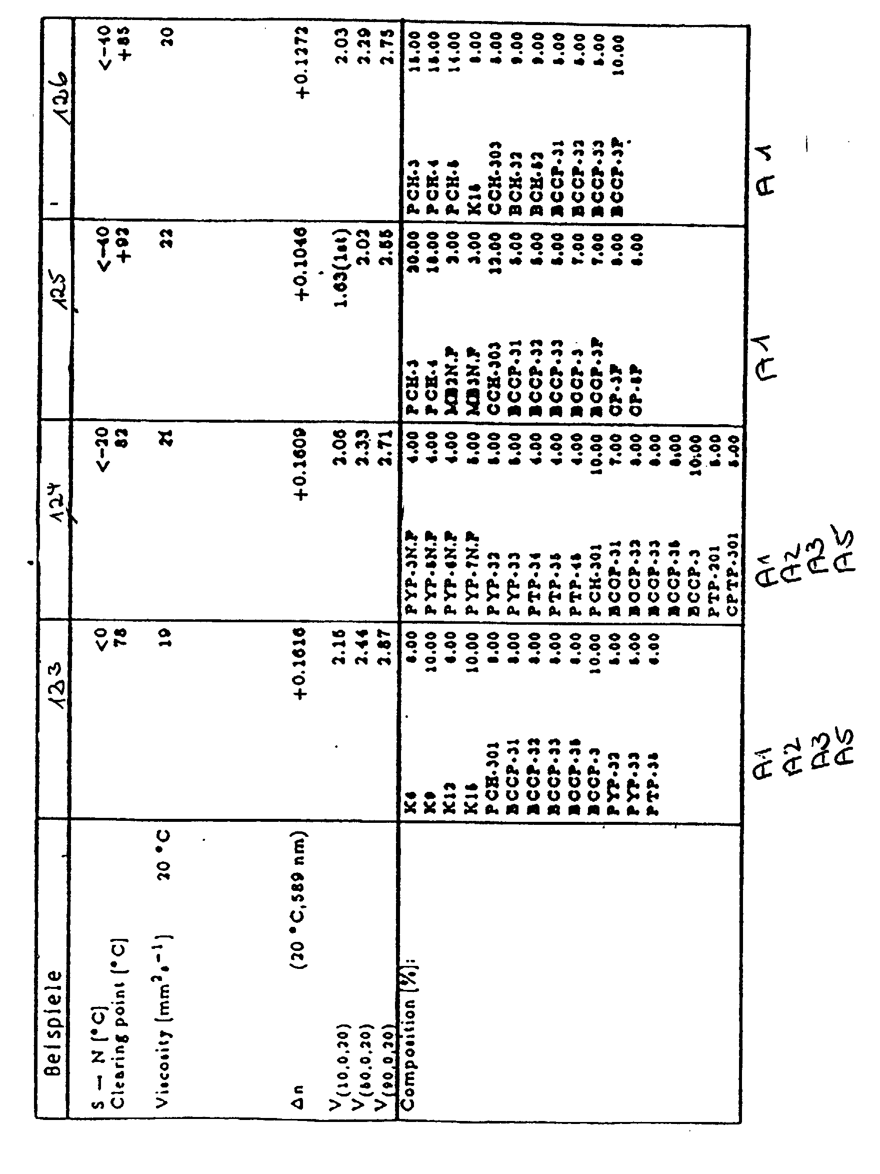

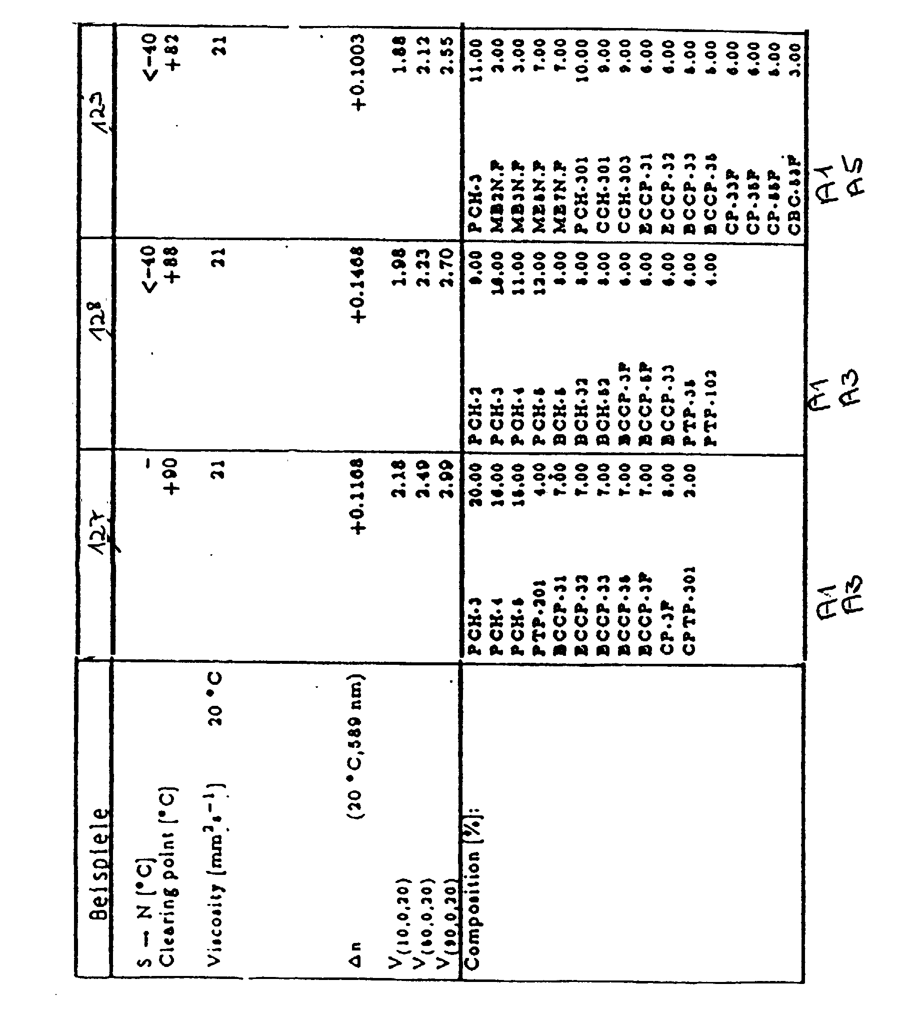

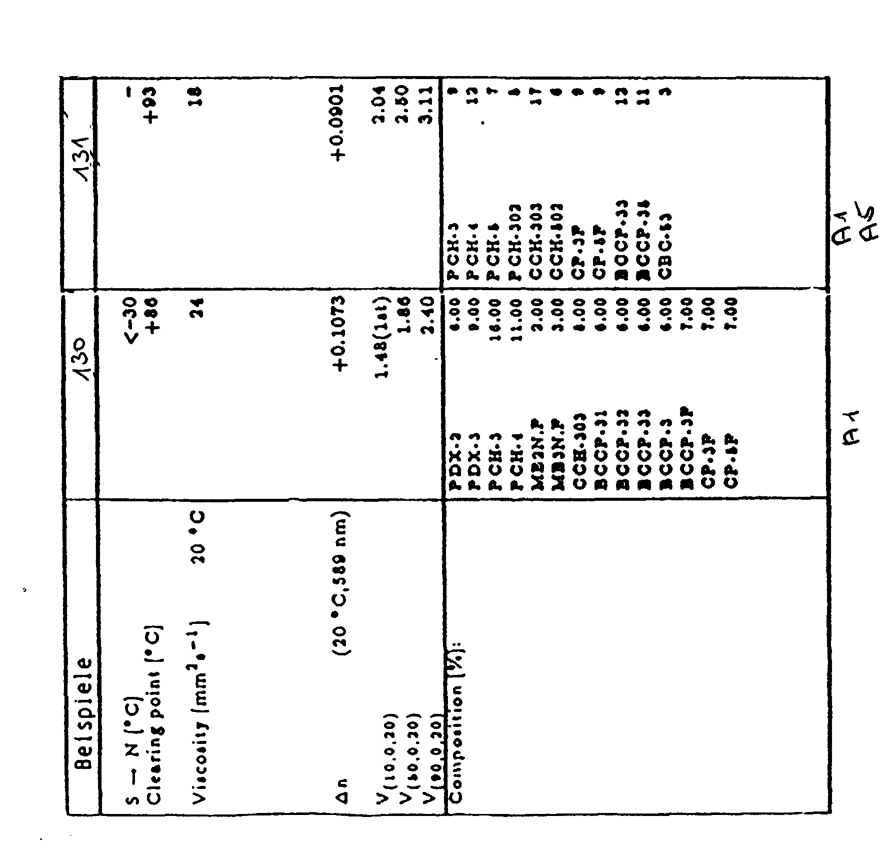

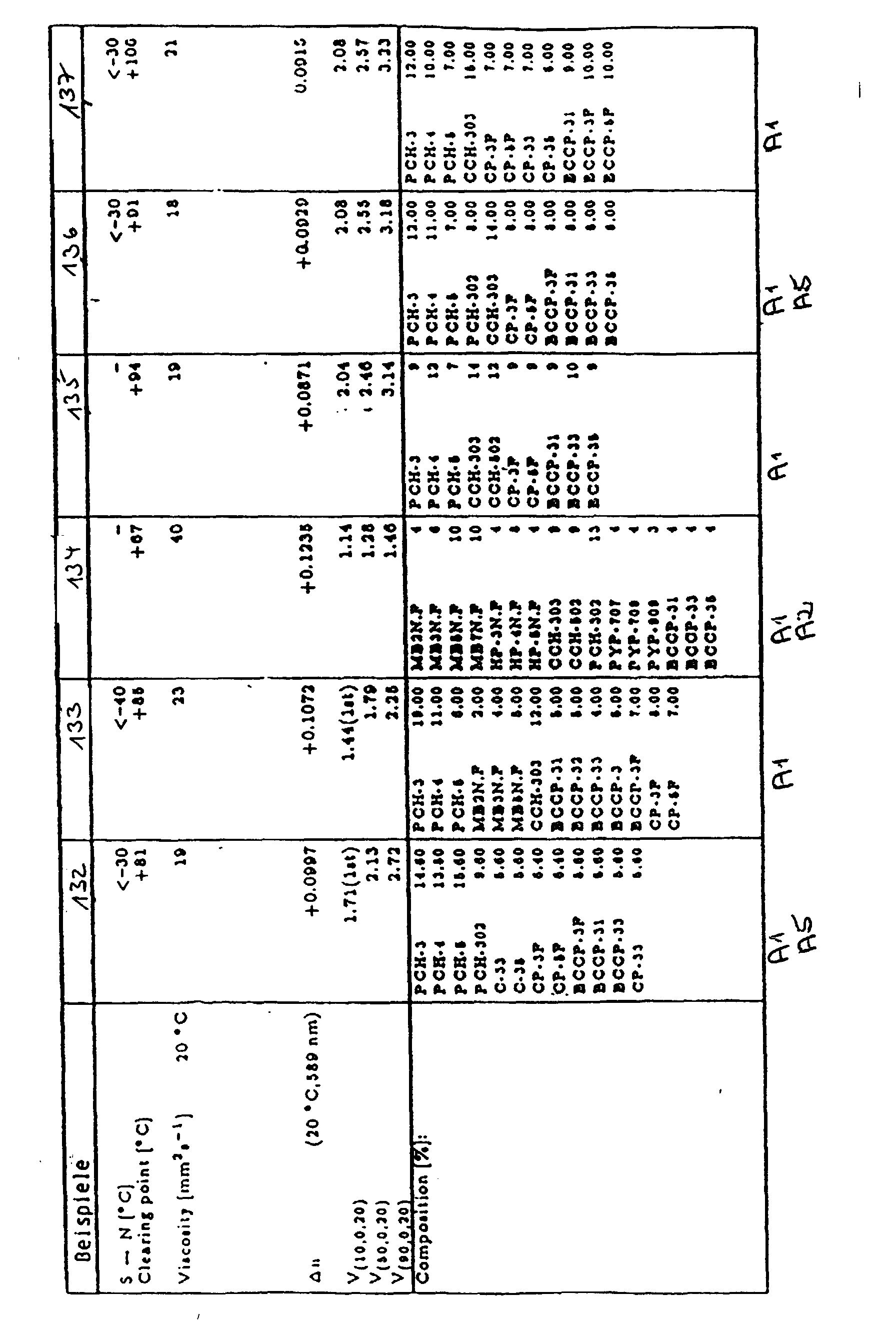

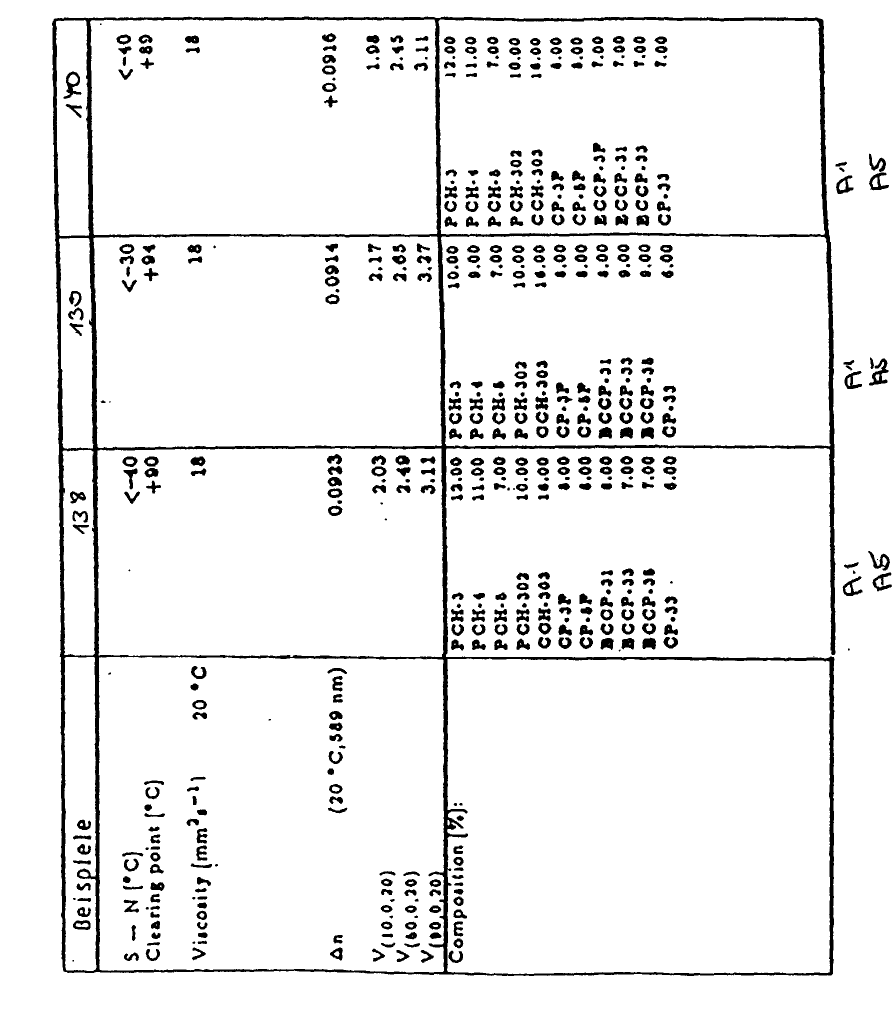

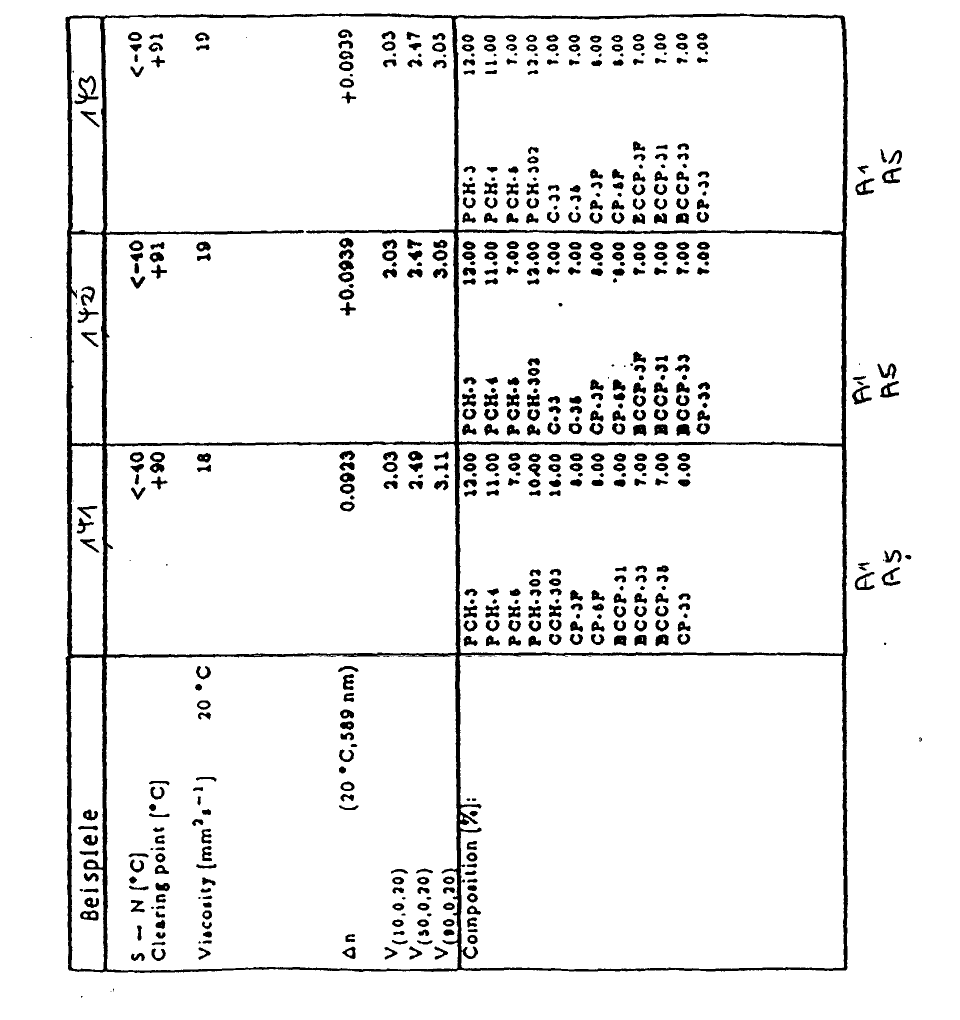

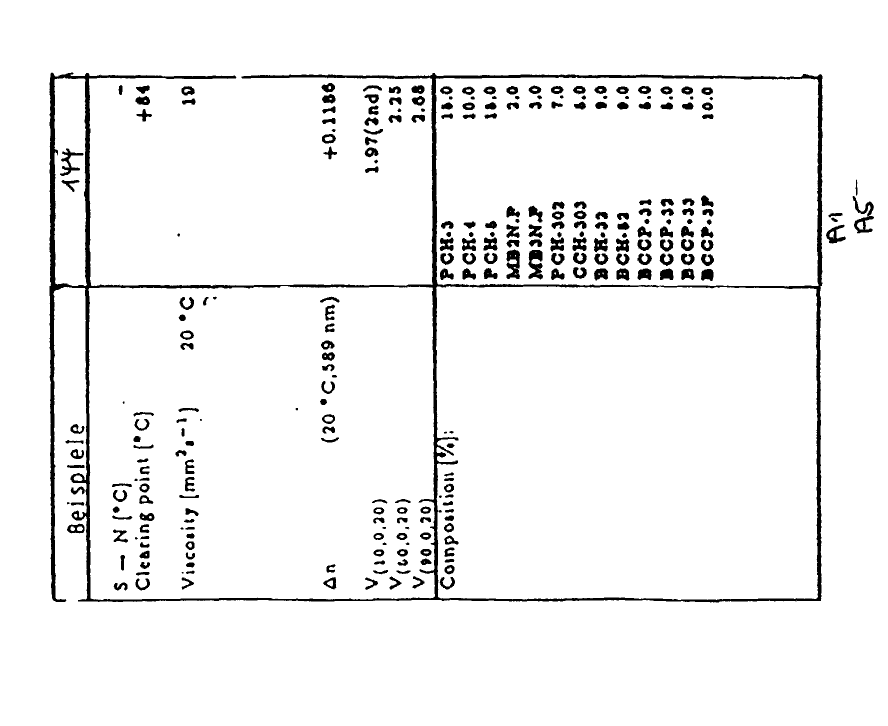

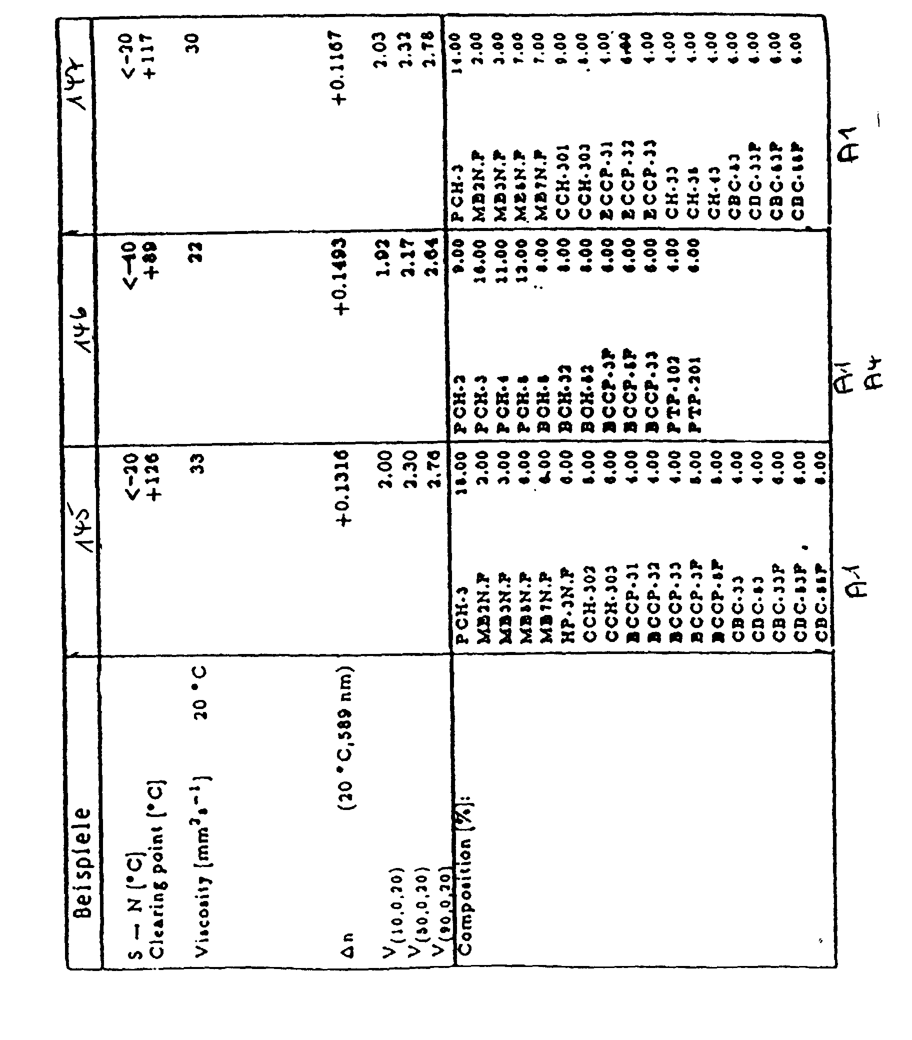

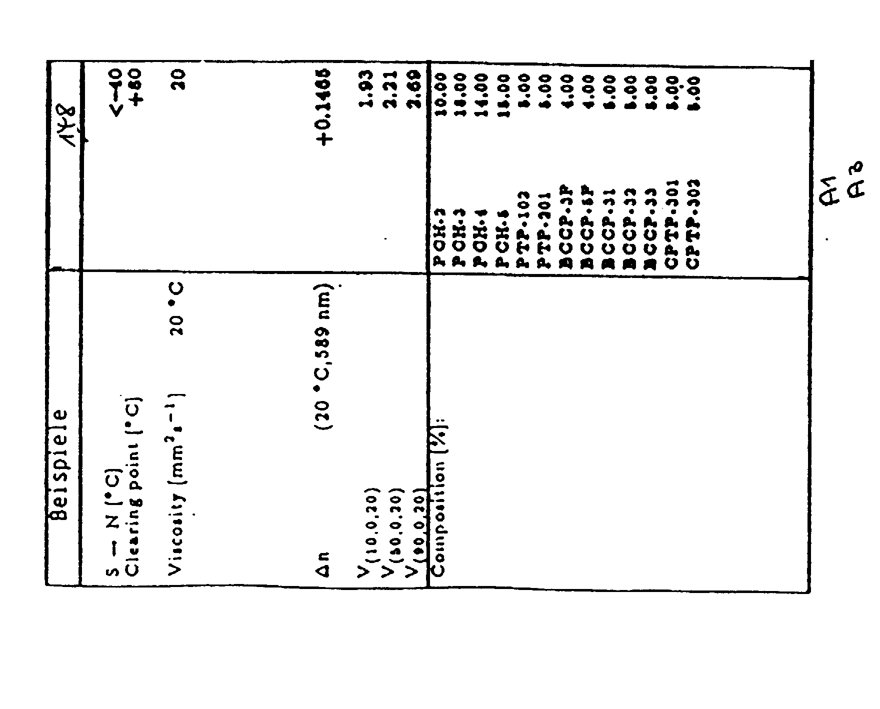

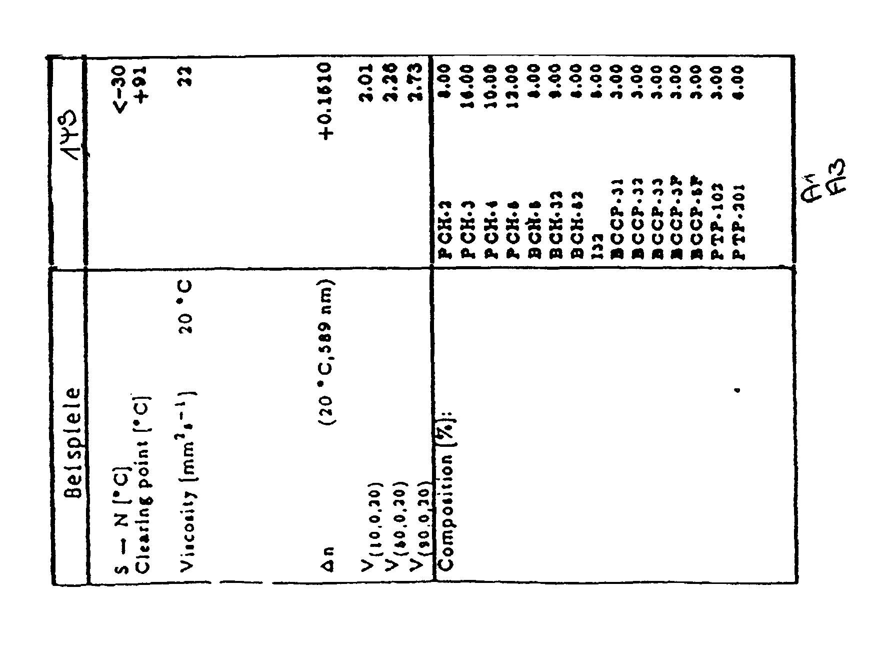

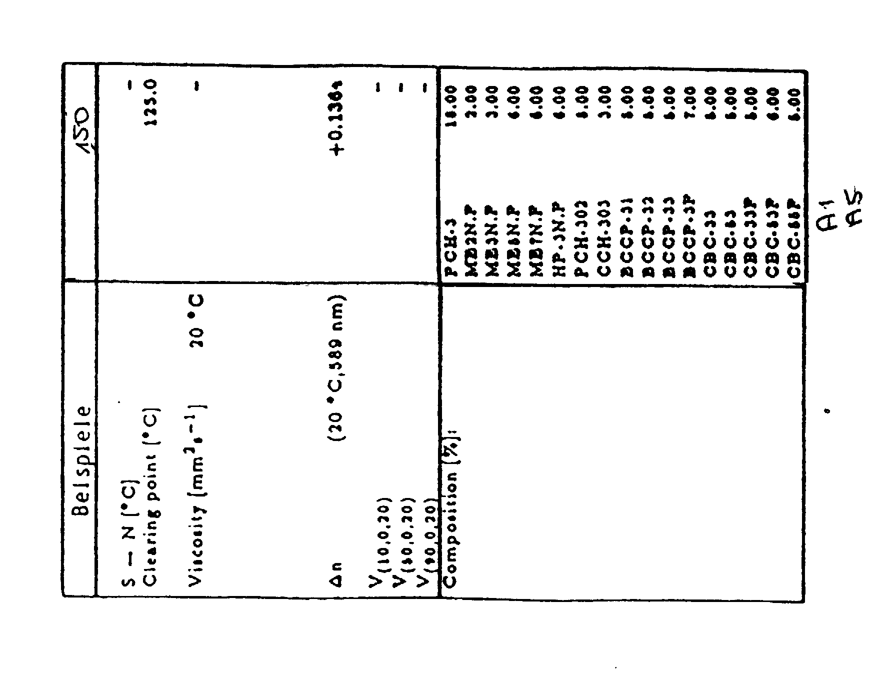

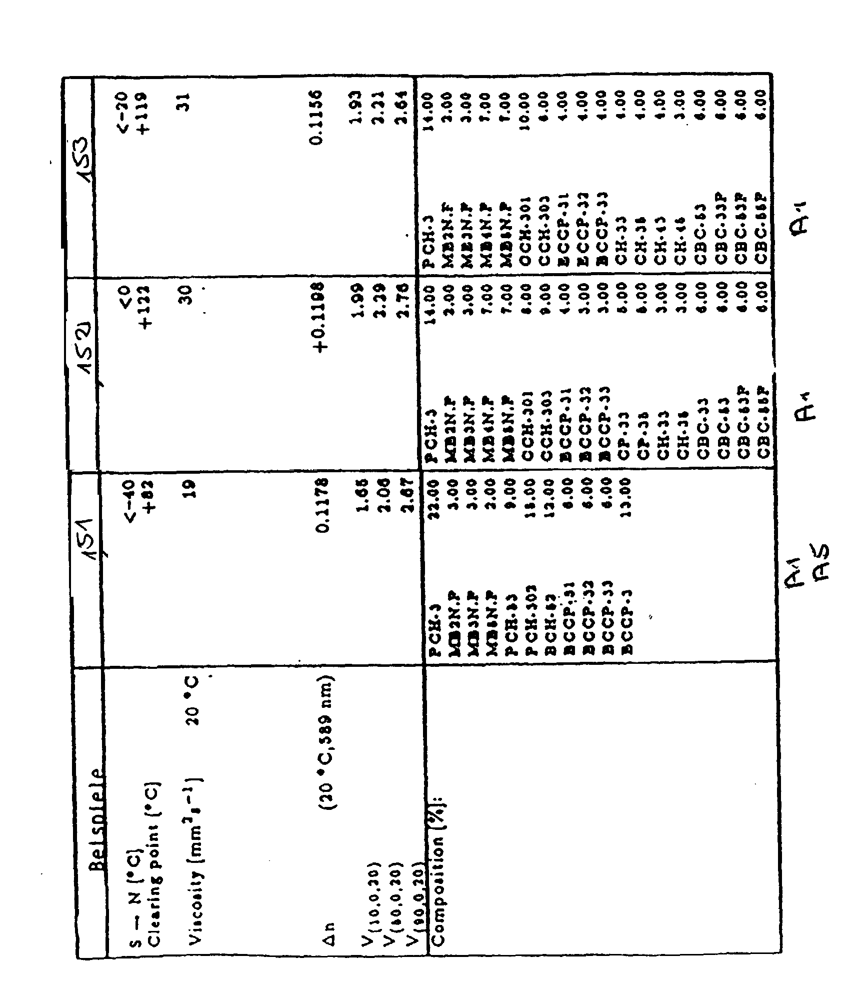

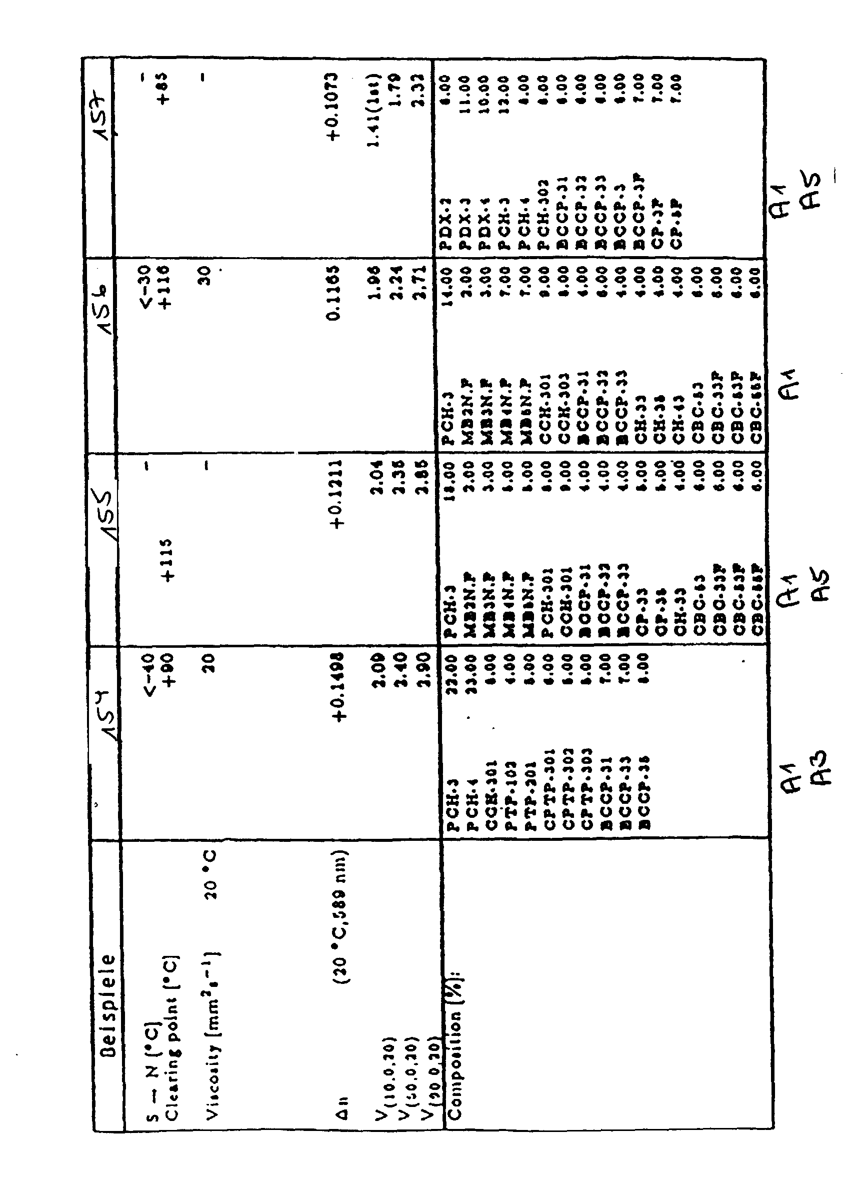

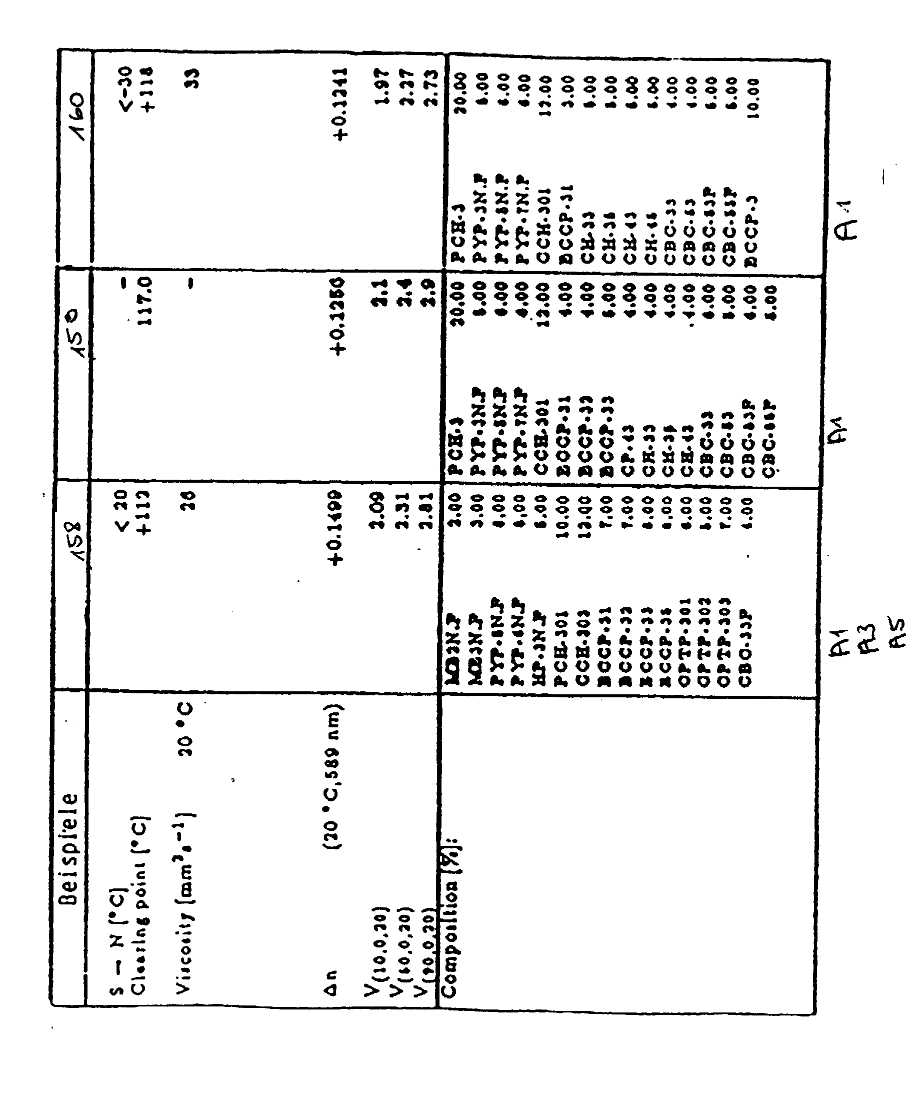

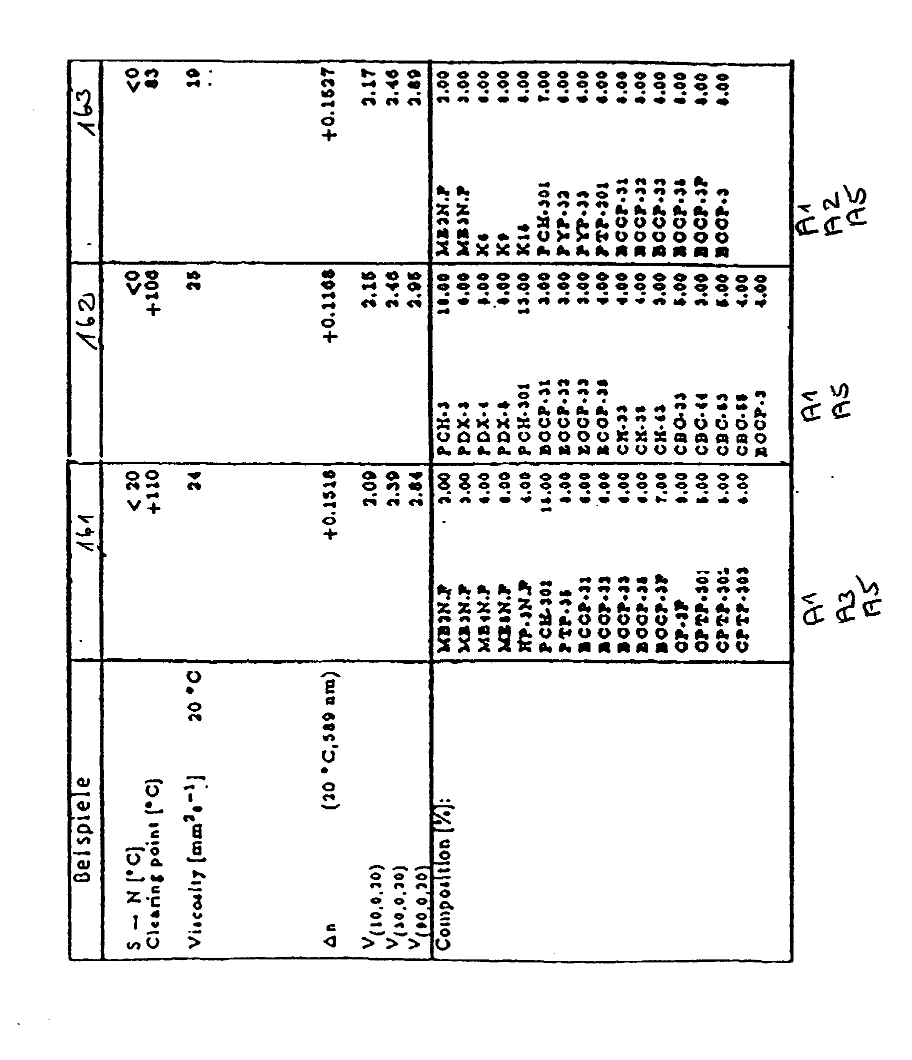

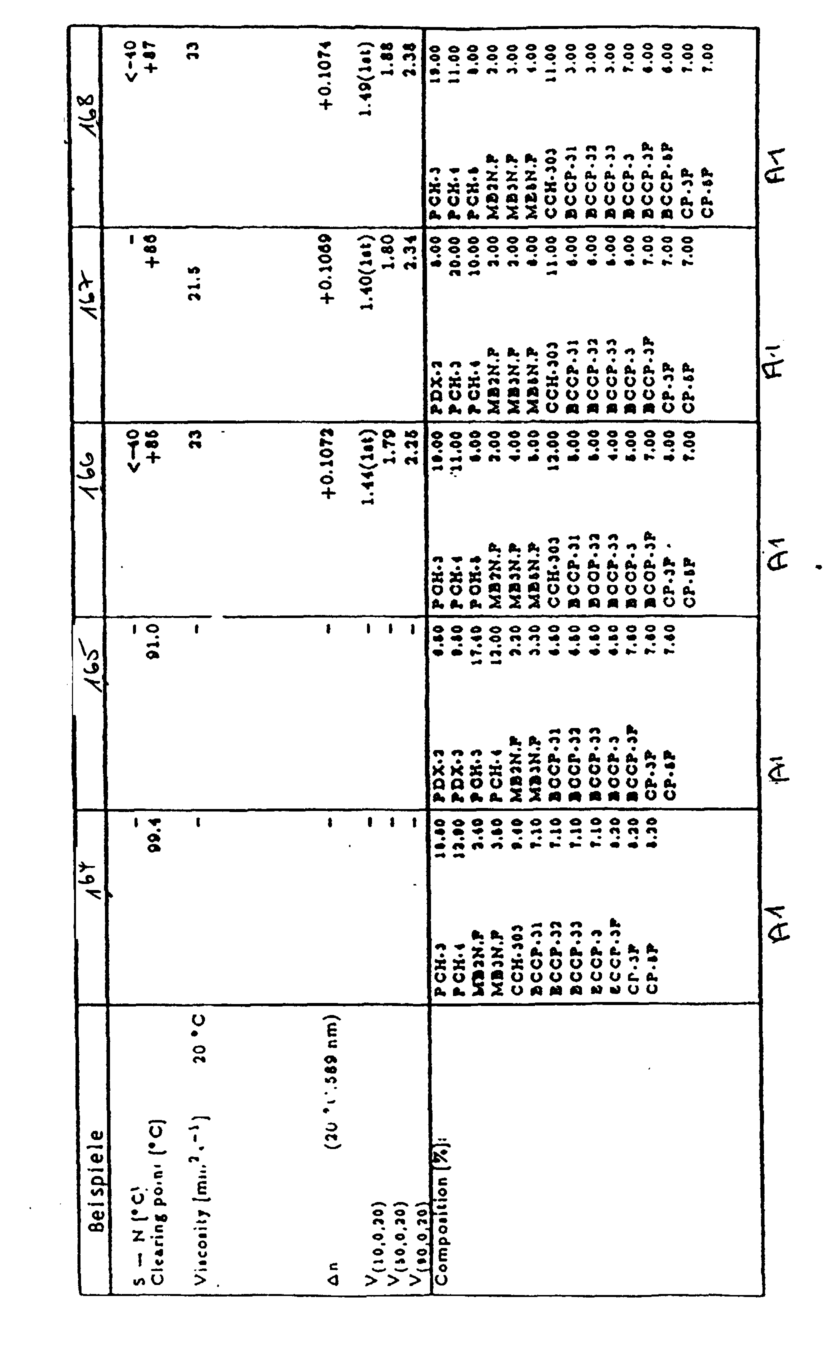

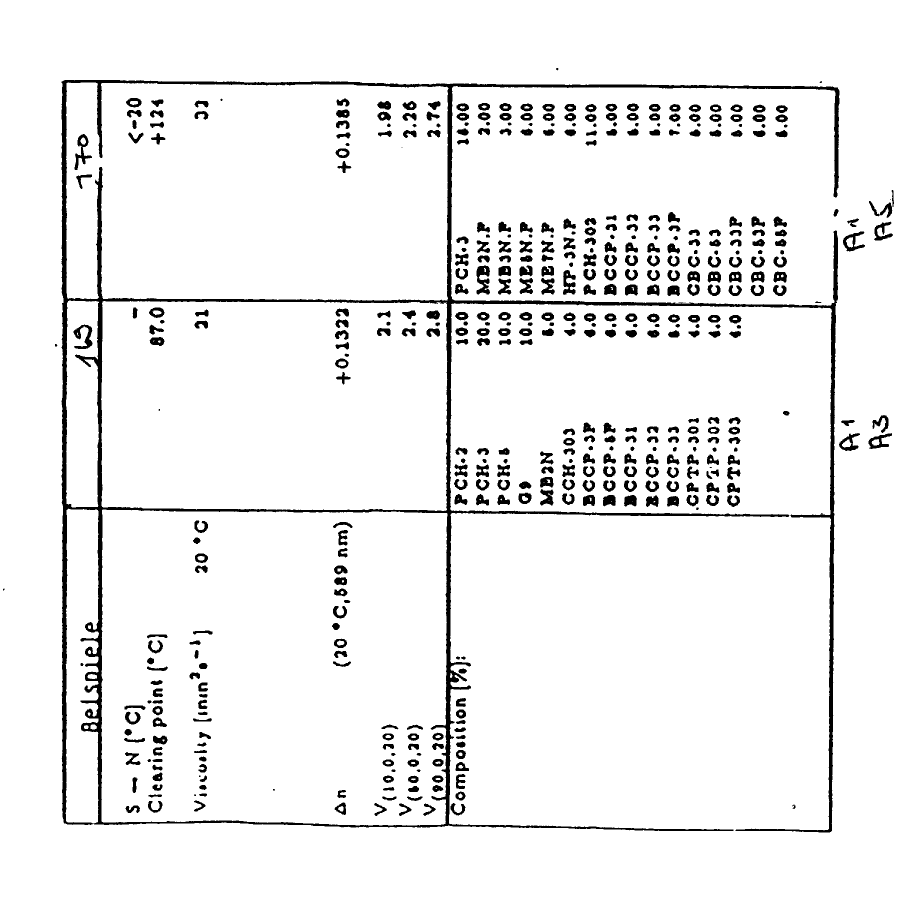

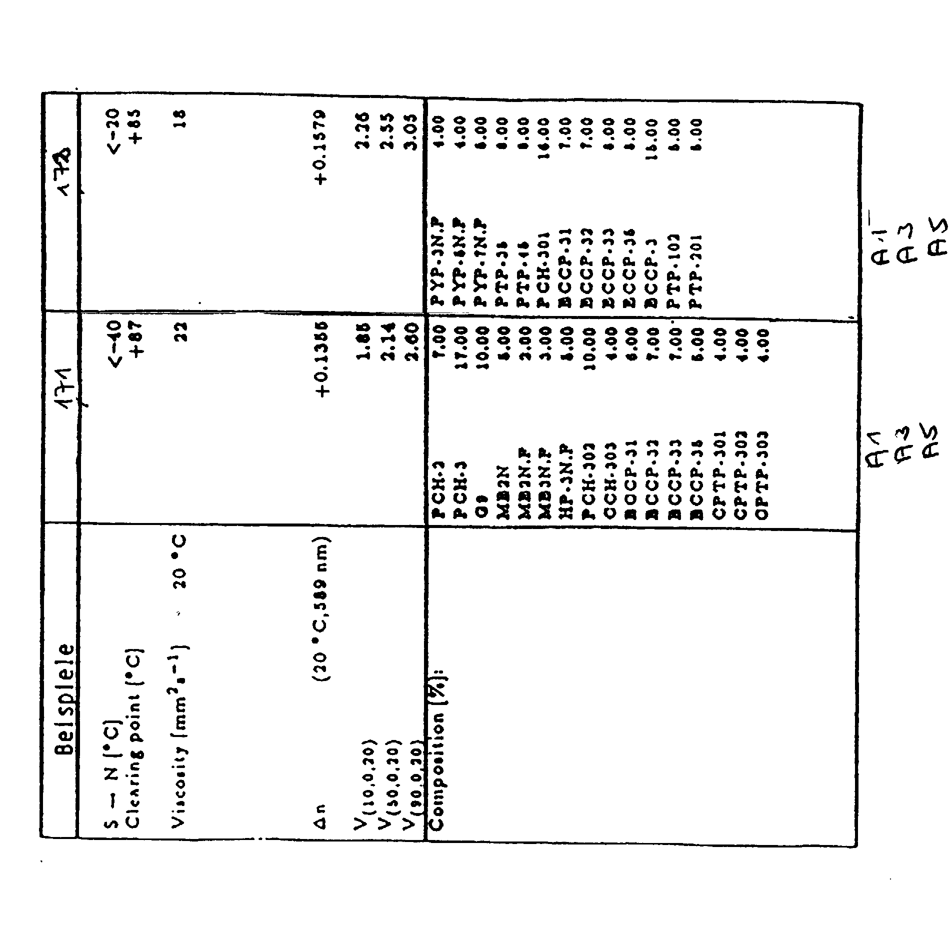

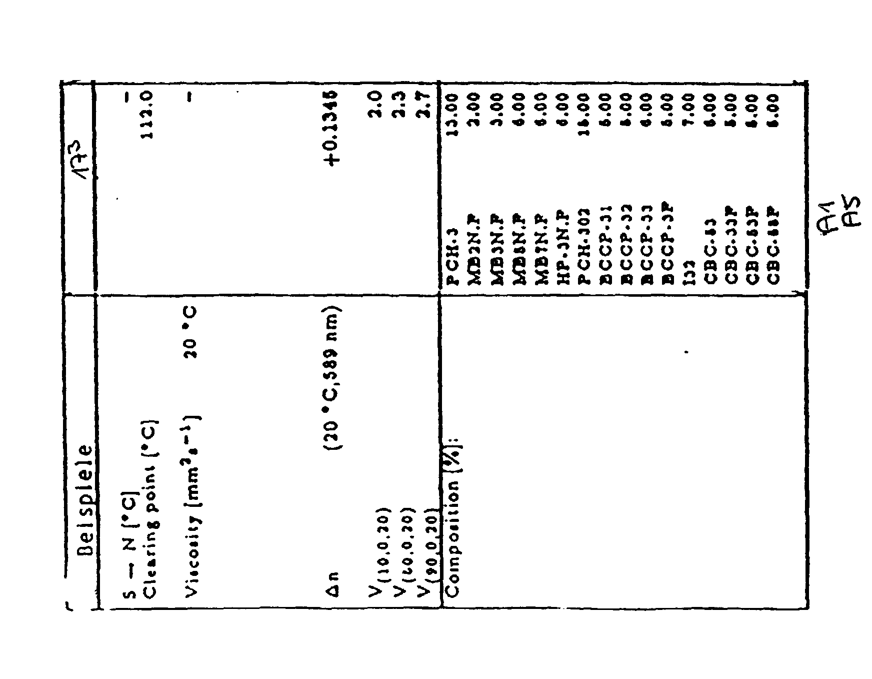

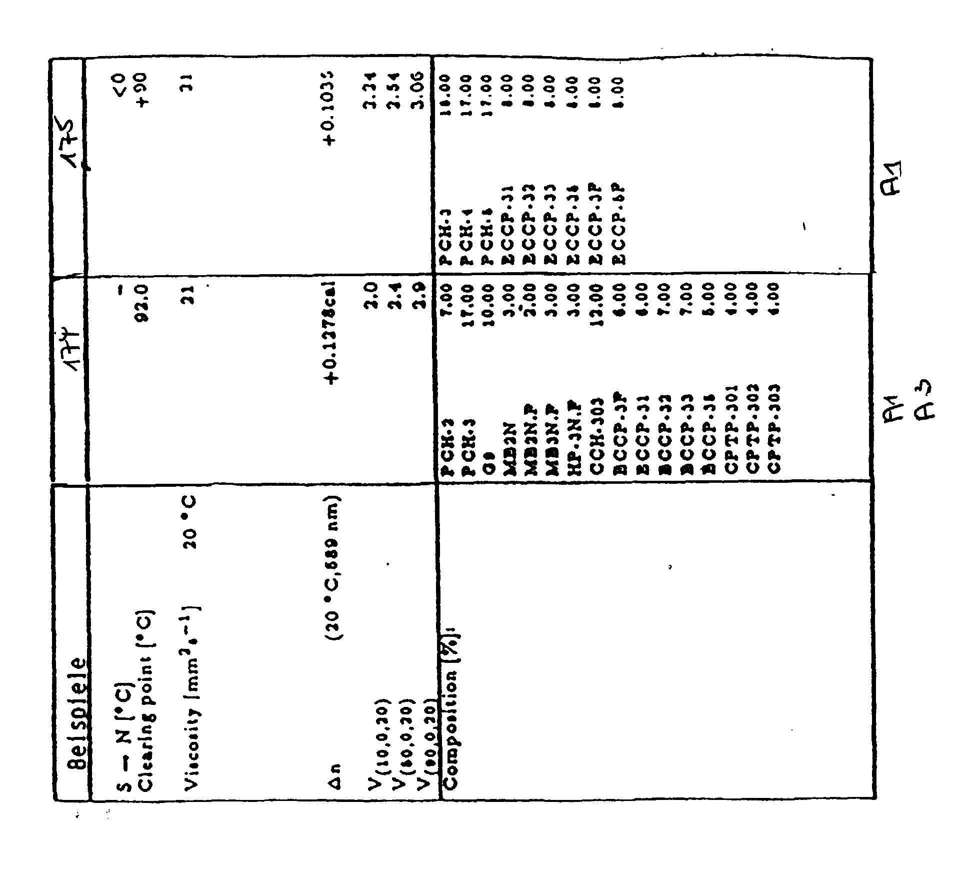

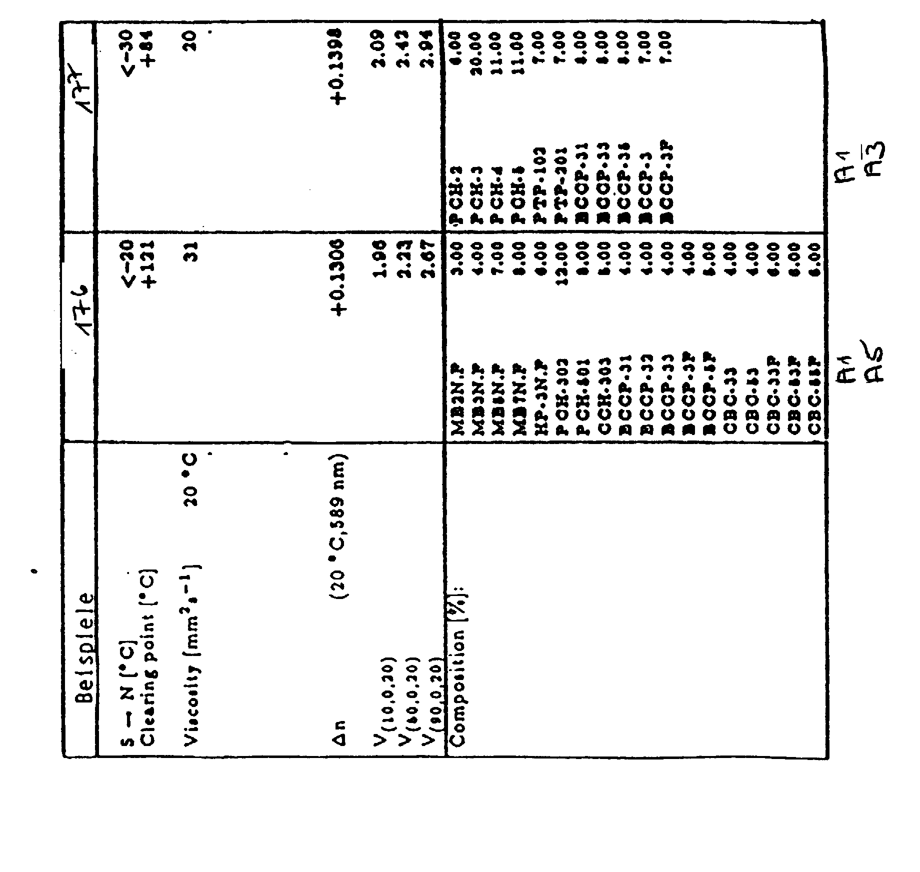

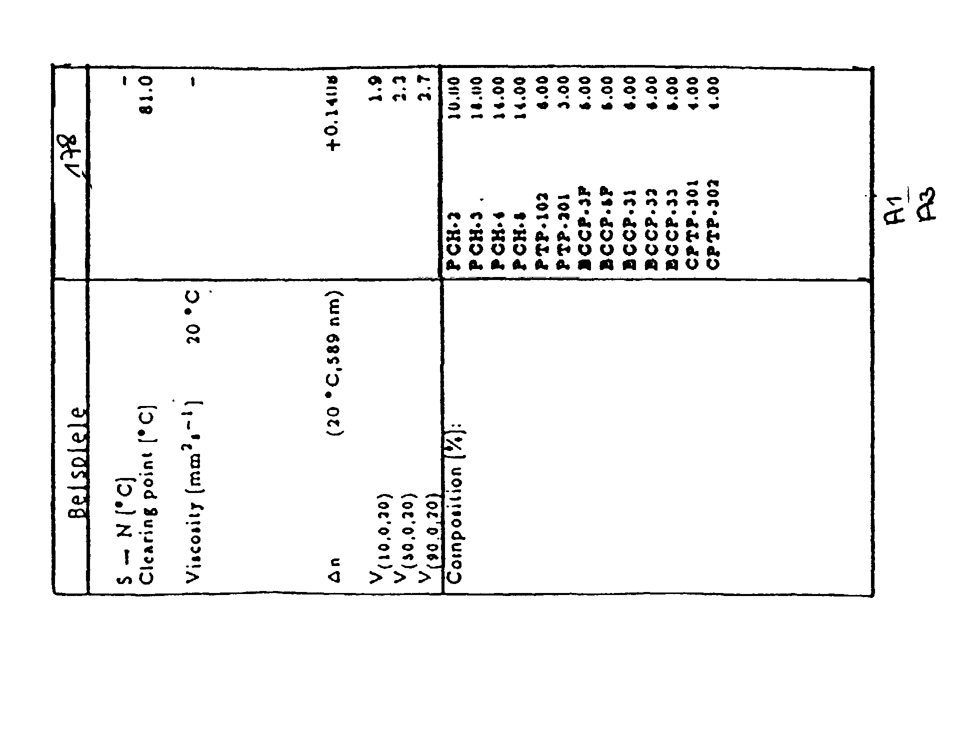

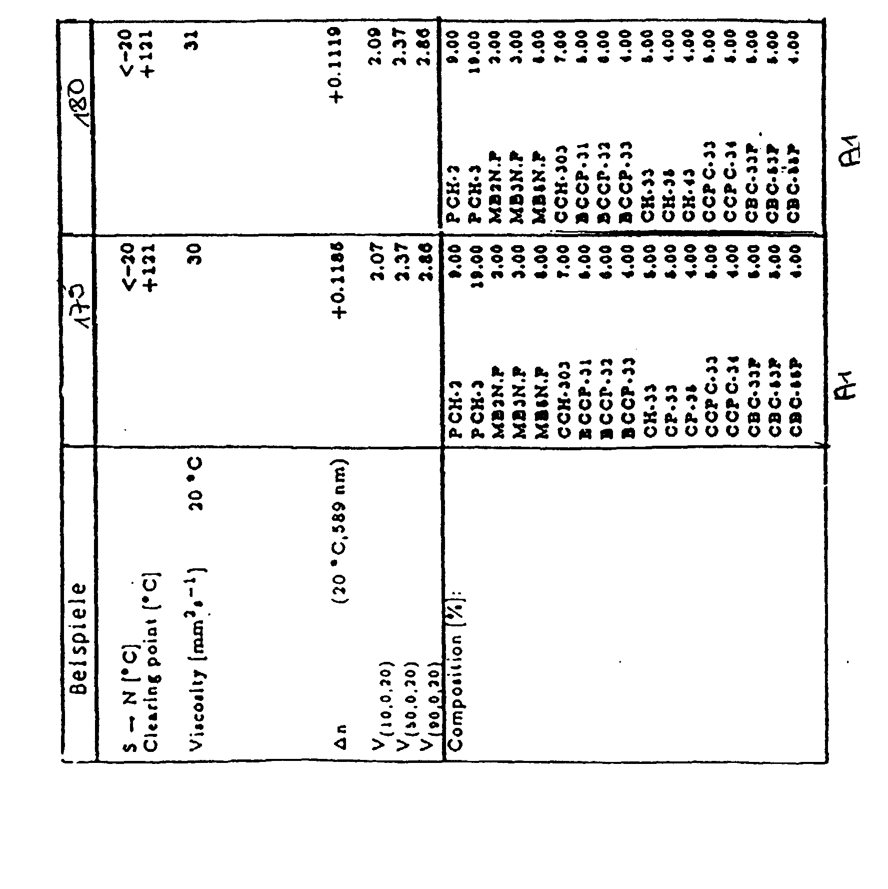

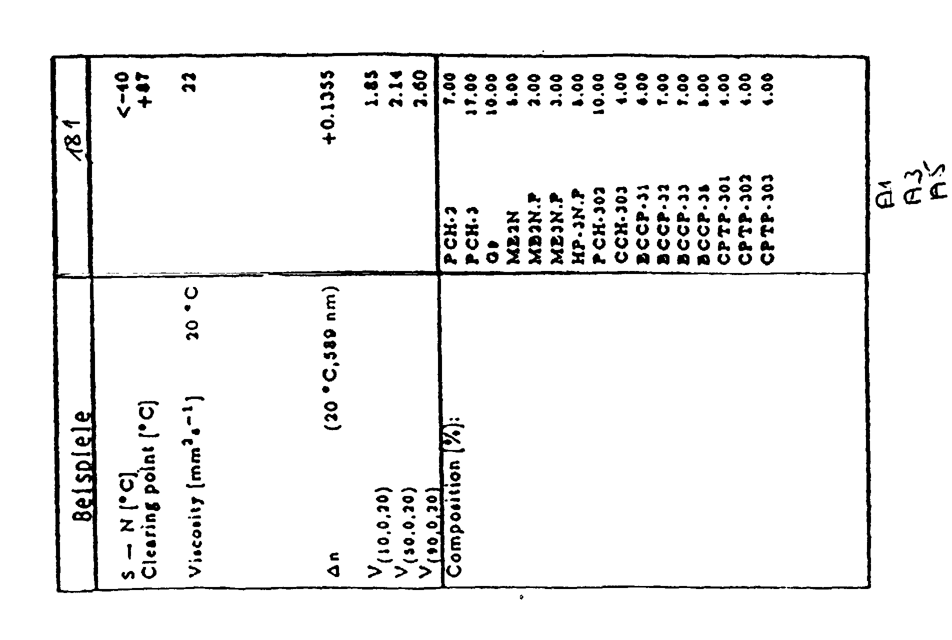

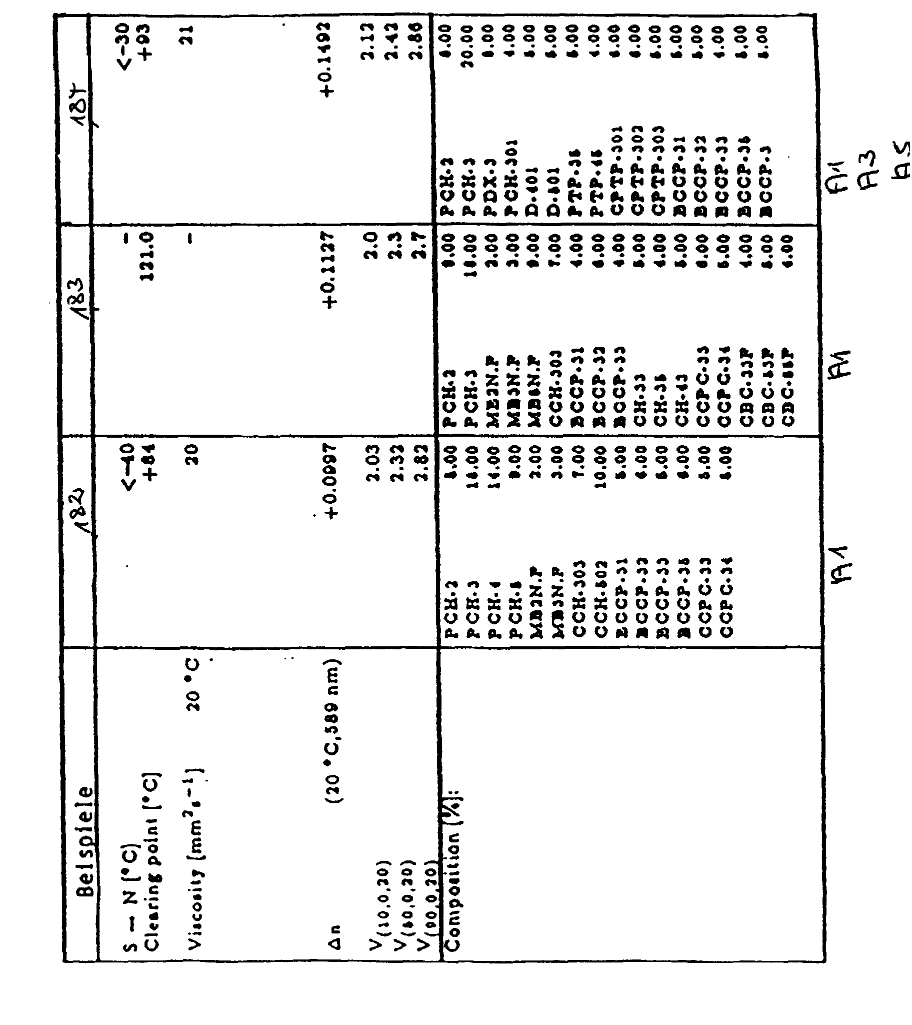

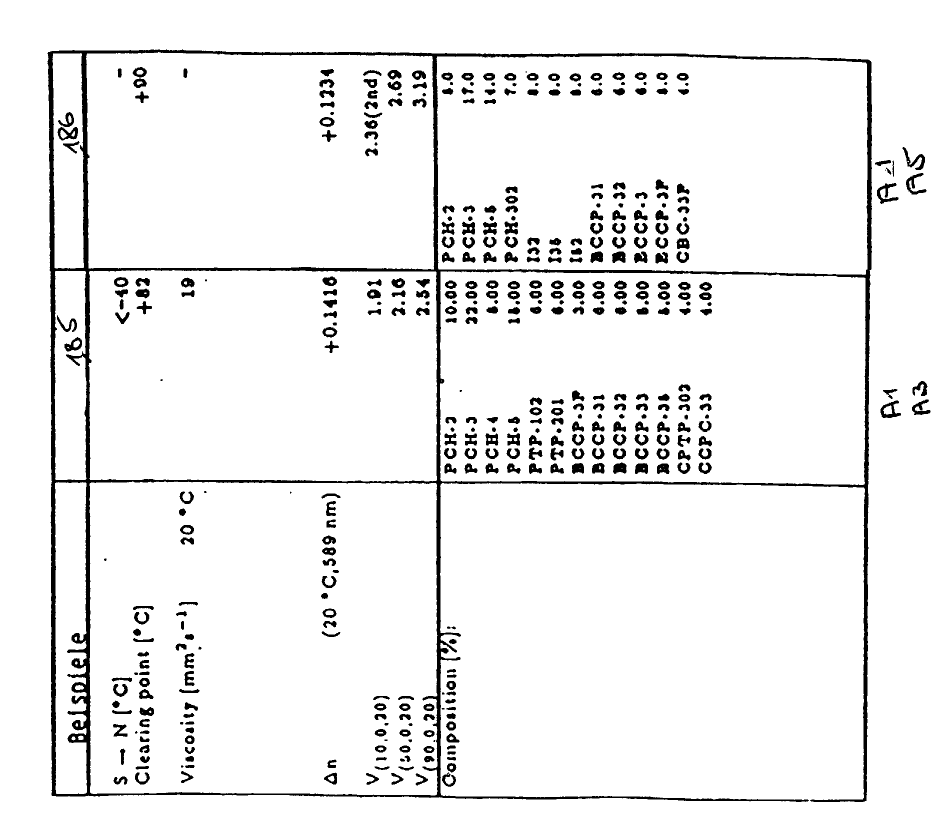

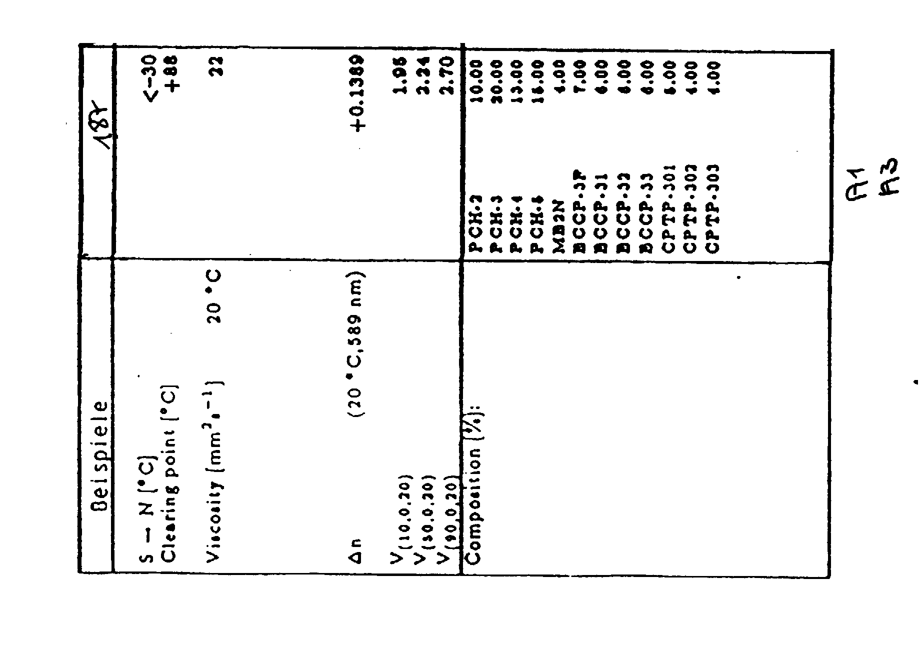

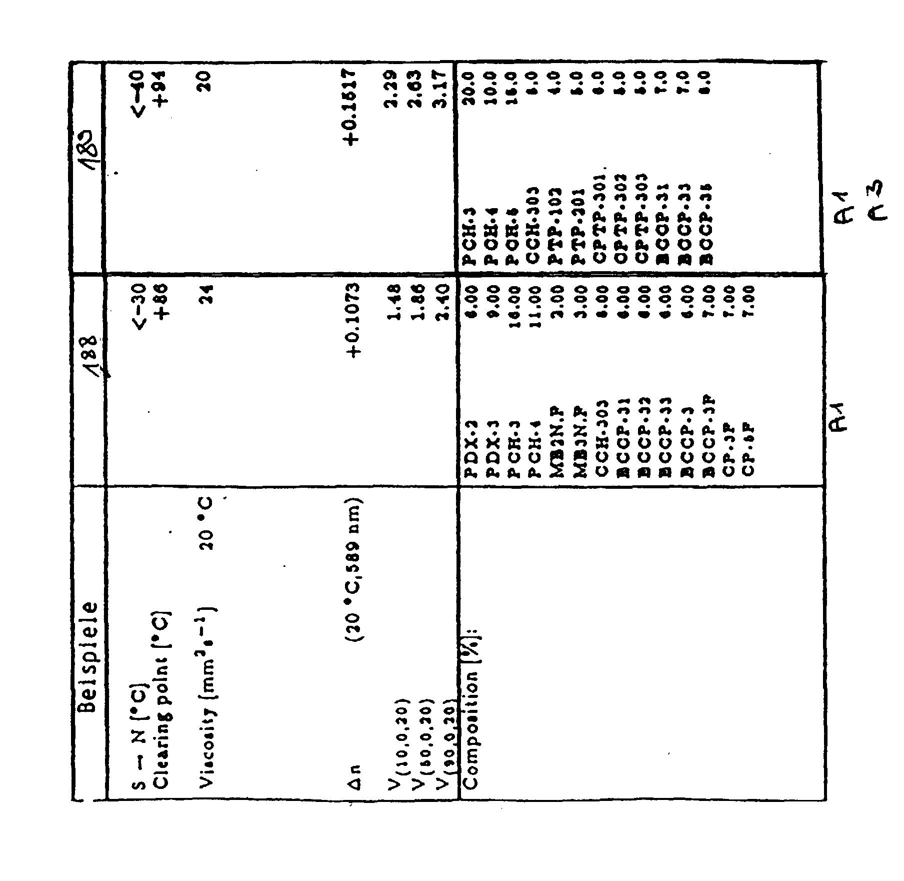

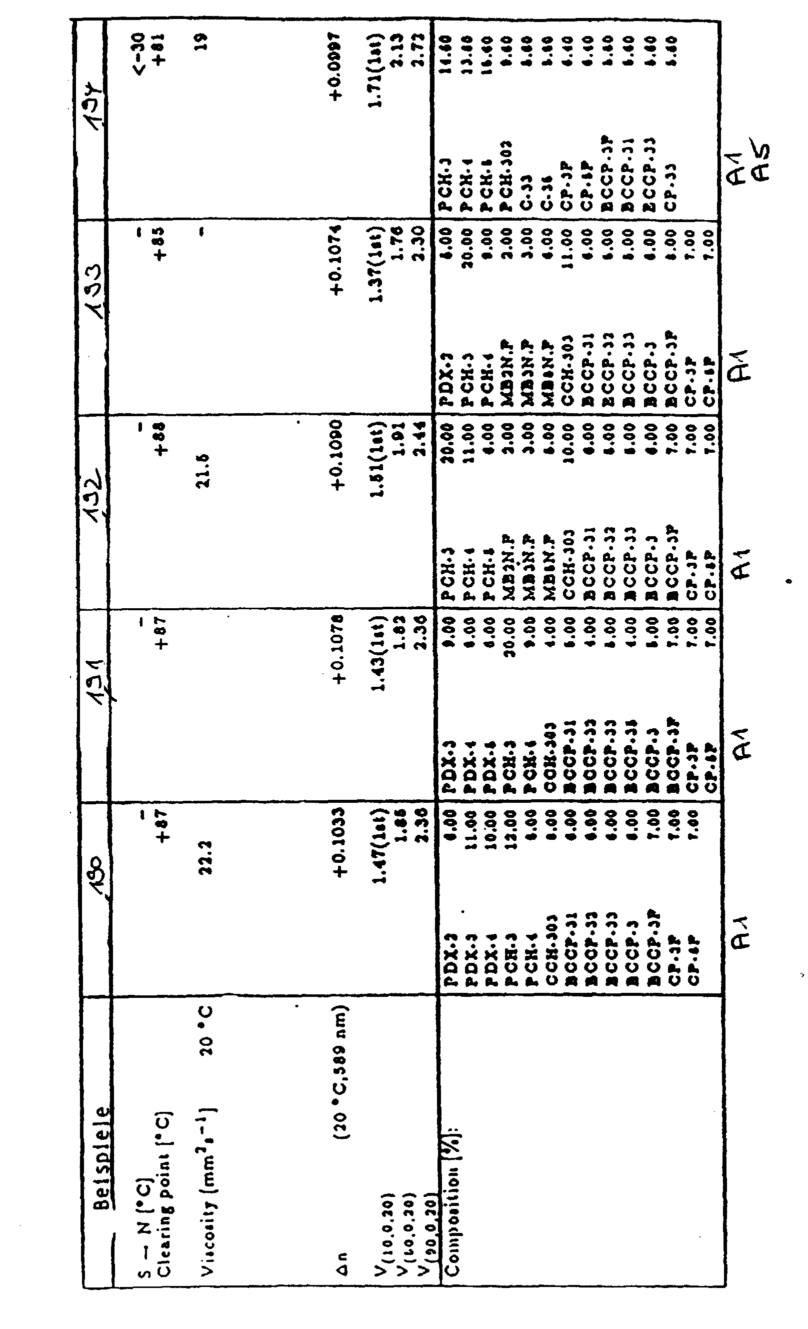

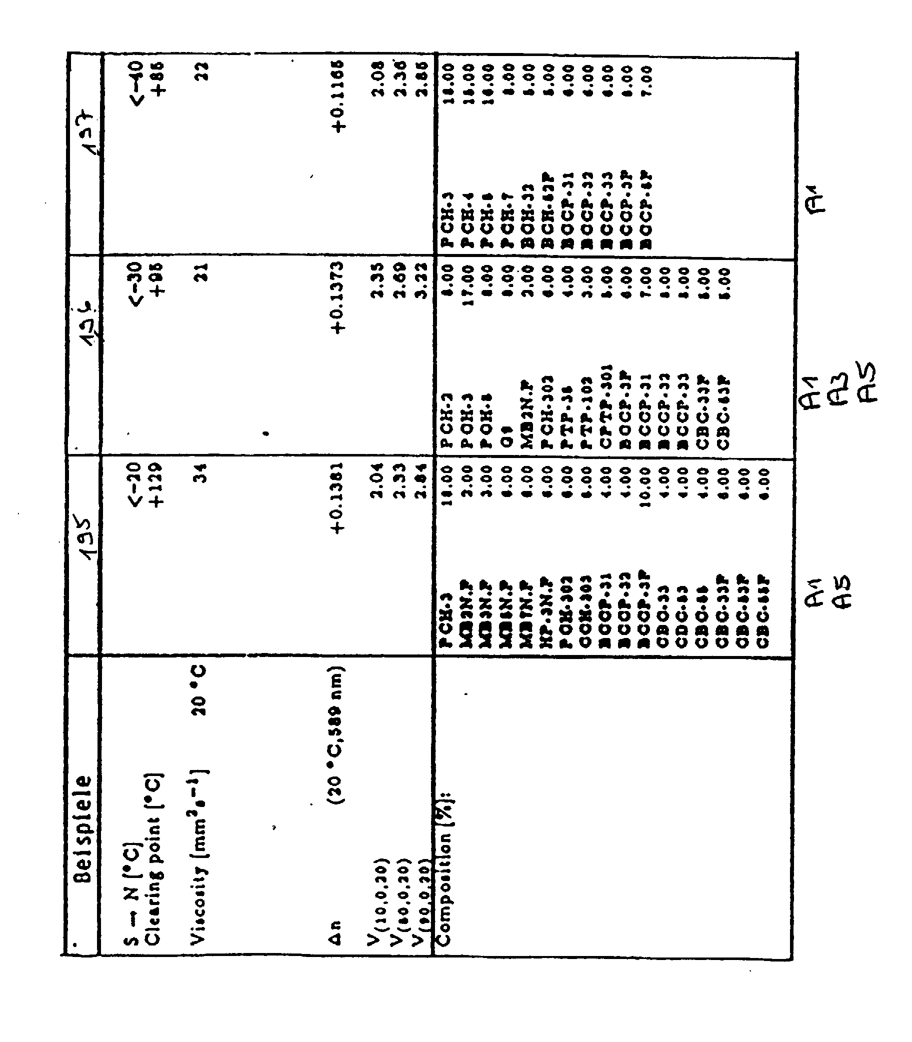

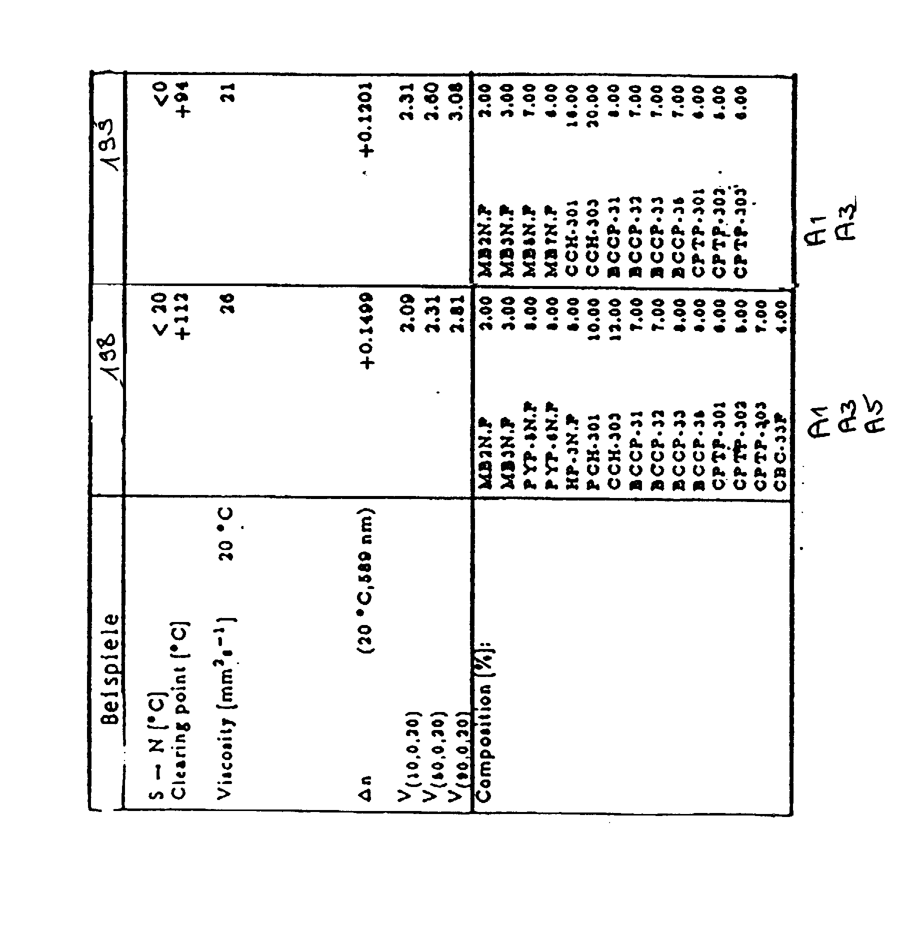

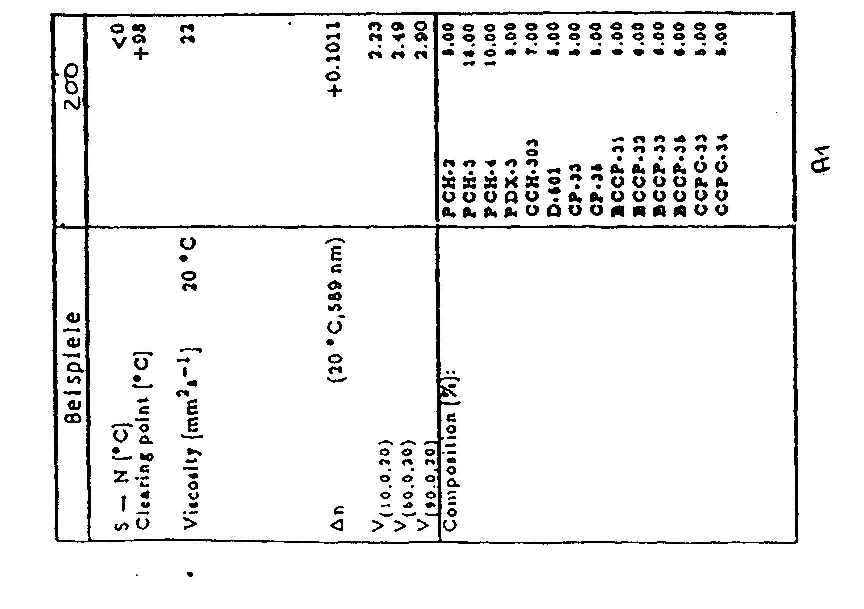

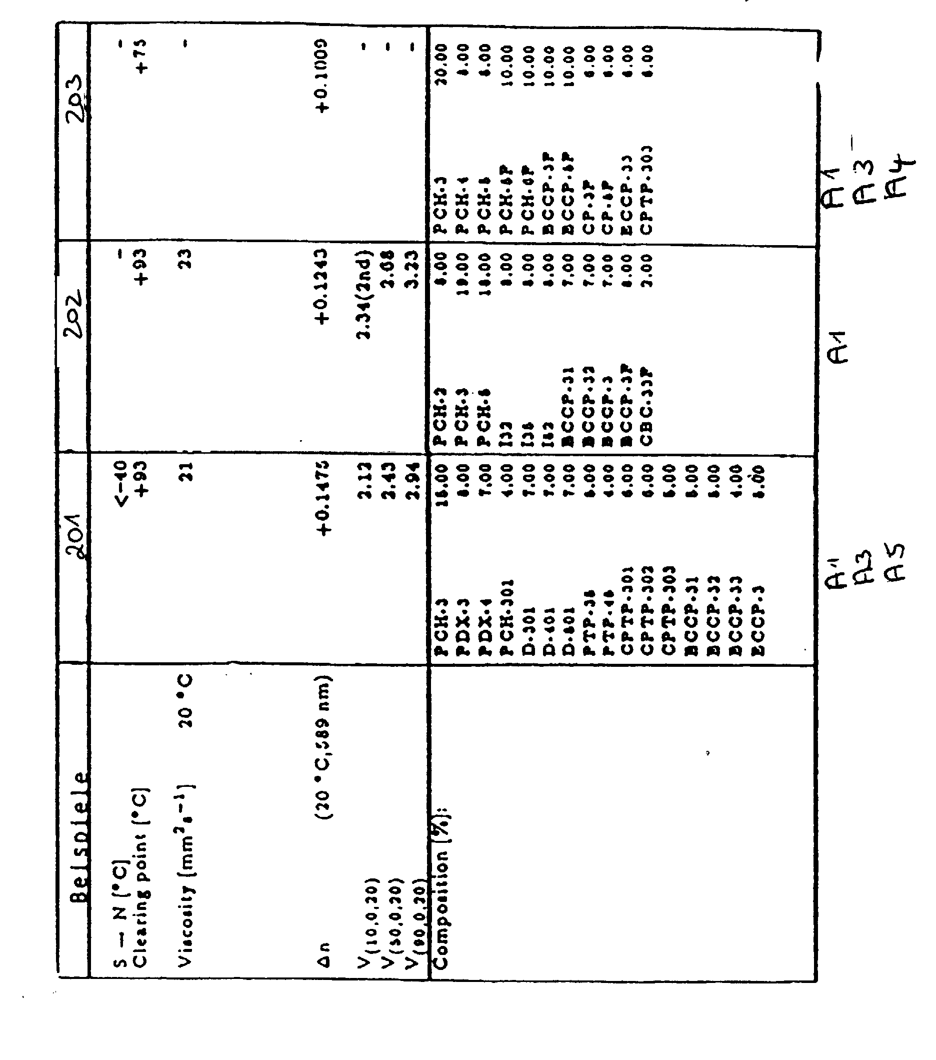

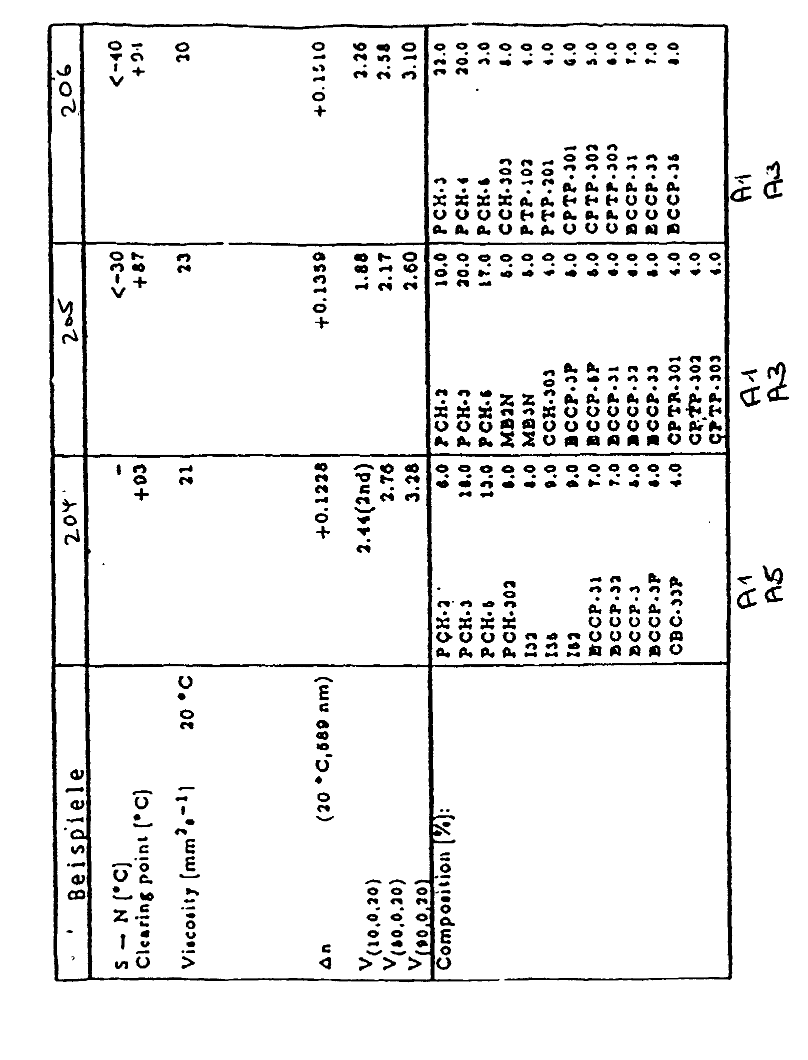

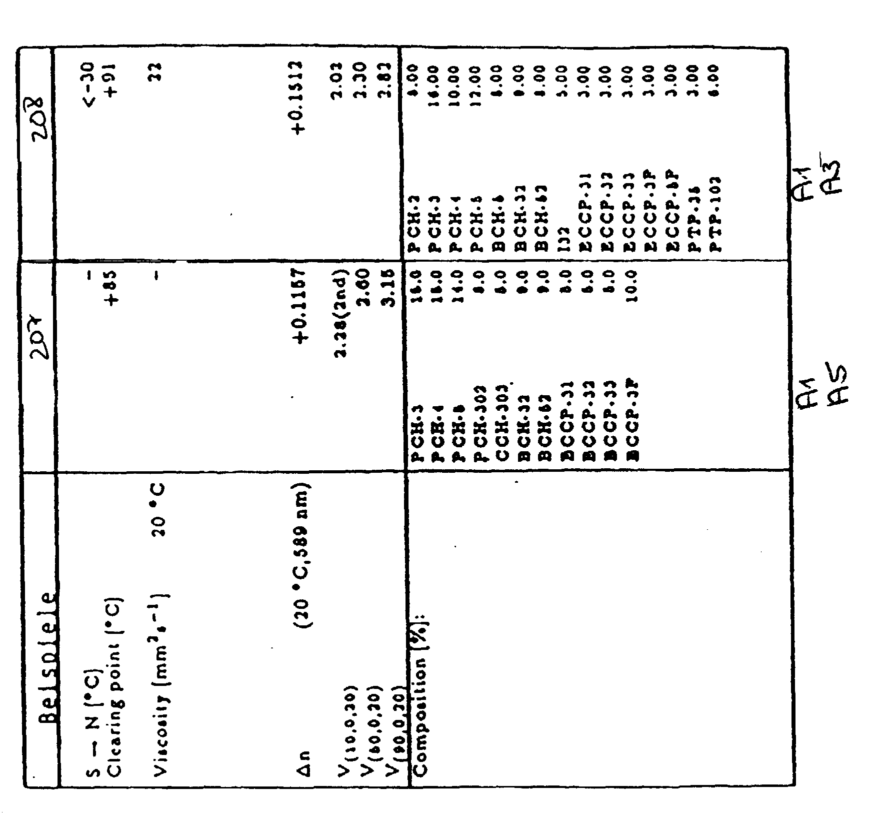

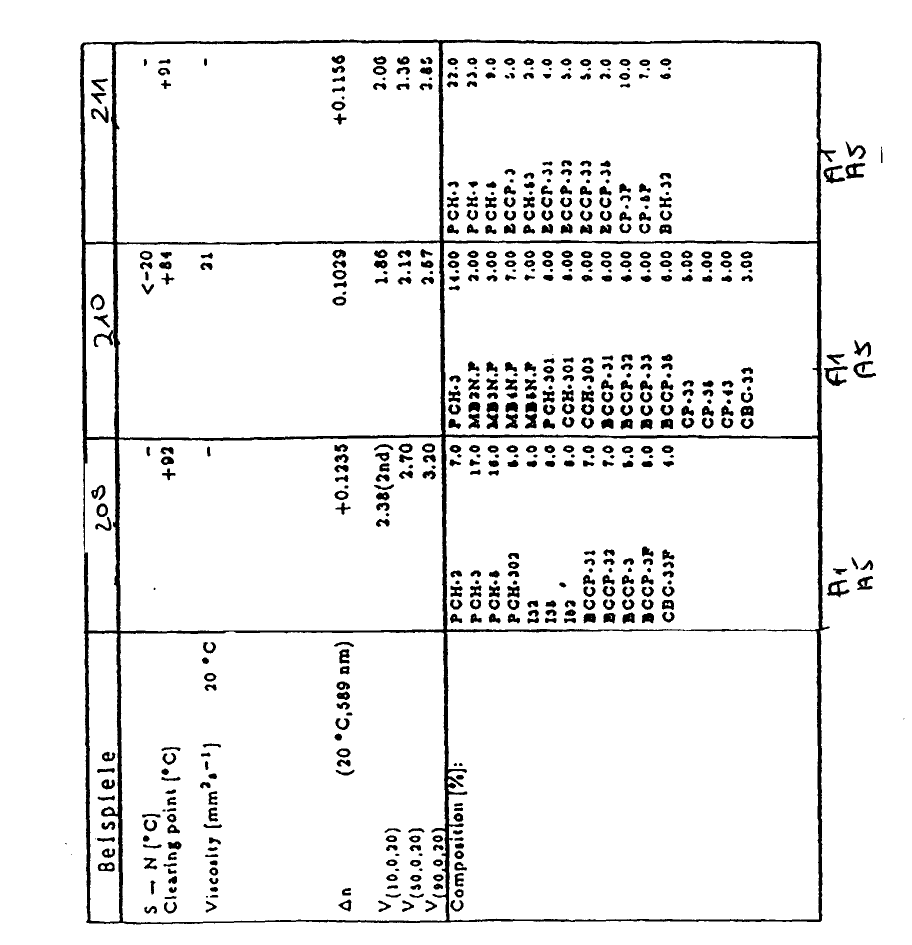

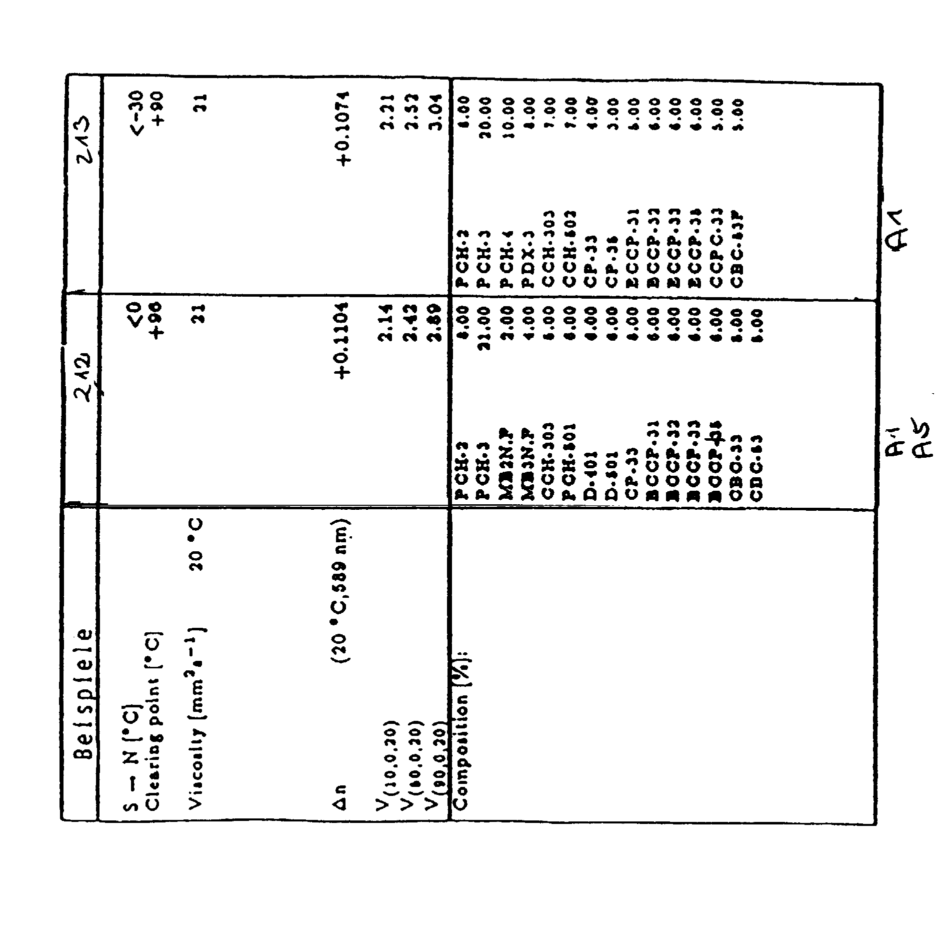

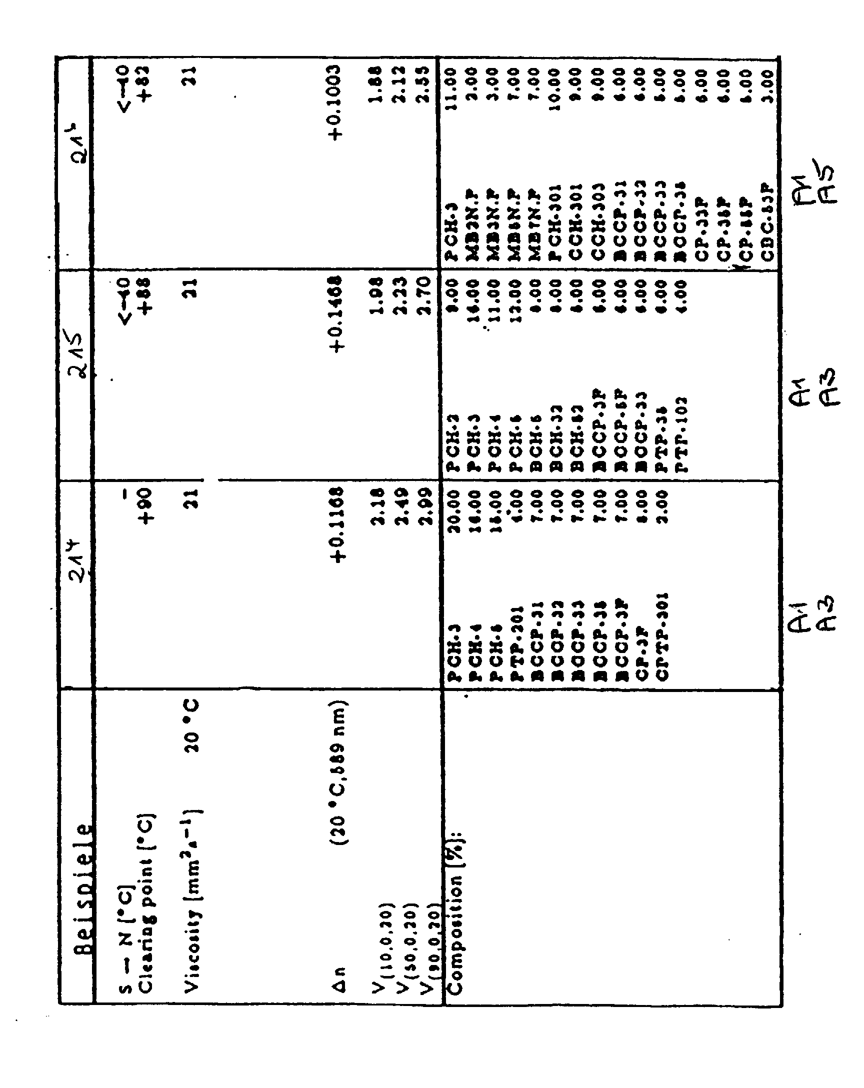

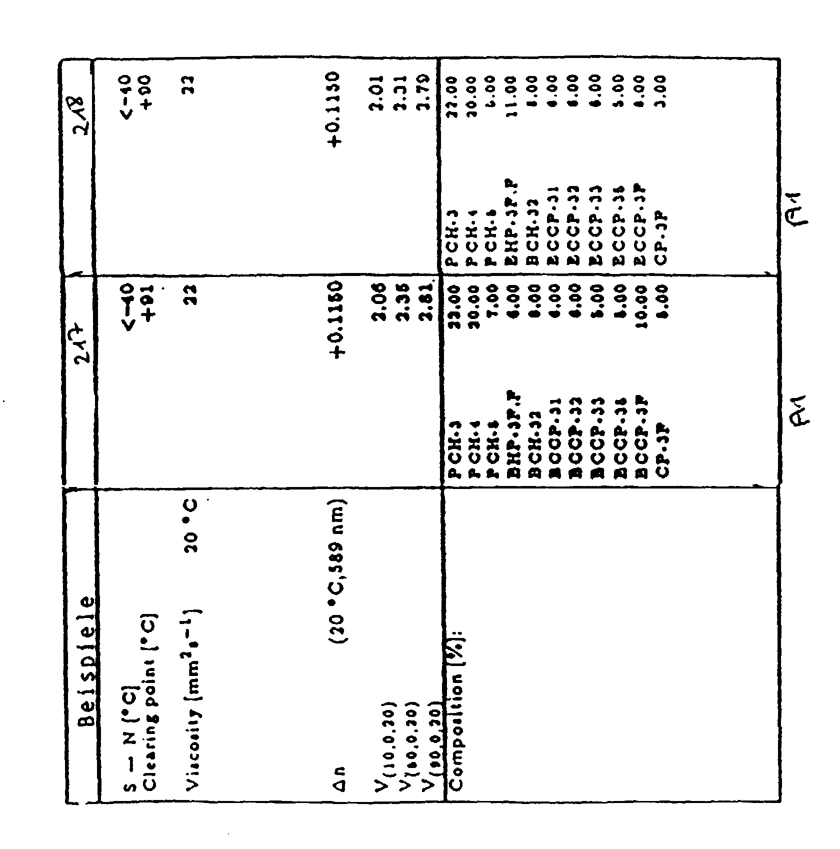

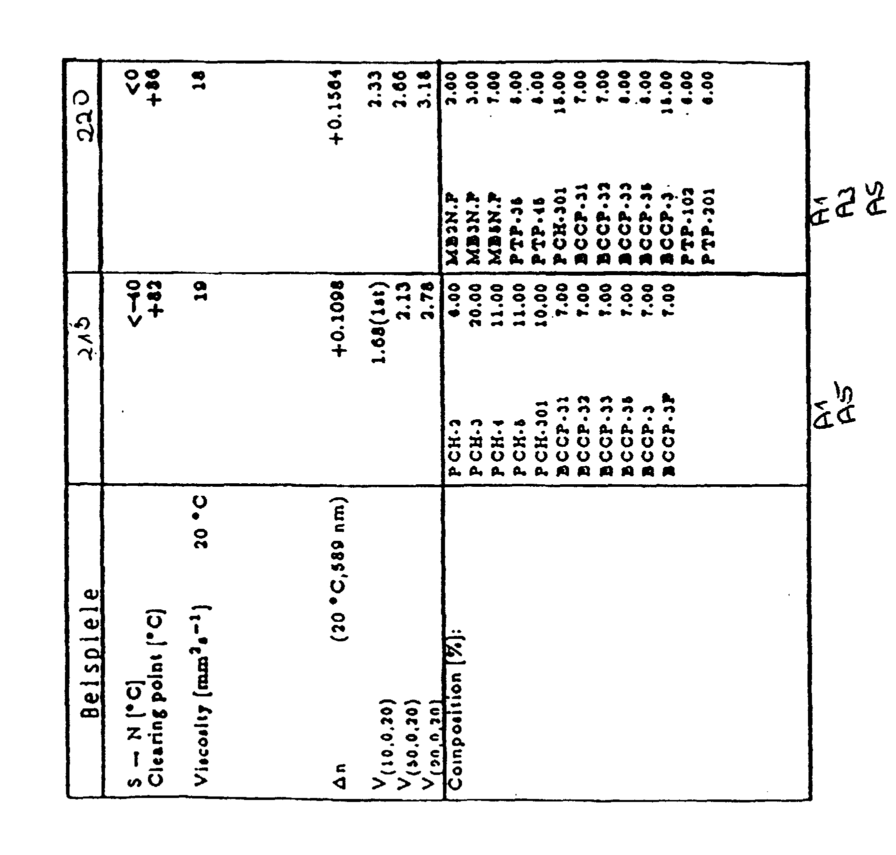

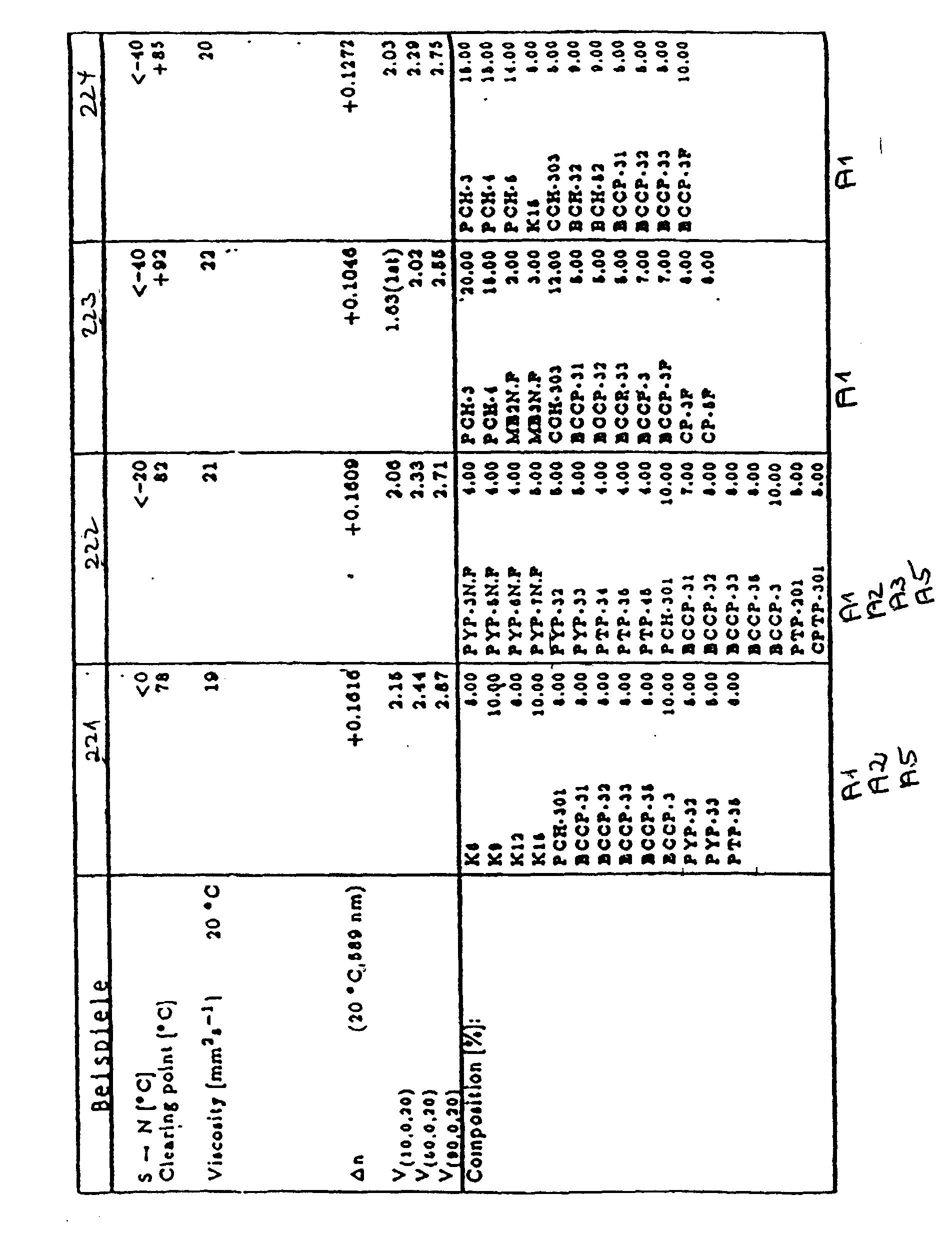

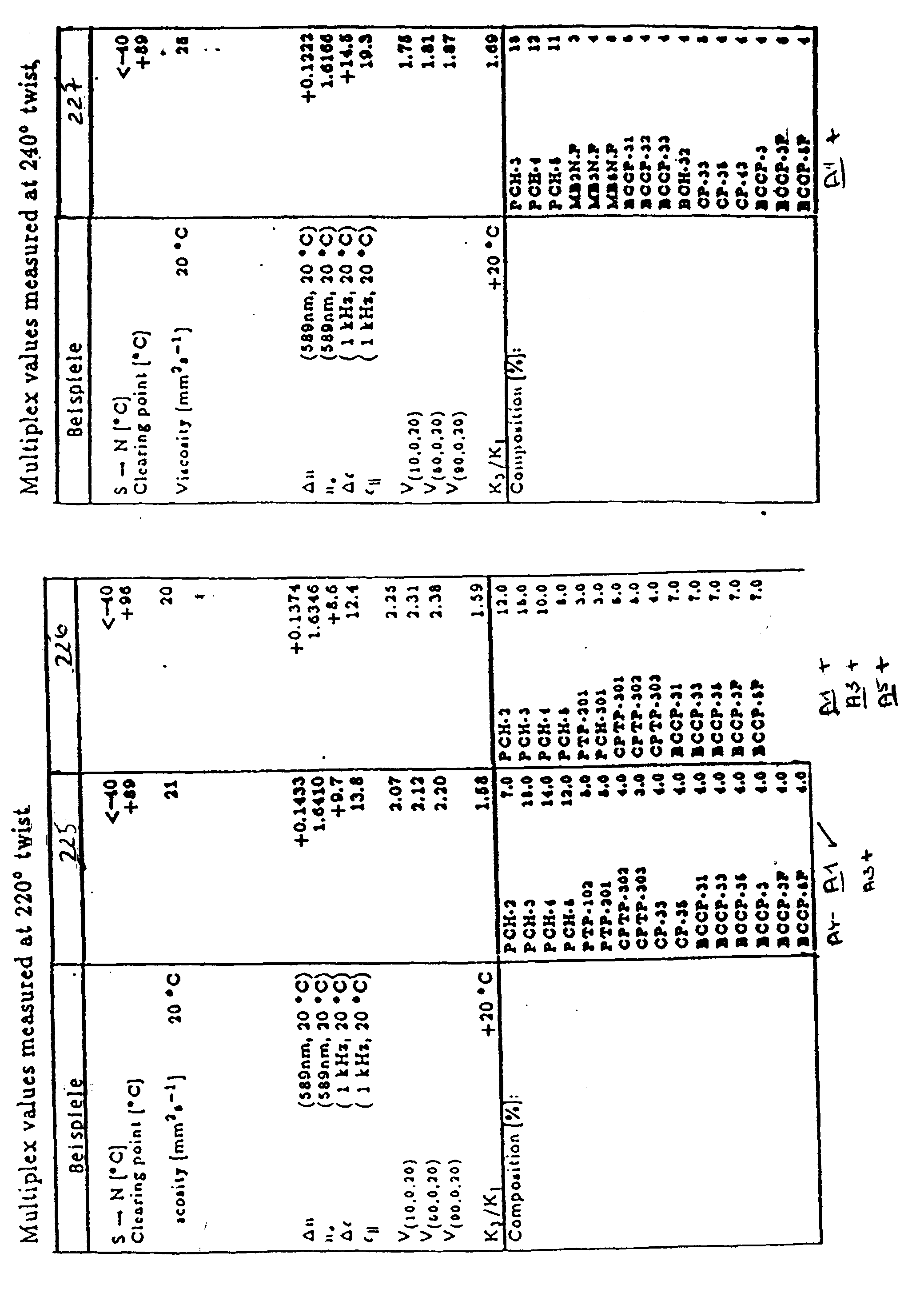

## Patentansprüche (Patentansprüche für folgende(n) Vertragsstaat(en): CH, DE, FR, GB, IT, LI, NL)

1. Supertwist-Flüssigkristallanzeige mit
- zwei planparallelen Trägerplatten, die mit einer Umrandung eine Zelle bilden;
- einer in der Zelle befindlichen nematischen Flüssigkristallmischung mit positiver dielektrischer Anisotropie;
- Elektrodenschichten mit darüberliegenden Orientierungsschichten auf den Innenseiten der Trägerplatten;
- einem Anstellwinkel zwischen der Längsachse der Moleküle an der Oberfläche der Trägerplatten und den Trägerplatten von etwa 1 Grad bis 30 Grad; und
- einem Verdrillungswinkel der Flüssigkristallmischung in der Zelle von Orientierungsschicht zu Orientierungsschicht dem Betrag nach zwischen 160 und 360°, dadurch gekennzeichnet, daß die nematische Flüssigkristallmischung
a) mindestens eine Komponente enthält, ausgewählt aus der Gruppe A, bestehend aus Verbindungen der Formeln AIII bis AVI: 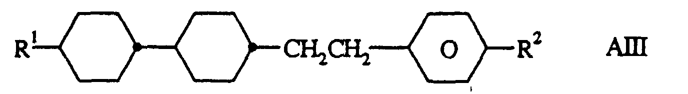 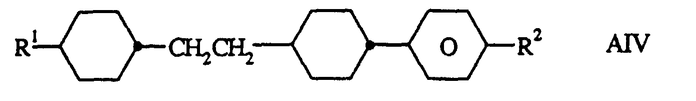 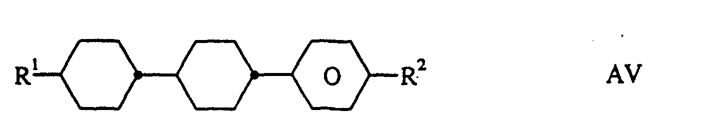 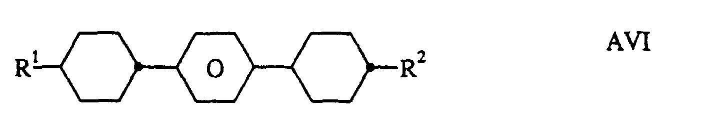 worin R¹ und R² jeweils unabhängig voneinander jeweils R bedeuten, und R Alkyl mit 1-12 C-Atomen ist, worin auch eine oder zwei nicht benachbarte CH₂-Gruppen durch -O-, -CH=CH-, -CO-, -O-CO- oder -CO-O- ersetzt sein können,
b) mindestens eine Komponente enthält, ausgewählt aus der Gruppe B1, bestehend aus den Verbindungen der Formeln BI und BII: 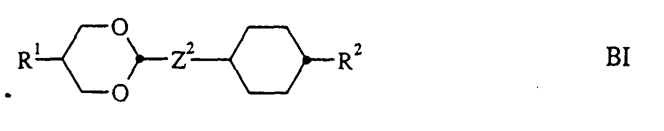 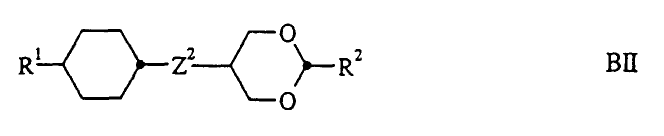 worin R¹ und R² jeweils unabhängig voneinander die für R angegebene Bedeutung haben und Z² -CH₂CH₂-, -CO-O-, -O-CO- oder eine Einfachbindung bedeutet, und den Verbindungen der Forrnel BIII 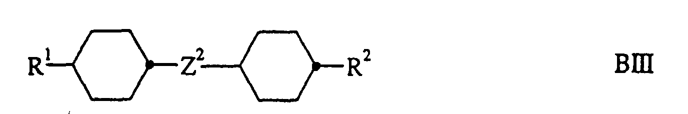 der folgenden Teilformeln: 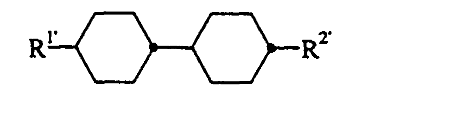 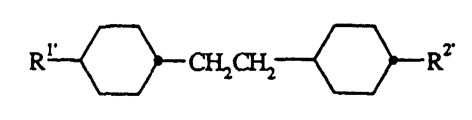 worin
R^{1,} CH₃-(CH₂)ₙ-O-, CH₃-(CH₂)ₜ-,
trans-H-(CH₂)ᵣ-CH=CH-(CH₂CH₂)ₛ-CH₂O- oder
trans-H-(CH₂)ᵣ-CH=CH-(CH₂CH₂)ₛ-,
R² CH₃-(CH₂)ₜ-,
n 1, 2, 3 oder 4,
r 0, 1, 2 oder 3,
s 0 oder 1, und
t 1, 2, 3 oder 4 sind, und
der Teilformel 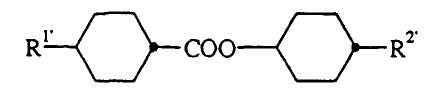 worin R^{1,} und R^{2,} die vorstehend angegebene Bedeutung haben und/oder mindestens eine Komponente enthält, ausgewählt aus der Gruppe B2, bestehend aus den Verbindungen der Formeln BVI und BVII: 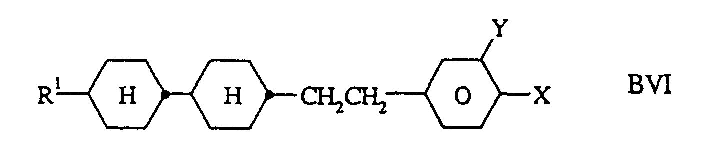 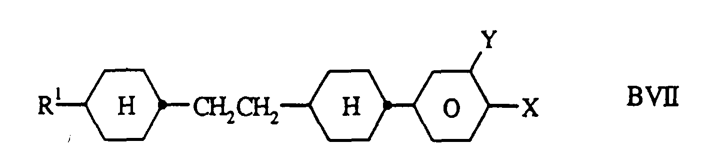 worin R¹ die für R angegebene Bedeutung hat, und X CN oder F bedeutet und Y H oder F ist,
c) 10 bis 80 Gew-% einer flüssigkristallinen Komponente C enthält, bestehend aus einer oder mehreren Verbindungen mit einer dielektrischen Anisotropie von über +1,5, und
e) eine optisch aktive Komponente E in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,3 beträgt, und
daß die nematische Flüssigkristallmischung einen nematischen Phasenbereich von mindestens 60 °C, eine Viskosität von nicht mehr als 30 mPa.s., und eine dielektrische Anisotropie von mindestens +5 aufweist, wobei die dielektrischen Anisotropien der Verbindungen und die auf die nematischen Flüssigkristallmischung bezogenen Parameter auf eine Temperatur von 20°C bezogen sind,
mit der Maßgabe, daß Supertwist-Flüssigkristallanzeigen ausgeschlossen sind, deren Flüssigkristallmischung eine oder mehrere Verbindungen der allgemeinen Formel enthält 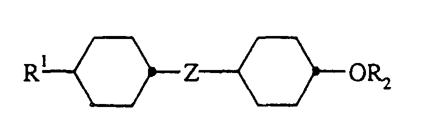 worin Z eine einfache Kovalenzbindung oder -CH₂-CH₂- darstellt, R¹ lE-Alkenyl mit 2 bis 10 Kohlenstoffatomen oder 3E-Alkenyl mit 4 bis 10 Kohlenstoffatomen bezeichnet und R² Alkyl mit 1 bis 10 Kohlenstoffatomen, 2E-Alkenyl mit 3 bis 10 Kohlenstoffatomen oder 3-Alkenyl mit 4 bis 10 Kohlenstoffatomen bedeutet, oder mit der Maßgabe, daß solche Anzeigen ausgeschlossen sind, deren FK-Mischung ein dielektrisches Verhältnis Δε/ε⊥ < 2 (wobei Δε die dielektrische Anisotropie und ε⊥ die Dielektrizitiätskonstante in Richtung der kurzen Achse der Flüssigkristallmoleküle bedeutet) aufweist.

2. Anzeige nach Anspruch 1, dadurch gekennzeichnet, daß die nematische Flüssigkristallmischung mindestens eine zusätzliche Verbindung enthält, ausgewählt aus der Gruppe B3, bestehend aus den Verbindungen der Formeln BVIII und BIX: 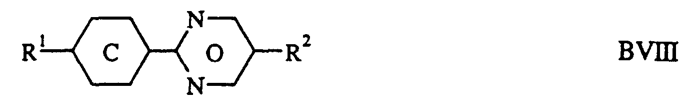 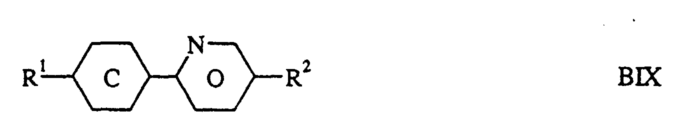 worin R¹ und R² jeweils unabhängig voneinander die für R angegebene Bedeutung haben, und 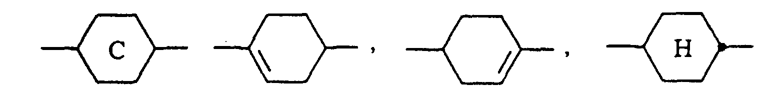 oder 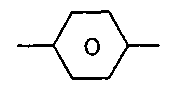 bedeutet.

3. Anzeige nach mindestens einem der Ansprüche 1 bis 2, dadurch gekennzeichnet, daß die nematische Flüssigkristallmischung mindestens eine zusätzliche Verbindung enthält, ausgewählt aus der Gruppe, bestehend aus den Verbindungen der Formeln BIII und BIV: 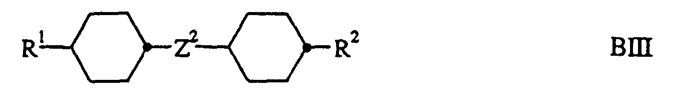 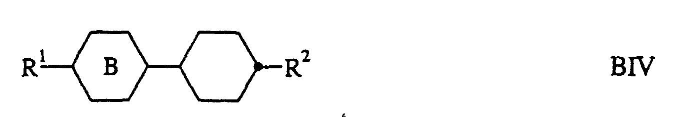 worin R¹ und R² jeweils unabhängig voneinander die für R angegebene Bedeutung haben, Z² -CH₂-CH₂-, -CO-O-, -O-CO- oder eine Einfachbindung, und 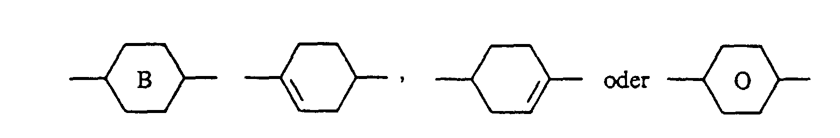 bedeuten.

4. Anzeige nach mindestens einem der Ansprüche 1 bis 3, dadurch gekennzeichnet, daß Komponente C Verbindungen enthält, ausgewählt aus der Gruppe C, bestehend aus den Verbindungen der Formeln CI bis CIII: 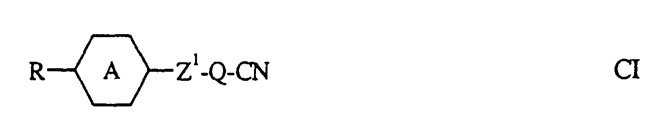 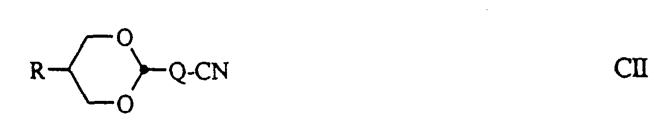 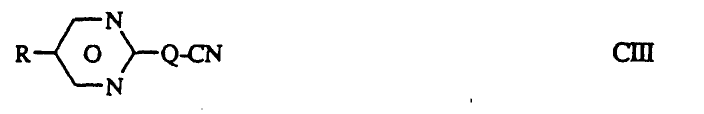 worin
R die in Anspruch 1 angegebene Bedeutung hat,
Q 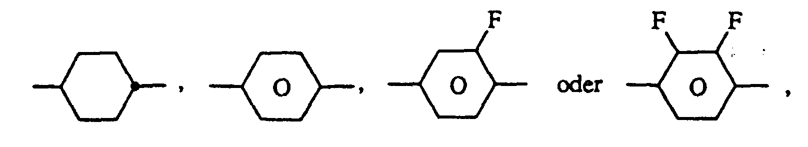
Z¹ 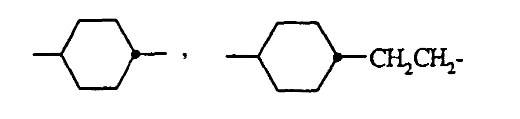
eine Einfachbindung, -CH₂CH₂-, -CO-O- oder -O-CO- und 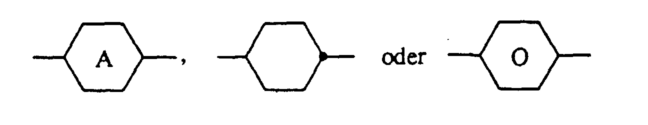 bedeuten.

5. Anzeige nach mindestens einem der Ansprüche 1 bis 4, dadurch gekennzeichnet, daß die nematische Flüssigkristallmischung zusammengesetzt ist aus 30-60 Gew.% Komponente C, 20-70 Gew.% Verbindungen aus den Gruppen A und B, und einer sich zu 100 Gew.% addierenden Menge der Komponente E.

6. Anzeige nach mindestens einem der Ansprüche 1 bis 5, dadurch gekennzeichnet, daß die nematische Flüssigkristallmischung mindestens zwei Verbindungen der Formeln AIII oder AV enthält.

7. Anzeige nach Anspruch 6, dadurch gekennzeichnet, daß die nematische Flüssigkristallmischung Verbindungen der Formeln AIII und AV enthält.

8. Anzeige nach mindestens einem der Ansprüche 1 bis 7, dadurch gekennzeichnet, daß die nematische Flüssigkristallmischung Verbindungen der Formel BIII: 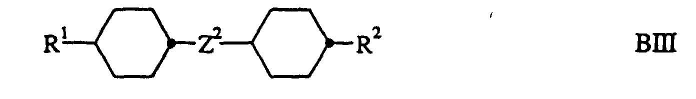 enthält, worin R¹, R² und Z² die in Anspruch 3 angegebenen Bedeutungen aufweisen.

9. Anzeige nach Anspruch 8, dadurch gekennzeichnet, daß die Flüssigkristallmischung Verbindungen der Formel 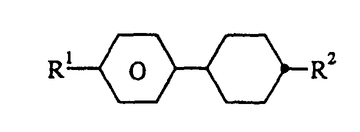 enthält, worin R¹ CH₃-(CH₂)ₙ-O- oder trans-H-(CH₂)ᵣ-CH=CH-(CH₂CH₂)ₛ-CH₂-O- und R² CH₃-(CH₂)ₜ- ist, wobei
n 1, 2, 3 oder 4,
r 0,1, 2 oder 3,
s 0 oder 1, und
t 1, 2, 3 oder 4 sind.

10. Anzeige nach Anspruch 8 oder 9, dadurch gekennzeichnet, daß die Flüssigkristallmischung Verbindungen der Formeln 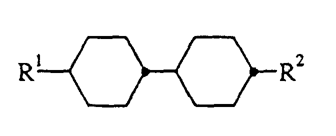 oder 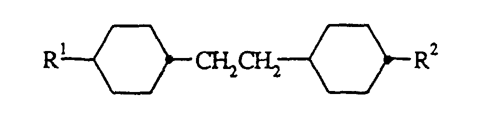 enthält, worin
R¹ CH₃-(CH₂)ₙ-O-, CH₃-(CH₂)ₜ-, trans-H-(CH₂)ᵣ-CH=CH-(CH₂CH₂)ₛ-CHₛ-CH₂O-oder trans-H-(CH₂)ᵣ-CH=CH-(CH₂CH₂)ₛ-, und
R² CH₃-(CH₂)ₜ- sind,
wobei n, r, s und t die in Anspruch 9 angegebenen Bedeutungen haben.

11. Anzeige nach mindestens einem der Ansprüche 1 bis 10, dadurch gekennzeichnet, daß Komponente C eine oder mehrere Verbindungen mit einer 4-Fluorphenyl-Gruppe oder einer 3,4-Difluorphenyl-Gruppe enthält.

12. Anzeige nach Anspruch 11, dadurch gekennzeichnet, daß die Flüssigkristallmischung mindestens eine Verbindung aus folgender Gruppe 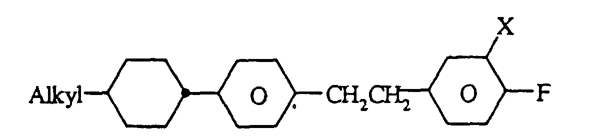 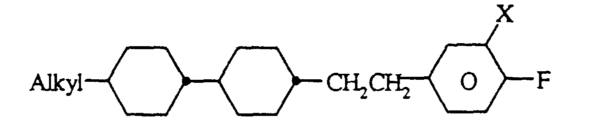 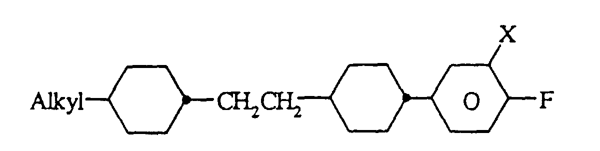 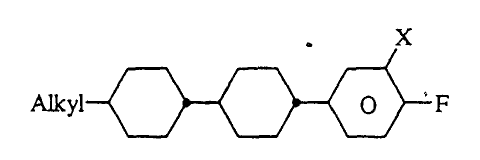 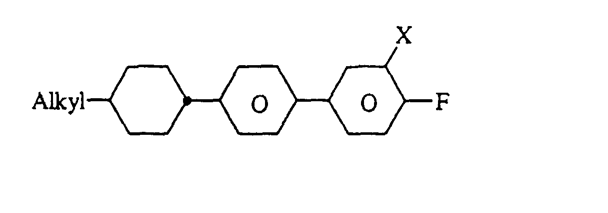 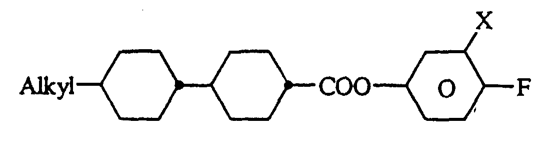 enthält, worin Alkyl eine geradkettige Alkylgruppe mit 2 bis 7 C-Atomen und X H oder F sind.

13. Anzeige nach mindestens einem der Ansprüche 1 bis 12, dadurch gekennzeichnet, daß die Flüssigkristallmischung eine oder mehrere Verbindungen enthält, worin R eine trans-Alkenylgruppe oder eine trans-Alkenyloxygruppe ist.

14. Nematische Flüssigkristallmischungen der in mindestens einem der Ansprüche 1 bis 13 definierten Zusammensetzung.

## Patentansprüche (Patentansprüche für folgende(n) Vertragsstaat(en): BE, AT, SE)

1. Supertwist-Flüssigkristallanzeige mit
- zwei planparallelen Trägerplatten, die mit einer Umrandung eine Zelle bilden;
- einer in der Zelle befindlichen nematischen Flüssigkristallmischung mit positiver dielektrischer Anisotropie;
- Elektrodenschichten mit darüberliegenden Orientierungsschichten auf den Innenseiten der Trägerplatten;
- einem Anstellwinkel zwischen der Längsachse der Moleküle an der Oberfläche der Trägerplatten und den Trägerplatten von etwa 1 Grad bis 30 Grad; und
- einem Verdrillungswinkel der Flüssigkristallmischung in der Zelle von Orientierungsschicht zu Orientierungsschicht dem Betrag nach zwischen 160 und 360 °, dadurch gekennzeichnet, daß die nematische Flüssigkristallmischung
a) mindestens eine Komponente enthält, ausgewählt aus der Gruppe A, bestehend aus Verbindungen der Formeln AIII bis AVI: 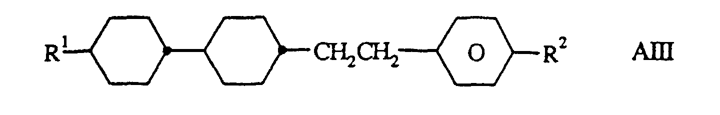 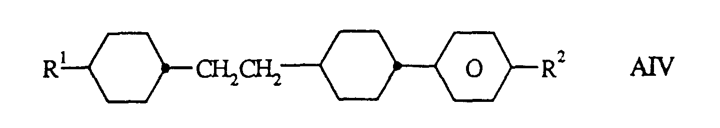 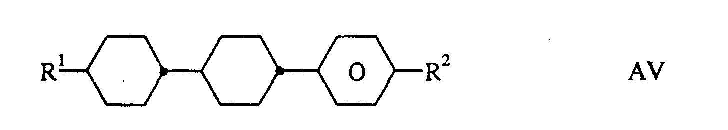 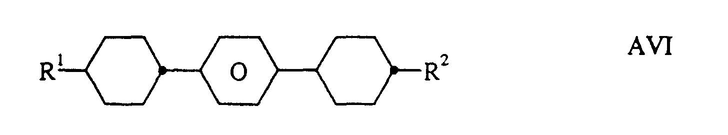 worin R¹ und R² jeweils unabhängig voneinander jeweils R bedeuten, und R Alkyl mit 1-12 C-Atomen ist, worin auch eine oder zwei nicht benachbarte CH₂-Gruppen durch -O-, -CH=CH-, -CO-, -O-CO- oder -CO-O- ersetzt sein können,
b) mindestens eine Komponente enthält, ausgewählt aus der Gruppe B1 bestehend aus den Verbindungen der Formeln BI und BII: 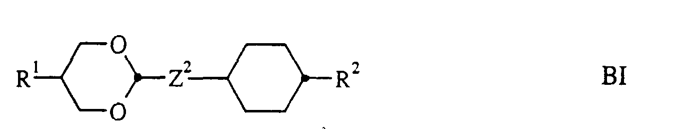 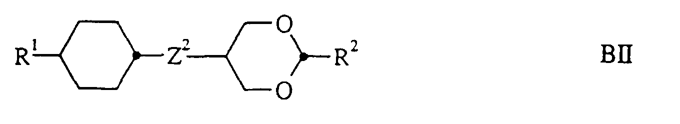 worin R¹ und R² jeweils unabhängig voneinander die für R angegebene Bedeutung haben und Z² -CH₂CH₂-, -CO-O-, -O-CO- oder eine Einfachbindung bedeutet, und den Verbindungen der Formel BIII 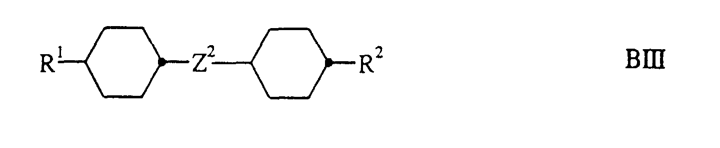 der folgenden Teilformeln: 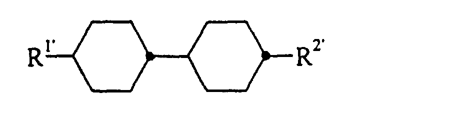 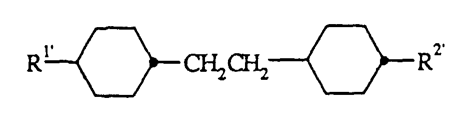 worin
R^{1'} CH₃-(CH₂)ₙ-O-, CH₃-(CH₂)ₜ-,
trans-H-(CH₂)ᵣ-CH=CH-(CH₂CH₂)ₛ-CH₂O- oder
trans-H-(CH₂)ᵣ-CH=CH-(CH₂CH₂)ₛ-,
R^{2'} CH₃-(CH₂)ₜ-,
n 1, 2, 3 oder 4,
r 0, 1, 2 oder 3,
s 0 oder 1, und
t 1, 2, 3 oder 4 sind, und
der Teilformel 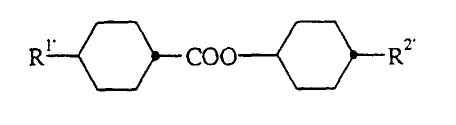 worin R^{1'} und R^{2'} die vorstehend angegebene Bedeutung haben und/oder mindestens eine Komponente enthält, ausgewählt aus der Gruppe B2, bestehend aus den Verbindungen der Formeln BVI und BVII: 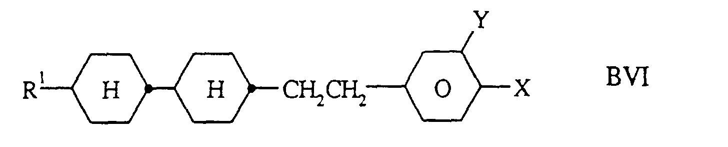 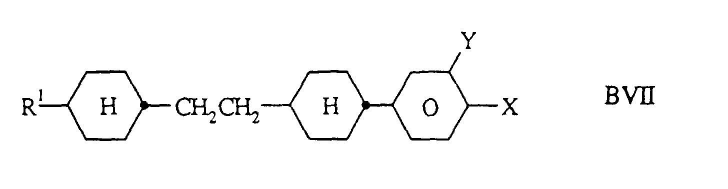 worin R¹ die für R angegebene Bedeutung hat, und X CN oder F bedeutet und Y H oder F ist,
c) 10 bis 80 Gew.-% einer flüssigkristallinen Komponente C enthält, bestehend aus einer oder mehreren Verbindungen mit einer dielektrischen Anisotropie von über +1,5, und
e) eine optisch aktive Komponente E in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,3 beträgt, und
daß die nematische Flüssigkristallmischung einen nematischen Phasenbereich von mindestens 60°C, eine Viskosität von nicht mehr als 30 mPa.s., und eine dielektrische Anisotropie von mindestens +5 aufweist, wobei die dielektrischen Anisotropien der Verbindungen und die auf die nematischen Flüssigkristallmischung bezogenen Parameter auf eine Temperatur von 20°C bezogen sind, mit der Maßgabe, daß solche Anzeigen ausgeschlossen sind, deren FK-Mischung ein dielektrisches Verhältnis Δε/ε⊥ < 2 (wobei Δε die dielektrische Anisotropie und ε⊥ die Dielektrizitiätskonstante in Richtung der kurzen Achse der Flüssigkristallmoleküle bedeutet) aufweist.

2. Anzeige nach Anspruch 1, dadurch gekennzeichnet, daß die nematische, Flüssigkristallmischung mindestens eine zusätzliche Verbindung enthält, ausgewählt aus der Gruppe B3, bestehend aus den Verbindungen der Formeln BVIII und BIX: 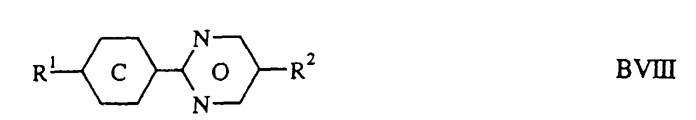 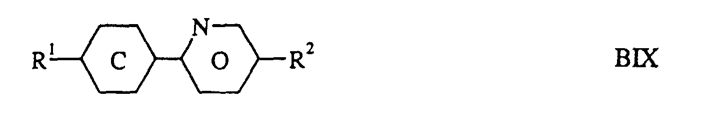 worin R¹ und R² jeweils unabhängig voneinander die für R angegebene Bedeutung haben, und 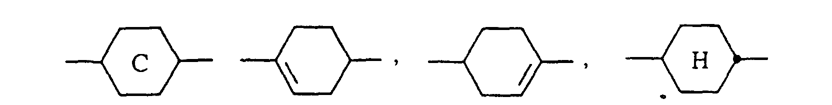 oder 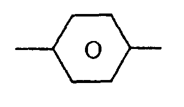 bedeutet.

3. Anzeige nach mindestens einem der Ansprüche 1 bis 2, dadurch gekennzeichnet, daß die nematische Flüssigkristallmischung zusätzliche Verbindungen enthält, ausgewählt aus der Gruppe, bestehend aus den Verbindungen der Formeln BIII und BIV: 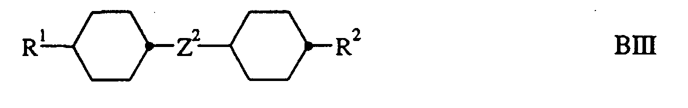 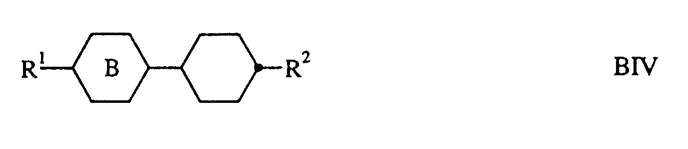 worin R¹ und R² jeweils unabhängig voneinander die für R angegebene Bedeutung haben, Z²-CH₂-CH₂-, -CO-O-, -O-CO- oder eine Einfachbindung, und 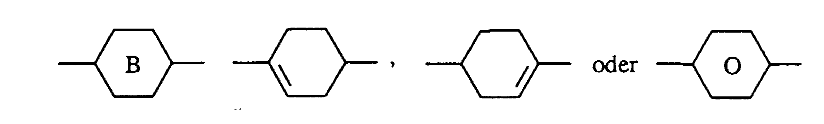 bedeuten.

4. Anzeige nach mindestens einem der Ansprüche 1 bis 3, dadurch gekennzeichnet, daß Komponente C Verbindungen enthält, ausgewählt aus der Gruppe C, bestehend aus den Verbindungen der Formeln CI bis CIII: 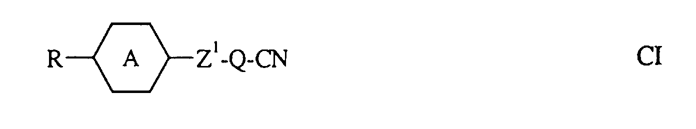 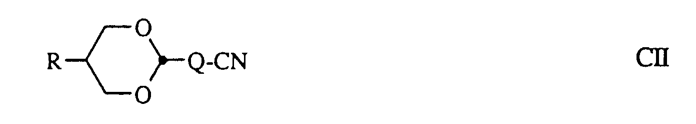 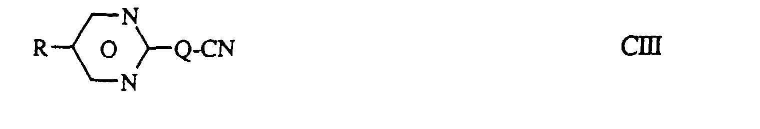 worin
R die in Anspruch 1 angegebene Bedeutung hat,
Q 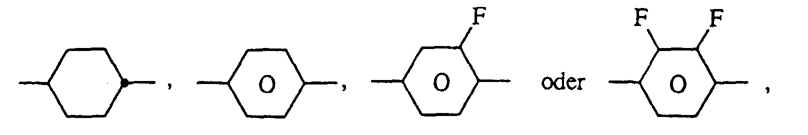
Z¹ 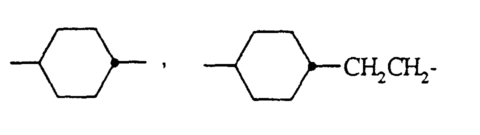
eine Einfachbindung, -CH₂CH₂-, -CO-O- oder -O-CO- und 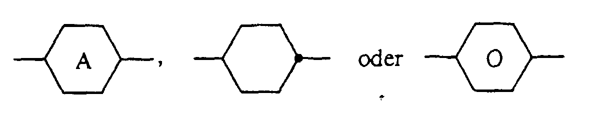 bedeuten.

5. Anzeige nach mindestens einem der Ansprüche 1 bis 4, dadurch gekennzeichnet, daß die nematische Flüssigkristallmischung zusammengesetzt ist aus 30-60 Gew.% Komponente C, 20-70 Gew.% Verbindungen aus den Gruppen A und B, und einer sich zu 100 Gew.% addierenden Menge der Komponente E.

6. Anzeige nach mindestens einem der Ansprüche 1 bis 5, dadurch gekennzeichnet, daß die nematische Flüssigkristallmischung mindestens zwei Verbindungen der Formeln AIII oder AV enthält.

7. Anzeige nach Anspruch 6, dadurch gekennzeichnet, daß die nematische Flüssigkristallmischung Verbindungen der Formeln AIII und AV enthält.

8. Anzeige nach mindestens einem der Ansprüche 1 bis 7, dadurch gekennzeichnet, daß die nematische Flüssigkristallmischung Verbindungen der Formel BIII: 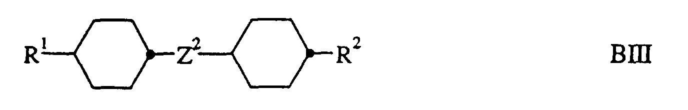 enthält, worin R¹, R² und Z² die in Anspruch 3 angegebenen Bedeutungen aufweisen.

9. Anzeige nach Anspruch 8, dadurch gekennzeichnet, daß die Flüssigkristallmischung Verbindungen der Formel 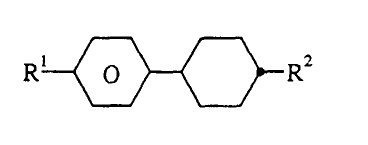 enthält, worin R¹ CH₃-(CH₂)ₙ-O - oder trans-H-(CH₂)ᵣ-CH=CH-(CH₂CH₂)ₛ-CH₂-O- und R² CH₃-(CH₂)ₜ- ist, wobei
n 1, 2, 3 oder 4,
r 0, 1, 2 oder 3,
s 0 oder 1, und
t 1, 2, 3 oder 4 sind.

10. Anzeige nach Anspruch 8 oder 9, dadurch gekennzeichnet, daß die Flüssigkristallmischung Verbindungen der Formeln 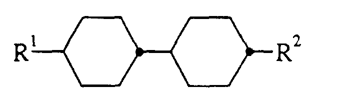 oder 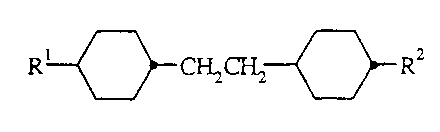 enthält, worin
R¹ CH₃-(CH₂)ₙ-O-, CH₃-(CH₂)ₜ-, trans-H-(CH₂)ᵣ-CH=CH-(CH₂CH₂)ₛ-CHₛ-CH₂O- oder trans-H-(CH₂)ᵣ-CH=CH-(CH₂CH₂)ₛ-, und
R² CH₃-(CH₂)ₜ- sind,
wobei n, r, s und t die in Anspruch 9 angegebenen Bedeutungen haben.

11. Anzeige nach mindestens einem der Ansprüche 1 bis 10, dadurch gekennzeichnet, daß Komponente C eine oder mehrere Verbindungen mit einer 4-Fluorphenyl-Gruppe oder einer 3,4-Difluorphenyl-Gruppe enthält.

12. Anzeige nach Anspruch 11, dadurch gekennzeichnet, daß die Flüssigkristallmischung mindestens eine Verbindung aus folgender Gruppe 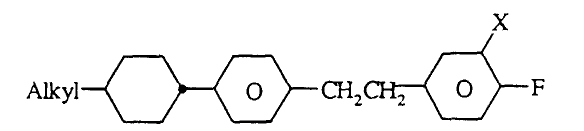 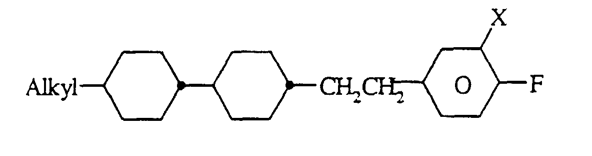 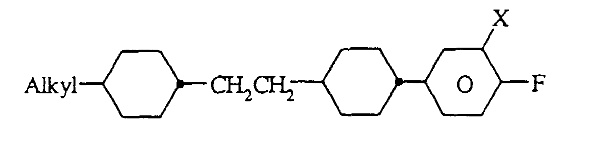 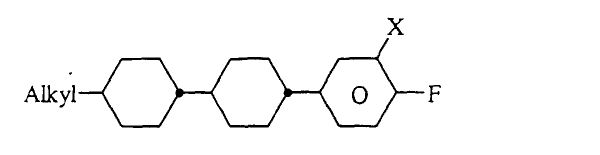 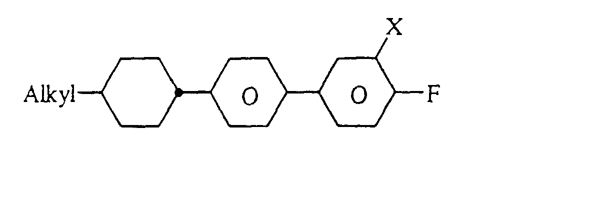 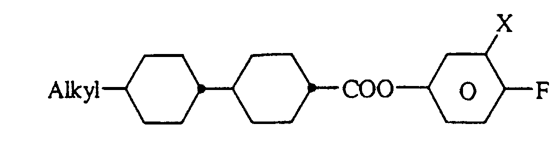 enthält, worin Alkyl eine geradkettige Alkylgruppe mit 2 bis 7 C-Atomen und X H oder F sind.

13. Anzeige nach mindestens einem der Ansprüche 1 bis 12, dadurch gekennzeichnet, daß die Flüssigkristallmischung eine oder mehrere Verbindungen enthält, worin R eine trans-Alkenylgruppe oder eine trans-Alkenyloxygruppe ist.

14. Nematische Flüssigkristallmischungen der in mindestens einem der Ansprüche 1 bis 13 definierten Zusammensetzung.

## Claims (Claims for the following Contracting State(s): CH, DE, FR, GB, IT, LI, NL)

1. Supertwist liquid-crystal display having
- two plane-parallel outer plates which, together with a frame, form a cell;
- a nematic liquid-crystal mixture of positive dielectric anistropy located in the cell;
- electrode layers with overlying alignment layers on the insides of the outer plates;
- a tilt angle between the longitudinal axis of the molecules at the surface of the carrier plates and the outer plates of from about 1 degree to 30 degrees; and
- a twist angle of the liquid-crystal mixture in the cell from alignment layer to alignment layer with a value of between 160 and 360°, characterized in that the nematic liquid-crystal mixture
a) comprises at least one component selected from group A, consisting of compounds of the formulae AIII to AVI: 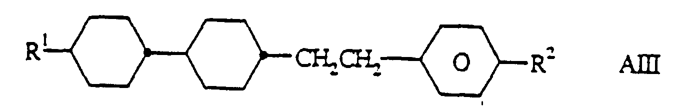 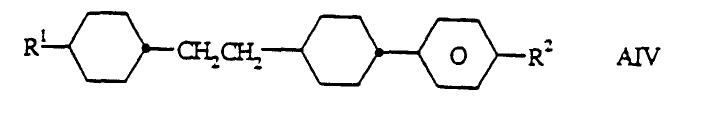 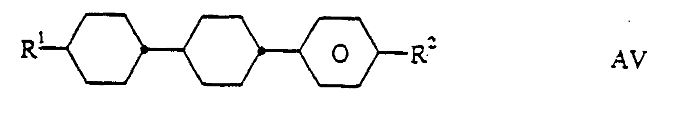 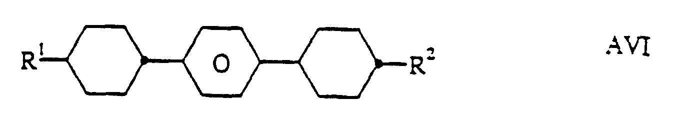 in which R¹ and R² are each, independently of one another, R, and R is alkyl having 1-12 carbon atoms, in which, in addition, one or two non-adjacent CH₂ groups may be replaced by -O-, -CH=CH-, -CO-, -O-CO- or -CO-O-,
b) comprises at least one component selected from group B1, consisting of the compounds of the formulae BI and BII: 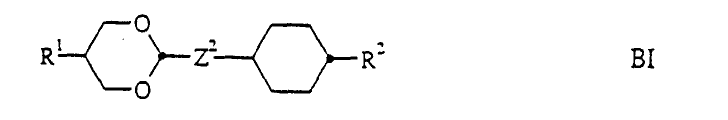 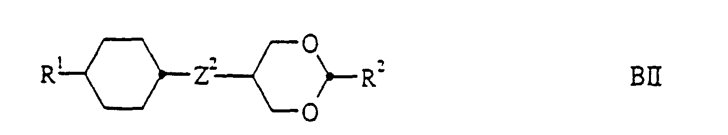 in which R¹ and R² are each, independently of one another, as defined for R, and Z² is -CH₂CH₂-, -CO-O-, -O-CO- or a single bond, and the compounds of the formula BIII 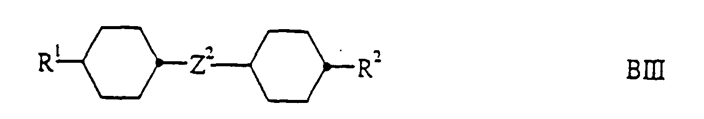 of the following subformulae: 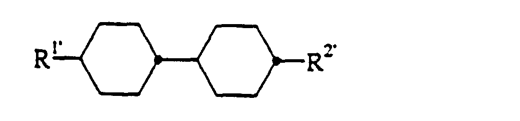 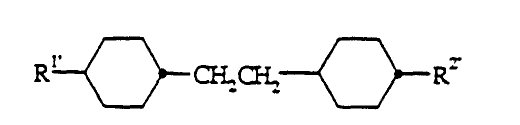 in which
R^{1'} is CH₃-(CH₂)ₙ-O- , CH₃-(CH₂)ₜ- ,
trans-H-(CH₂)ᵣ-CH=CH-(CH₂CH₂)ₛ-CH₂O- or
trans-H-(CH₂)ᵣ-CH=CH-(CH₂CH₂)ₛ-,
R^{2'} is CH₃-(CH₂)ₜ-,
n is 1, 2, 3 or 4,
r is 0, 1, 2 or 3,
s is 0 or 1, and
t is 1, 2, 3 or 4, and
of the subformula 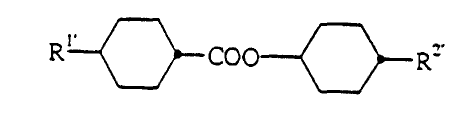 in which R^{1'} and R^{2'} are as defined above,
and/or comprises at least one component selected from group B2, consisting of the compounds of the formulae BVI and BVII: 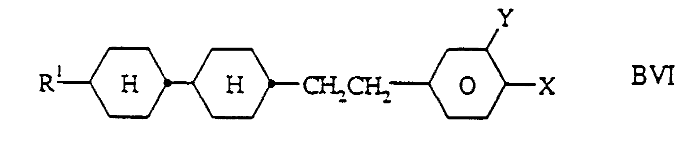 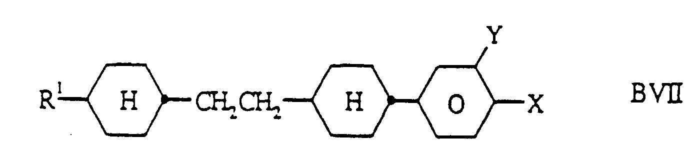 in which R¹ is as defined for R, and X is CN or F and Y is H or F,
c) comprises from 10 to 80% by weight of a liquid-crystalline component C consisting of one or more compounds having a dielectric anistropy of greater than +1.5, and
e) comprises an optically active component E in such an amount that the ratio between the layer thickness (separation of the plane-parallel outer plates) and the natural pitch of the chiral nematic liquid-crystal mixture is from about 0.2 to 1.3, and in that the nematic liquid-crystal mixture has a nematic phase range of at least 60°C, a viscosity of not greater than 30 mPa.s, and a dielectric anistropy of at least +5, where the dielectric anistropies of the compounds and the parameters referring to the nematic liquid-crystal mixture are based on a temperature of 20°C,
with the proviso that supertwist liquid-crystal displays whose liquid-crystal mixture comprises one or more compounds of the general formula 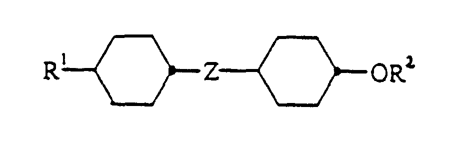 in which Z is a single covalent bond or -CH₂-CH₂-, R¹ is lE-alkenyl having 2 to 10 carbon atoms or 3E-alkenyl having 4 to 10 carbon atoms, and R² is alkyl having 1 to 10 carbon atoms, 2E-alkenyl having 3 to 10 carbon atoms or 3-alkenyl having 4 to 10 carbon atoms, are excluded, or with the proviso that displays whose LC mixture has a dielectric ratio Δε/ε⊥ of < 2 (where Δε is the dielectric anistropy and ε⊥ is the dielectric constant in the direction of the short axis of the liquid-crystal molecules) are excluded.

2. Display according to Claim 1, characterized in that the nematic liquid-crystal mixture comprises at least one additional compound selected from group B3, consisting of the compounds of the formulae BVIII and BIX: 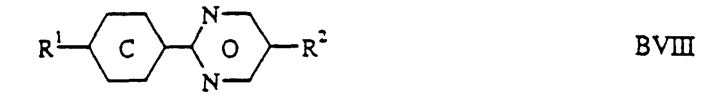 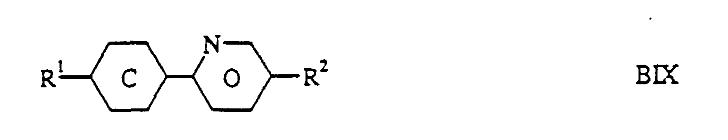 in which R¹ and R² are each, independently of one another, as defined for R, and 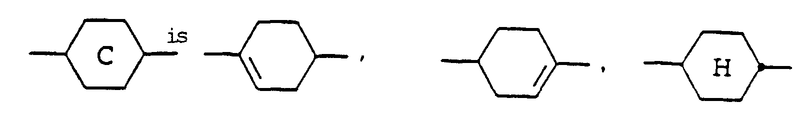 or

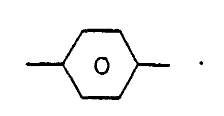

3. Display according to at least one of Claims 1 and 2, characterized in that the nematic liquid-crystal mixture comprises at least one additional compound selected from the group consisting of the compounds of the formulae BIII and BIV: 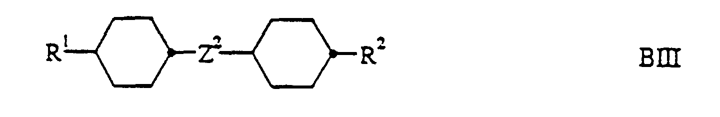 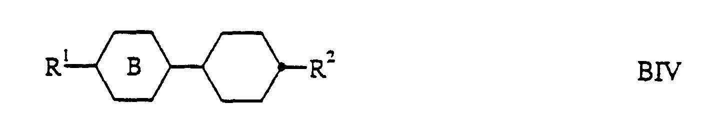 in which R¹ and R² are each, independently of one another, as defined for R, Z² is -CH₂-CH₂-, -CO-O-, -O-CO- or a single bond, and

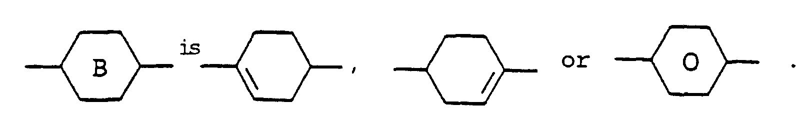

4. Display according to at least one of Claims 1 to 3, characterized in that component C comprises compounds selected from group C consisting of the compounds of the formulae CI to CIII: 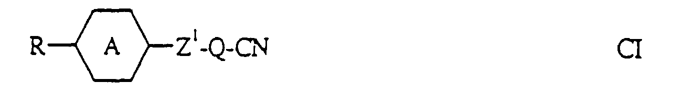 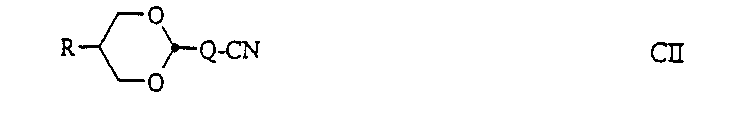 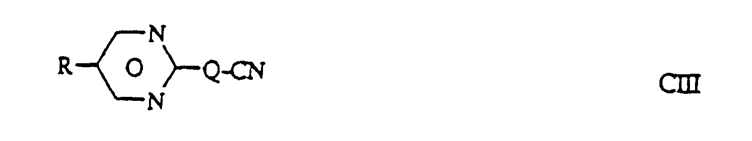 in which
R is as defined in Claim 1,
Q is 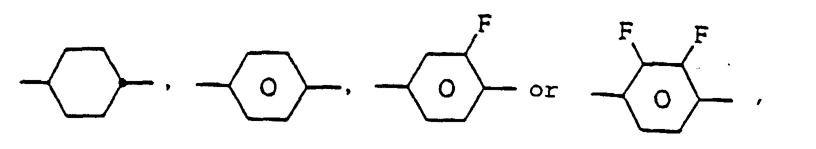
Z¹ is 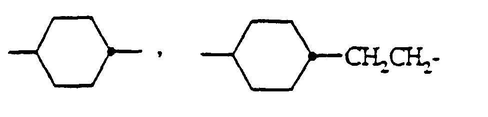
a single bond, -CH₂CH₂-, -CO-O- or -O-CO-, and

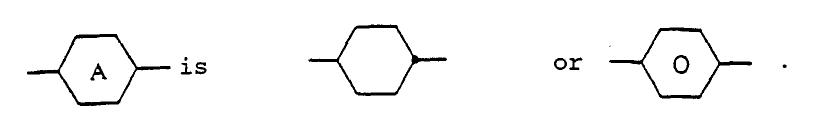

5. Display according to at least one of Claims 1 to 4, characterized in that the nematic liquid-crystal mixture is composed of 30-60% by weight of component C, 20-70% by weight of compounds from groups A and B, and an amount of component E which adds up to 100% by weight.

6. Display according to at least one of Claims 1 to 5, characterized in that the nematic liquid-crystal mixture comprises at least two compounds of the formula AIII or AV.

7. Display according to Claim 6, characterized in that the nematic liquid-crystal mixture comprises compounds of the formulae AIII and AV.

8. Display according to at least one of Claims 1 to 7, characterized in that the nematic liquid-crystal mixture comprises compounds of the formula BIII: 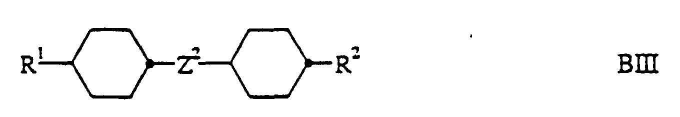 in which R¹, R² and Z² are as defined in Claim 3.

9. Display according to Claim 8, characterized in that the liquid-crystal mixture comprises compounds of the formula 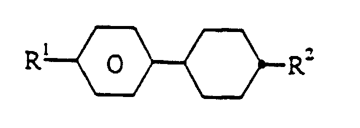 in which R¹ is CH₃-(CH₂)ₙ-O- or trans-H-(CH₂)ᵣ-CH=CH-(CH₂CH₂)ₛ-CH₂-O-, and R² is CH₃-(CH₂)ₜ-, where
n is 1, 2, 3 or 4,
r is 0, 1, 2 or 3,
s is 0 or 1, and
t is 1, 2, 3 or 4.

10. Display according to Claim 8 or 9, characterized in that the liquid-crystal mixture comprises compounds of the formula 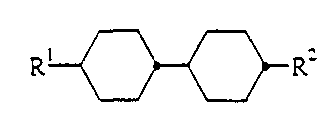 or 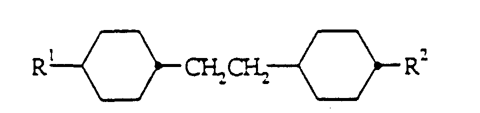 in which
R¹ is CH₃-(CH₂)ₙ-O-,CH₃-(CH₂)ₜ-,
trans-H-(CH₂)ᵣ-CH=CH-(CH₂CH₂)ₛ-CHₛ-CH₂O- or
trans-H-(CH₂)ᵣ-CH=CH-(CH₂CH₂)ₛ-, and
R² is CH₃-(CH₂)ₜ-,
where n, r, s and t are as defined in Claim 9.

11. Display according to at least one of Claims 1 to 10, characterized in that component C comprises one or more compounds containing a 4-fluorophenyl group or a 3,4-difluorophenyl group.

12. Display according to Claim 11, characterized in that the liquid-crystal mixture comprises at least one compound from the following group 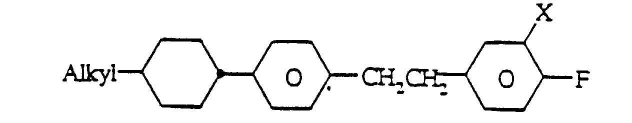 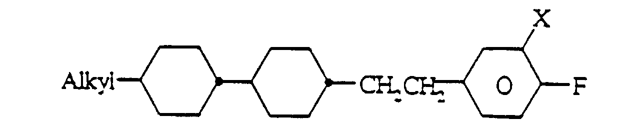 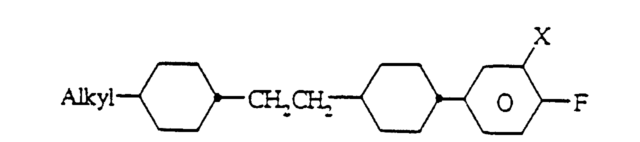 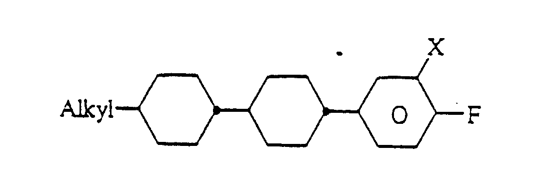 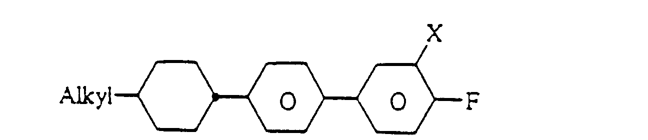 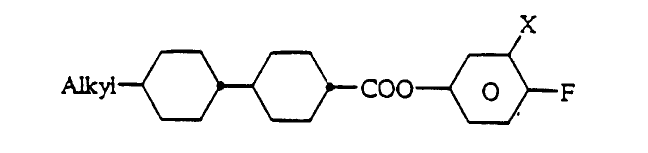 in which Alkyl is a straight-chain alkyl group having 2 to 7 carbon atoms, and X is H or F.

13. Display according to at least one of Claims 1 to 12, characterized in that the liquid-crystal mixture comprises one or more compounds in which R is a trans-alkenyl group or a trans-alkenyloxy group.

14. Nematic liquid-crystal mixtures of the composition defined in at least one of Claims 1 to 13.

## Claims (Claims for the following Contracting State(s): BE, AT, SE)

1. Supertwist liquid-crystal display having
- two plane-parallel outer plates which, together with a frame, form a cell;
- a nematic liquid-crystal mixture of positive dielectric anistropy located in the cell;
- electrode layers with overlying alignment layers on the insides of the outer plates;
- a tilt angle between the longitudinal axis of the molecules at the surface of the carrier plates and the outer plates of from about 1 degree to 30 degrees; and
- a twist angle of the liquid-crystal mixture in the cell from alignment layer to alignment layer with a value of between 160 and 360°, characterized in that the nematic liquid-crystal mixture
a) comprises at least one component selected from group A, consisting of compounds of the formulae AIII to AVI: 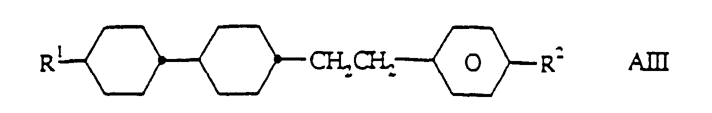 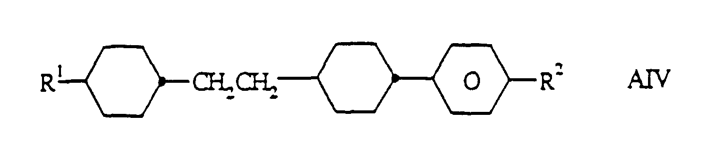 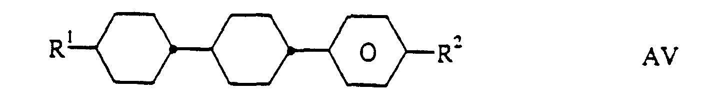 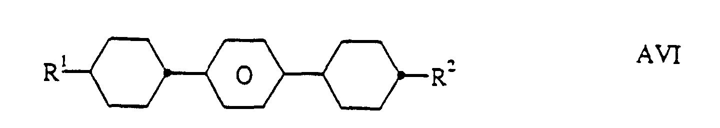 in which R¹ and R² are each, independently of one another, R, and R is alkyl having 1-12 carbon atoms, in which, in addition, one or two non-adjacent CH₂ groups may be replaced by -O-, -CH=CH-, -CO-, -O-CO- or -CO-O-,
b) comprises at least one component selected from group B1, consisting of the compounds of the formulae BI and BII: 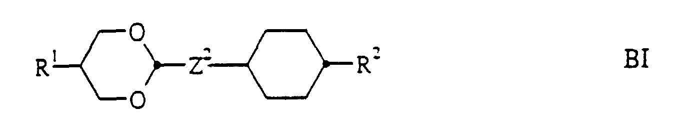 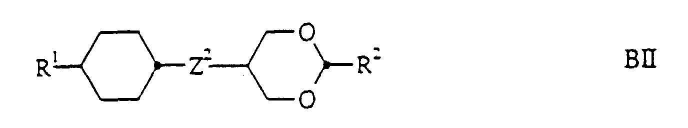 in which R¹ and R² are each, independently of one another, as defined for R, and Z² is -CH₂CH₂-, -CO-O-, -O-CO- or a single bond, and the compounds of the formula BIII 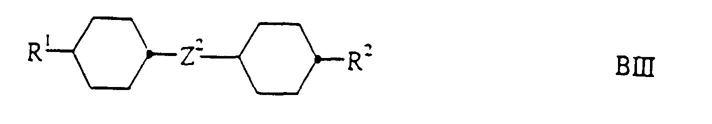 of the following subformulae: 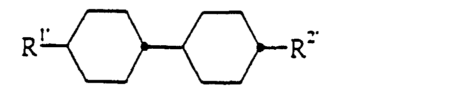 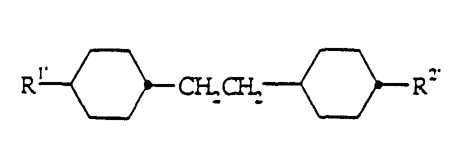 in which
R^{1'} is CH₃-(CH₂)ₙ-O-,CH₃-(CH₂)ₜ-,
trans-H-(CH₂)ᵣ-CH=CH-(CH₂CH₂)ₛ-CH₂O- or
trans-H-(CH₂)ᵣ-CH=CH-(CH₂CH₂)ₛ-,
R^{2'} is CH₃-(CH₂)ₜ-,
n is 1, 2, 3 or 4,
r is 0, 1, 2 or 3,
s is 0 or 1, and
t is 1, 2, 3 or 4, and
of the subformula 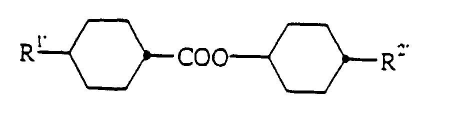 in which R^{1'} and R^{2'} are as defined above,
and/or comprises at least one component selected from group B2, consisting of the compounds of the formulae BVI and BVII: 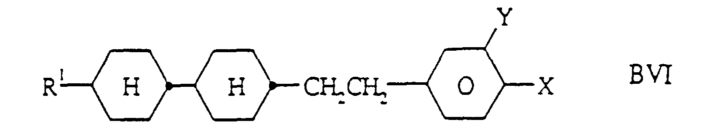 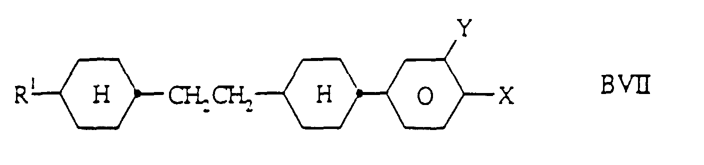 in which R¹ is as defined for R, and X is CN or F and Y is H or F,
c) comprises from 10 to 80% by weight of a liquid-crystalline component C consisting of one or more compounds having a dielectric anistropy of greater than +1.5, and
e) comprises an optically active component E in such an amount that the ratio between the layer thickness (separation of the plane-parallel outer plates) and the natural pitch of the chiral nematic liquid-crystal mixture is from about 0.2 to 1.3, and
in that the nematic liquid-crystal mixture has a nematic phase range of at least 60°C, a viscosity of not greater than 30 mPa.s, and a dielectric anistropy of at least +5, where the dielectric anistropies of the compounds and the parameters referring to the nematic liquid-crystal mixture are based on a temperature of 20°C, with the proviso that displays whose LC mixture has a dielectric ratio Δε/ε⊥ of < 2 (where Δε is the dielectric anistropy and ε⊥ is the dielectric constant in the direction of the short axis of the liquid-crystal molecules) are excluded.

2. Display according to Claim 1, characterized in that the nematic liquid-crystal mixture comprises at least one additional compound selected from group B3, consisting of the compounds of the formulae BVIII and BIX: 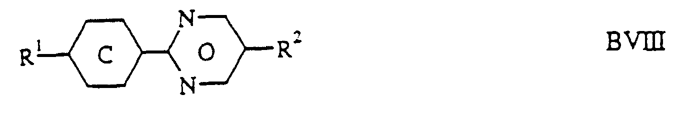 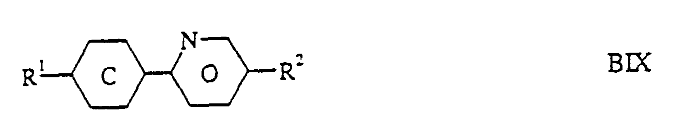 in which R¹ and R² are each, independently of one another, as defined for R, and 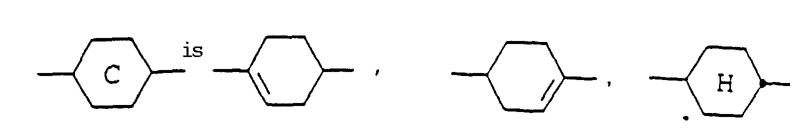 or

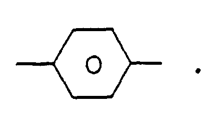

3. Display according to at least one of Claims 1 and 2, characterized in that the nematic liquid-crystal mixture comprises additional compounds selected from the group consisting of the compounds of the formulae BIII and BIV: 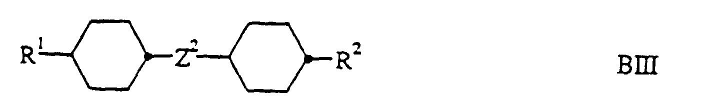 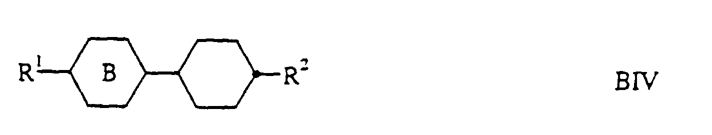 in which R¹ and R² are each, independently of one another, as defined for R, Z² is -CH₂-CH₂-, -CO-O-, -O-CO- or a single bond, and

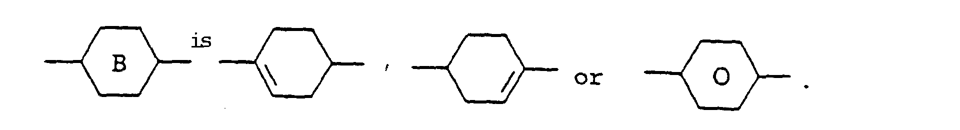

4. Display according to at least one of Claims 1 to 3, characterized in that component C comprises compounds selected from group C consisting of the compounds of the formulae CI to CIII: 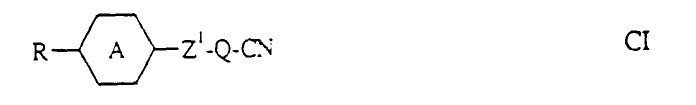 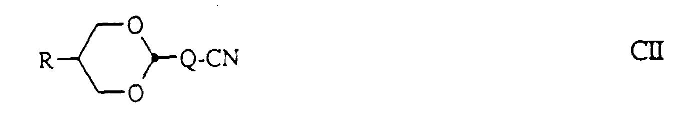 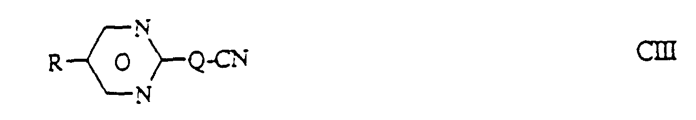 in which
R is as defined in Claim 1,
Q is 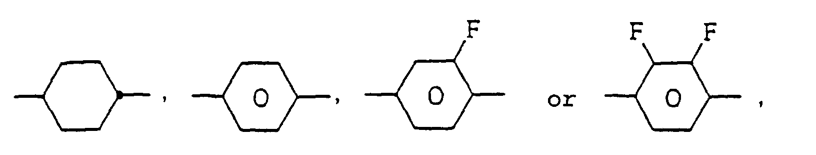
Z¹ is 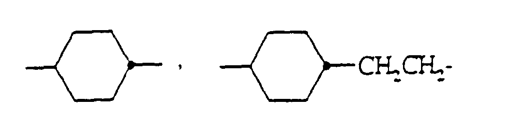 a single bond, -CH₂CH₂-, -CO-O- or -O-CO-, and

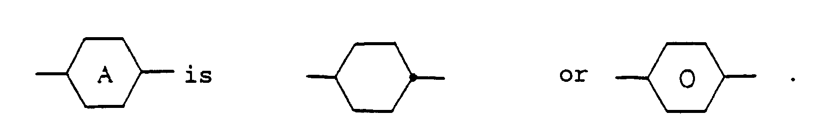

5. Display according to at least one of Claims 1 to 4, characterized in that the nematic liquid-crystal mixture is composed of 30-60% by weight of component C, 20-70% by weight of compounds from groups A and B, and an amount of component E which adds up to 100% by weight.

6. Display according to at least one of Claims 1 to 5, characterized in that the nematic liquid-crystal mixture comprises at least two compounds of the formula AIII or AV.

7. Display according to Claim 6, characterized in that the nematic liquid-crystal mixture comprises compounds of the formulae AIII and AV.

8. Display according to at least one of Claims 1 to 7, characterized in that the nematic liquid-crystal mixture comprises compounds of the formula BIII: 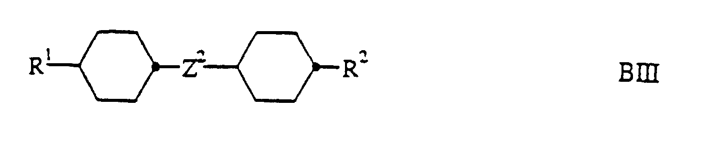 in which R¹, R² and Z² are as defined in Claim 3.

9. Display according to Claim 8, characterized in that the liquid-crystal mixture comprises compounds of the formula 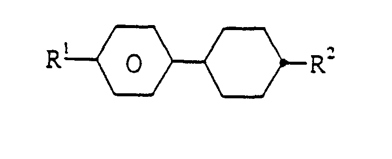 in which R¹ is CH₃-(CH₂)ₙ-O- or trans-H-(CH₂)ᵣ-CH=CH-(CH₂CH₂)ₛ-CH₂-O-,and R² is CH₃-(CH₂)ₜ-, where
n is 1, 2, 3 or 4,
r is 0, 1, 2 or 3,
s is 0 or 1, and
t is 1, 2, 3 or 4.

10. Display according to Claim 8 or 9, characterized in that the liquid-crystal mixture comprises compounds of the formula 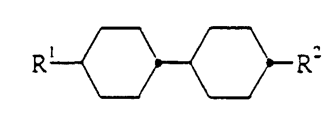 or 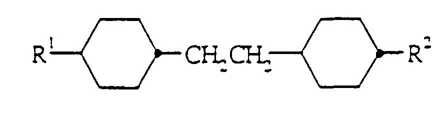 in which
R¹ is CH₃-(CH₂)ₙ-O-, CH₃-(CH₂)ₜ-,
trans-H-(CH₂)ᵣ-CH=CH-(CH₂CH₂)ₛ-CHₛ-CH₂O- or
trans-H-(CH₂)ᵣ-CH=CH-(CH₂CH₂)ₛ-, and
R² is CH₃-(CH₂)ₜ-,
where n, r, s and t are as defined in Claim 9.

11. Display according to at least one of Claims 1 to 10, characterized in that component C comprises one or more compounds containing a 4-fluorophenyl group or a 3,4-difluorophenyl group.

12. Display according to Claim 11, characterized in that the liquid-crystal mixture comprises at least one compound from the following group 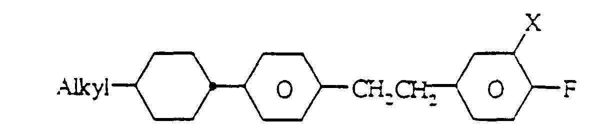 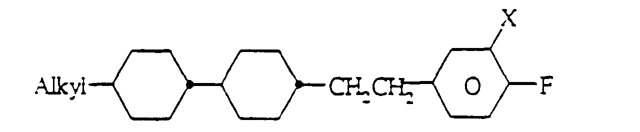 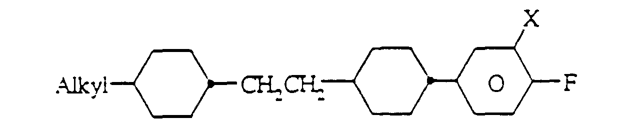 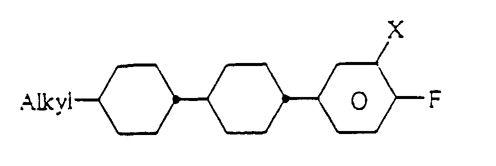 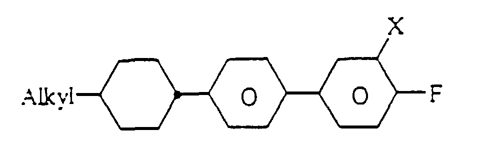 in which Alkyl is a straight-chain alkyl group having 2 to 7 carbon atoms, and X is H or F.

13. Display according to at least one of Claims 1 to 12, characterized in that the liquid-crystal mixture comprises one or more compounds in which R is a trans-alkenyl group or a trans-alkenyloxy group.

14. Nematic liquid-crystal mixtures of the composition defined in at least one of Claims 1 to 13.

## Revendications (Revendications pour l'(les) Etat(s) contractant(s) suivant(s): CH, DE, FR, GB, IT, LI, NL)

1. Dispositif d'affichage à cristaux liquides super-torsadés, comportant :
- deux plaques supports plan-parallèles, qui avec un rebord forment une cellule ;
- un mélange de cristaux liquides nématiques, se trouvant dans la cellule, présentant une anisotropie diélectrique positive ;
- des couches électrodes sur lesquelles sont disposées des couches d'orientation sur les faces intérieures des plaques supports ;
- un angle d'inclinaison d'environ 1 à 30 degrés entre l'axe longitudinal des molécules sur la surface des plaques supports et les plaques supports ; et
- un angle de torsadage du mélange de cristaux liquides dans la cellule, entre une couche d'orientation et une autre couche d'orientation, compris entre 160 et 360°,
caractérisé en ce que le mélange de cristaux liquides nématiques
a) contient au moins un composant, choisi dans le Groupe A constitué de composés de formules AIII à AVI : 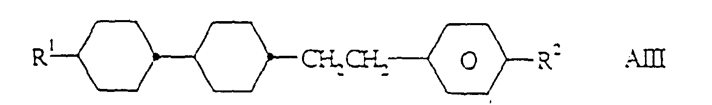 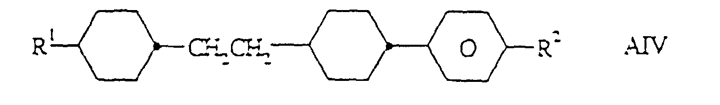 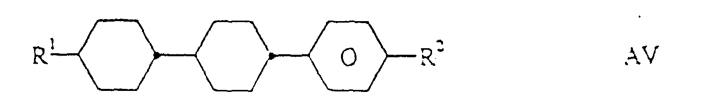 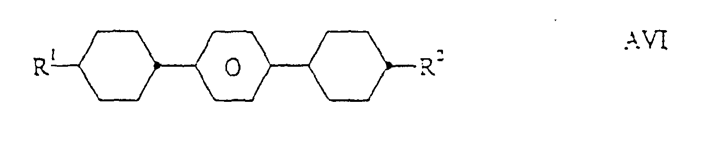 où chacun des radicaux R¹ et R² représente indépendamment de l'autre un radical R, et R est un groupe alkyle ayant de 1 à 12 atomes de carbone, où de même un ou deux groupes CH₂ non-voisins peuvent être remplacés par -O-, -CH=CH-, -CO-, -O-CO- ou -CO-O-,
b) contient au moins un composant choisi dans le Groupe B1 constitué des composés de formules BI et BII : 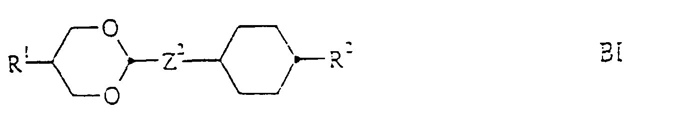 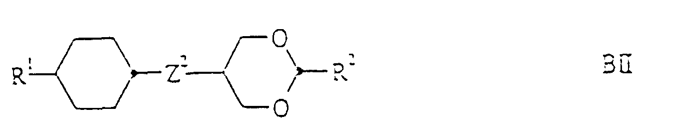 où chacun des radicaux R¹ et R², indépendamment de l'autre, a les significations données pour R, et Z² est -CH₂CH₂-, -CO-O-, -O-CO- ou représente une liaison simple, et des composés de formule BIII : 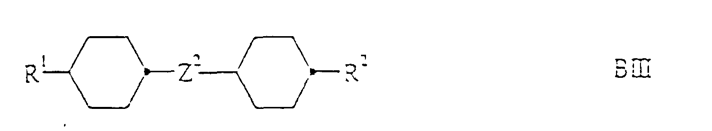 correspondant aux formules partielles suivantes : 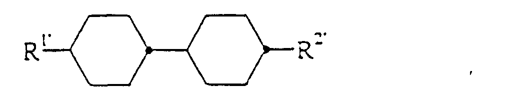 où 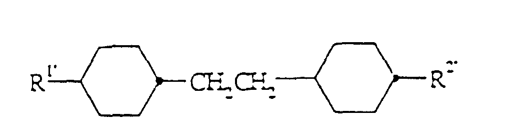
R^{1'} est CH₃-(CH₂)ₙ-O-, CH₃-(CH₂)ₜ-, trans-H-(CH₂)ᵣ-CH=CH-(CH₂CH₂)ₛ-CH₂O- ou trans-H-(CH₂)ᵣ-CH=CH-(CH₂CH₂)ₛ-,
R^{2'} est CH₃-(CH₂)ₜ-,
n vaut 1, 2, 3 ou 4,
r vaut 0, 1, 2 ou 3
s vaut 0 ou 1, et
t vaut 1, 2, 3 ou 4, et à la formule partielle 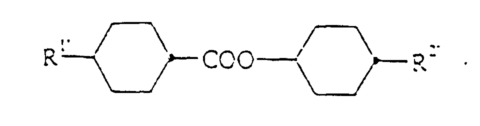 où R^{1'} et R^{2'} ont les significations données ci-dessus,
et/ou contient au moins un composant choisi dans le Groupe B2, constitué des composés des formules BVI et BVII : 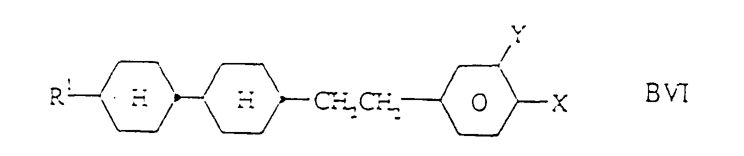 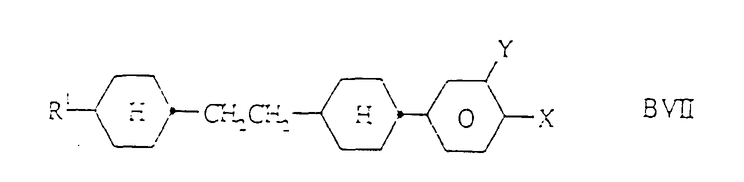 où R¹ a les significations données pour R, et X est CN ou F, et Y est H ou F,
c) contient de 10 à 80 % en poids d'un composant C mésomorphe, constitué d'un ou plusieurs composés ayant une anisotropie diélectrique supérieure à +1,5, et
e) contient un composant E optiquement actif, en une quantité telle que le rapport entre l'épaisseur de couche (distance entre les plaques supports plan-parallèles et le pas naturel du mélange de cristaux liquides nématiques chiraux soit d'environ 0,2 à 1,3,
et en ce que le mélange de cristaux liquides nématiques présente une étendue de phase nématique d'au moins 60°C, une viscosité non-supérieure à 30 mPa.s et une anisotropie diélectrique d'au moins +5, les anisotropies diélectriques des composés et les paramètres se rapportant au mélange de cristaux liquides nématiques étant rapportés à une température de 20°C,
à la condition d'exclure les dispositifs d'affichage à cristaux liquides supertorsadés dont le mélange de cristaux liquides contient un ou plusieurs composés de formule générale 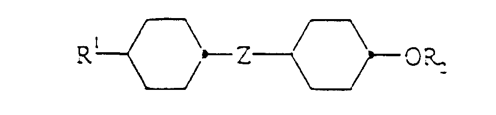 dans laquelle Z est une liaison covalente simple ou représente -CH₂-CH₂-, R¹ est un groupe 1E-alcényle ayant de 2 à 10 atomes de carbone ou 3E-alcényle ayant de 4 à 10 atomes de carbone, et R² est un groupe alkyle ayant de 1 à 10 atomes de carbone, 2E-alcényle ayant de 3 à 10 atomes de carbone ou 3-alcényle ayant de 4 à 10 atomes de carbone,
ou à la condition d'exclure les dispositifs d'affichage dont le mélange de cristaux liquides présente un rapport diélectrique Δε/ε⊥ est < 2 (où Δε est l'anisotropie diélectrique et ε⊥ est la constante diélectrique dans la direction du petit axe des molécules de cristaux liquides).

2. Dispositif d'affichage selon la revendication 1, caractérisé en ce que le mélange de cristaux liquides nématiques comprend au moins un composé supplémentaire choisi dans le Groupe B3, constitué des composés de formules BVIII et BIX 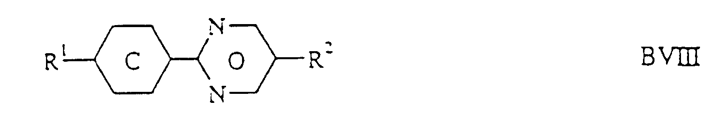 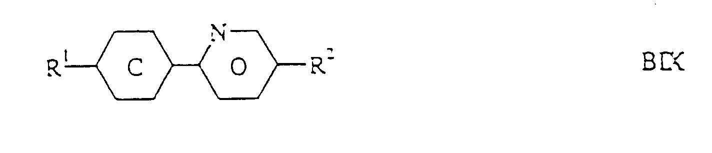 où chacun des radicaux R¹ et R² a, indépendamment de l'autre, les significations données pour R, et 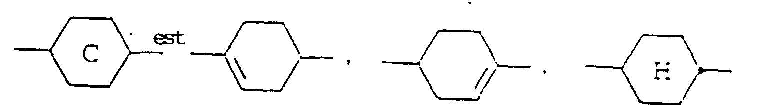 ou

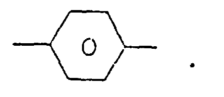

3. Dispositif d'affichage selon au moins l'une des revendications 1 et 2, caractérisé en ce que le mélange de cristaux liquides nématiques contient au moins un composé supplémentaire choisi dans le groupe constitué des composés de formules BIII et BIV : 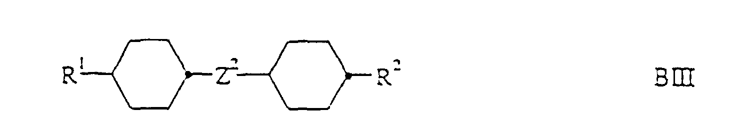 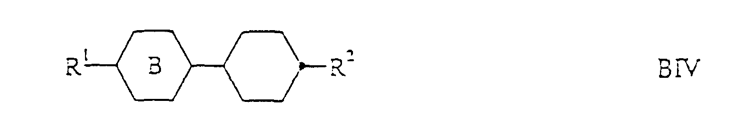 où chacun des radicaux R¹ et R² a, indépendamment de l'autre, les significations données pour R, Z² est -CH₂-CH₂-, -CO-O-, -O-CO-, ou une liaison simple, et

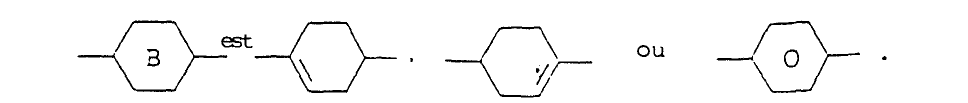

4. Dispositif d'affichage selon au moins l'une des revendications 1 à 3, caractérisé en ce que le composant C contient des composés choisis dans le Groupe C constitué des composés de formules CI à CIII : 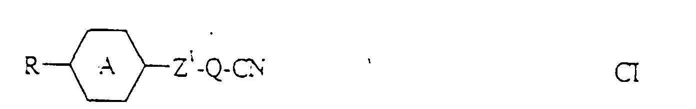 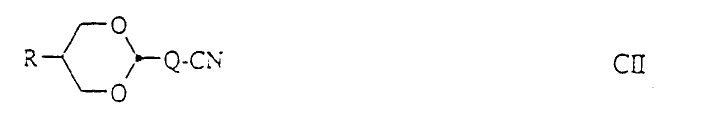 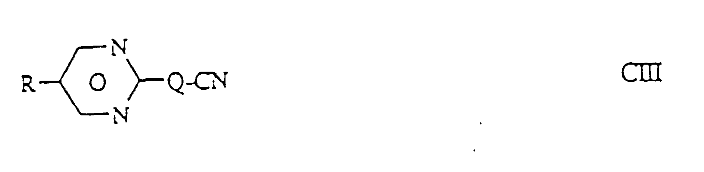 où
R a les significations données dans la revendication 1,
Q est 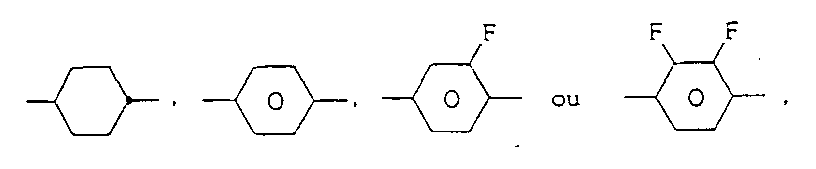
Z¹ est 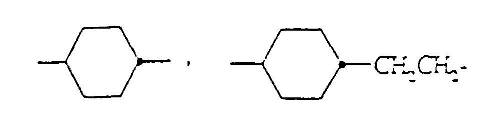 une liaison simple, -CH₂CH₂-, -CO-O- ou -O-CO- et

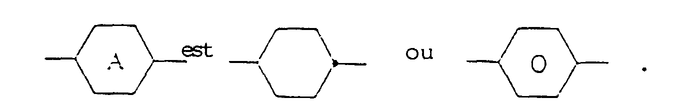

5. Dispositif d'affichage selon au moins l'une des revendications 1 à 4, caractérisé en ce que le mélange de cristaux liquides nématiques est composé de 30 à 60 % en poids du composant C, de 20 à 70 % en poids de composés des groupes A et B, et d'une quantité du composant E assurant le complément à 100 % en poids.

6. Dispositif d'affichage selon au moins l'une des revendications 1 à 5, caractérisé en ce que le mélange de cristaux liquides nématiques contient au moins deux composés de formules AIII ou AV.

7. Dispositif d'affichage selon la revendication 6, caractérisé en ce que le mélange de cristaux liquides nématiques contient des composés de formules AIII et AV.

8. Dispositif d'affichage selon au moins l'une des revendications 1 à 7, caractérisé en ce que le mélange de cristaux liquides nématiques contient des composés de formule BIII : 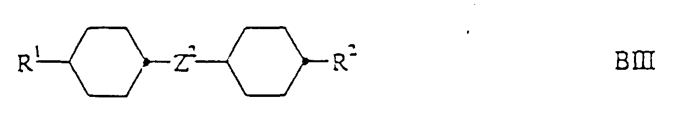 où R¹, R² et Z² ont les significations données dans la revendication 3.

9. Dispositif d'affichage selon la revendication 8, caractérisé en ce que le mélange de cristaux liquides contient des composés de formule 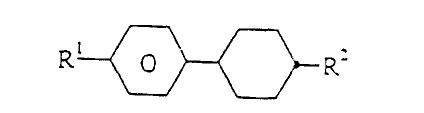 dans laquelle R¹ est CH₃-(CH₂)ₙ-O- ou trans-H-(CH₂)ᵣ-CH=CH-(CH₂CH₂)ₛ-CH₂O-, et R² est CH₃-(CH₂)ₜ-, où
n vaut 1, 2, 3 ou 4,
r vaut 0, 1, 2 ou 3
s vaut 0 ou 1, et
t vaut 1, 2, 3 ou 4.

10. Dispositif d'affichage selon la revendication 8 ou 9, caractérisé en ce que le mélange de cristaux liquides contient des composés de formules 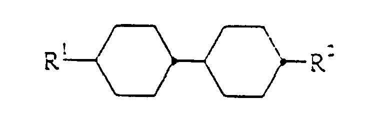 ou 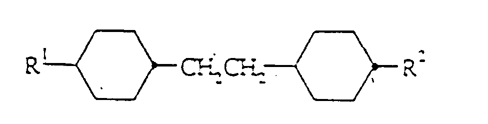 où
R¹ est CH₃-(CH₂)ₙ-O-, CH₃-(CH₂)ₜ-, trans-H-(CH₂)ᵣ-CH=CH-(CH₂CH₂)ₛ-CH₂O- ou trans-H-(CH₂)ᵣ-CH=CH-(CH₂CH₂)ₛ-, et
R² est CH₃-(CH₂)ₜ-,
où n, r, s et t ont les significations données dans la revendication 8.

11. Dispositif d'affichage selon au moins l'une des revendications 1 à 10, caractérisé en ce que le composant C contient un ou plusieurs composés ayant un groupe 4-fluorophényle ou un groupe 3,4-difluorophényle.

12. Dispositif d'affichage selon la revendication 11, caractérisé en ce que le mélange de cristaux liquides contient au moins un composé choisi dans le groupe suivant : 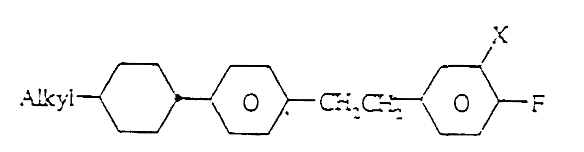 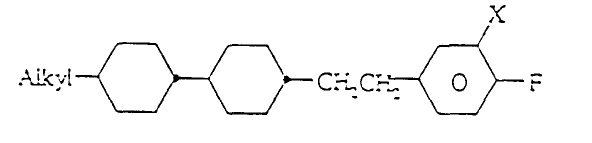 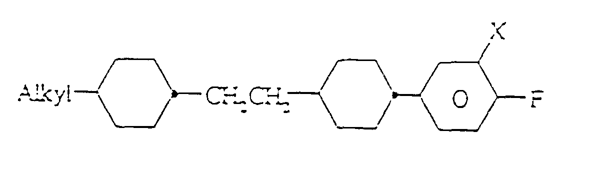 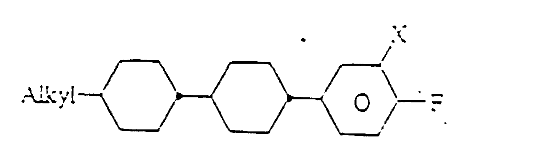 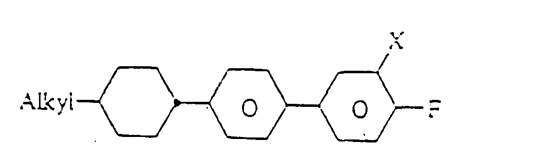 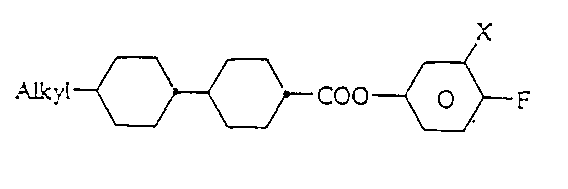 où alkyl désigne un groupe alkyle à chaîne droite ayant de 2 à 7 atomes de carbone, et X est H ou F.

13. Dispositif d'affichage selon au moins l'une des revendications 1 à 12, caractérisé en ce que le mélange de cristaux liquides contient un ou plusieurs composés, où R est un groupe trans-alcényle ou un groupe trans-alcényloxy.

14. Mélanges de cristaux liquides nématiques ayant la composition définie dans au moins l'une des revendications 1 à 13.

## Revendications (Revendications pour l'(les) Etat(s) contractant(s) suivant(s): BE, AT, SE)

1. Dispositif d'affichage à cristaux liquides super-torsadés, comportant :
- deux plaques supports plan-parallèles, qui avec un rebord forment une cellule ;
- un mélange de cristaux liquides nématiques, se trouvant dans la cellule, présentant une anisotropie diélectrique positive ;
- des couches électrodes sur lesquelles sont disposées des couches d'orientation sur les faces intérieures des plaques supports ;
- un angle d'inclinaison d'environ 1 à 30 degrés entre l'axe longitudinal des molécules sur la surface des plaques supports et les plaques supports ; et
- un angle de torsadage du mélange de cristaux liquides dans la cellule, entre une couche d'orientation et une autre couche d'orientation, compris entre 160 et 360°,
caractérisé en ce que le mélange de cristaux liquides nématiques
a) contient au moins un composant, choisi dans le Groupe A constitué de composés de formules AIII à AVI : 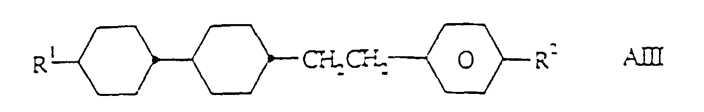 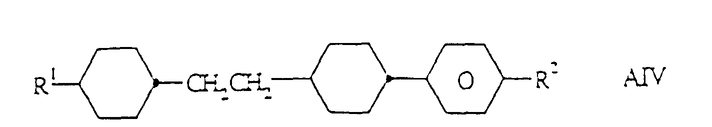 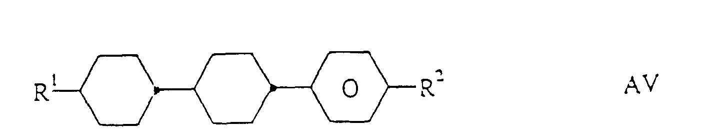 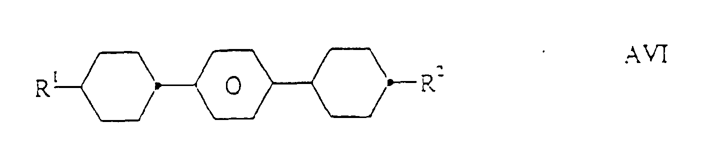 où chacun des radicaux R¹ et R² représente indépendamment de l'autre un radical R, et R est un groupe alkyle ayant de 1 à 12 atomes de carbone, où de même un ou deux groupes CH₂ non-voisins peuvent être remplacés par -O-,-CH=CH-, -CO-, -O-CO- ou -CO-O-,
b) contient au moins un composant choisi dans le Groupe B1 constitué des composés de formules BI et BII : 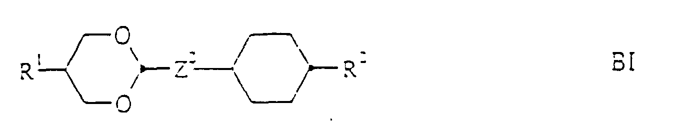 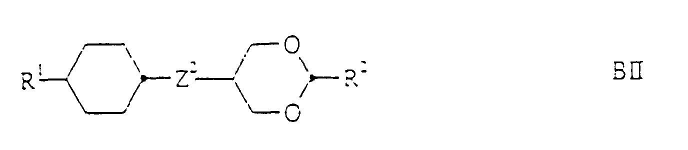 où chacun des radicaux R¹ et R², indépendamment de l'autre, a les significations données pour R, et Z² est -CH₂CH₂-, -CO-O-, -O-CO- ou représente une liaison simple, et des composés de formule BIII : 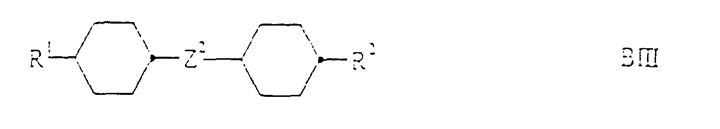 correspondant aux formules partielles suivantes : 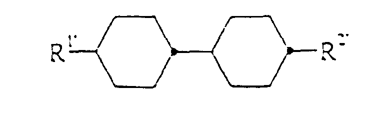 où 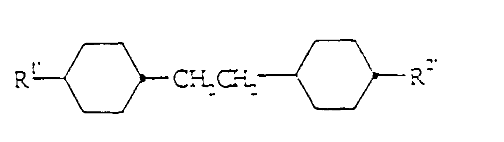
R^{1'} est CH₃-(CH₂)ₙ-O-, CH₃-(CH₂)ₜ-, trans-H-(CH₂)ᵣ-CH=CH-(CH₂CH₂)ₛ-CH₂O- ou trans-H-(CH₂)ᵣ-CH=CH-(CH₂CH₂)ₛ-,
R^{2'} est CH₃-(CH₂)ₜ-,
n vaut 1, 2, 3 ou 4,
r vaut 0, 1, 2 ou 3
s vaut 0 ou 1, et
t vaut 1, 2, 3 ou 4, ou la formule partielle 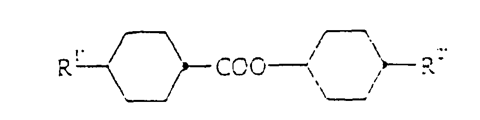 où R^{1'} et R^{2'} ont les significations données ci-dessus,
et/ou contient au moins un composant choisi dans le Groupe B2, constitué des composés des formules BVI et BVII : 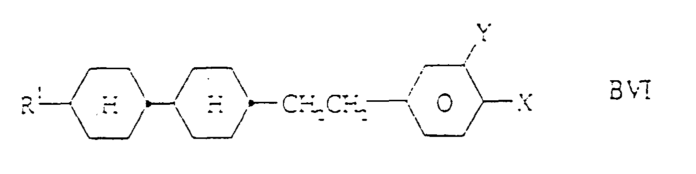 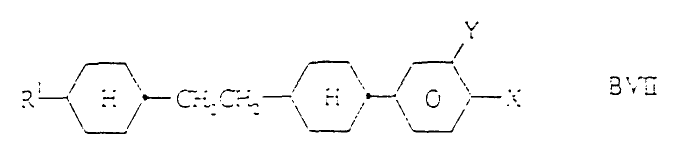 où R¹ a les significations données pour R, et X est CN ou F, et Y est H ou F,
c) contient de 10 à 80 % en poids d'un composant C mésomorphe, constitué d'un ou plusieurs composés ayant une anisotropie diélectrique supérieure à +1,5, et
e) contient un composant E optiquement actif, en une quantité telle que le rapport entre l'épaisseur de couche (distance entre les plaques supports plan-parallèles et le pas naturel du mélange de cristaux liquides nématiques chiraux soit d'environ 0,2 à 1,3,
et en ce que le mélange de cristaux liquides nématiques présente une étendue de phase nématique d'au moins 60°C, une viscosité non-supérieure à 30 mPa.s et une anisotropie diélectrique d'au moins +5, les anisotropies diélectriques des composés et les paramètres se rapportant au mélange de cristaux liquides nématiques étant rapportés à une température de 20°C, à la condition d'exclure les dispositifs d'affichage dont le mélange de cristaux liquides présente un rapport diélectrique Δε/ε⊥ est < 2 (où Δε est l'anisotropie diélectrique et ε⊥ est la constante diélectrique dans la direction du petit axe des molécules de cristaux liquides).

2. Dispositif d'affichage selon la revendication 1, caractérisé en ce que le mélange de cristaux liquides nématiques comprend au moins un composé supplémentaire choisi dans le Groupe B3, constitué des composés de formules BVIII et BIX 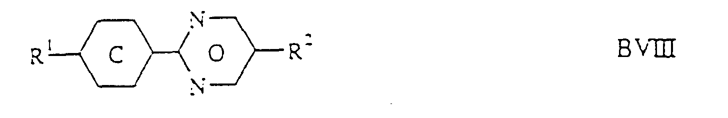 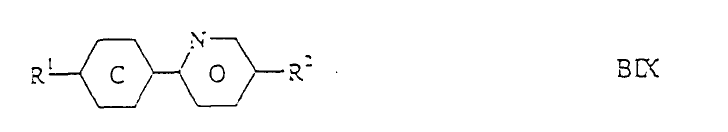 où chacun des radicaux R¹ et R² a, indépendamment de l'autre, les significations données pour R, et 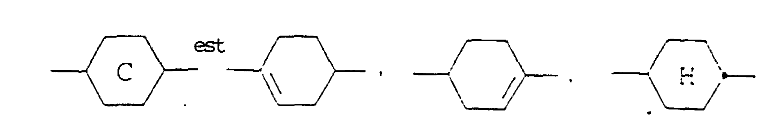 ou

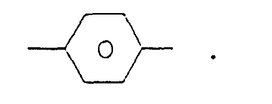

3. Dispositif d'affichage selon au moins l'une des revendications 1 et 2, caractérisé en ce que le mélange de cristaux liquides nématiques contient au moins un composé supplémentaire choisi dans le groupe constitué des composés de formules BIII et BIV : 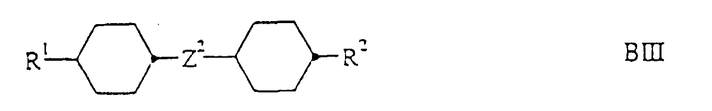 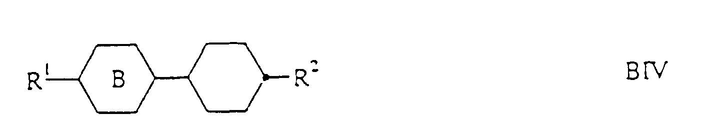 où chacun des radicaux R¹ et R² a, indépendamment de l'autre, les significations données pour R, Z² est -CH₂-CH₂-, -CO-O-, -O-CO-, ou une liaison simple, et

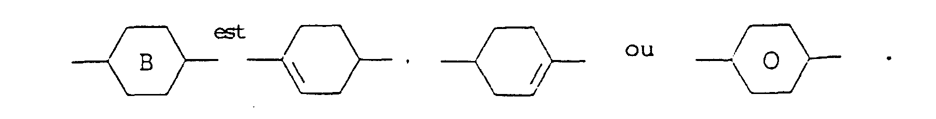

4. Dispositif d'affichage selon au moins l'une des revendications 1 à 3, caractérisé en ce que le composant Ccontient des composés choisis dans le Groupe C constitué des composés de formules CI à CIII : 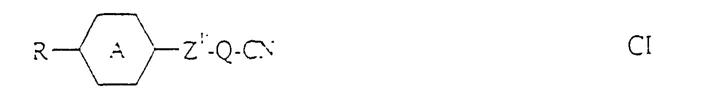 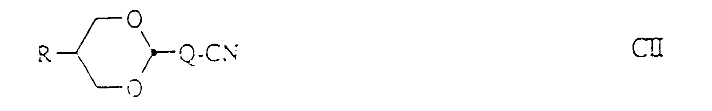 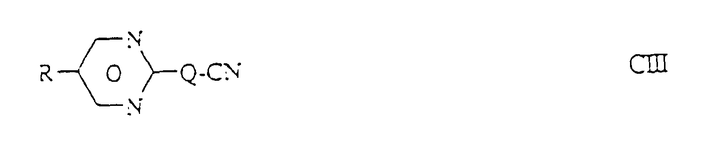 où
R a les significations données dans la revendication 1,
Q est 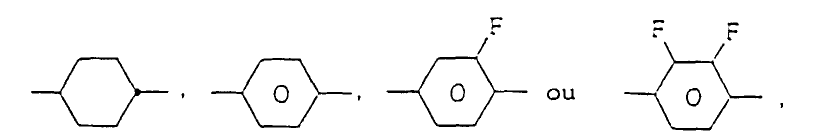
Z¹ est 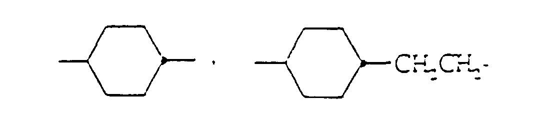 une liaison simple, -CH₂CH₂-, -CO-O- ou -O-CO- et

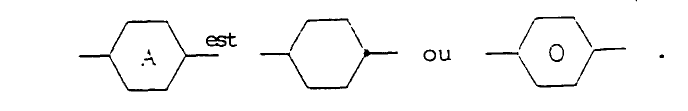

5. Dispositif d'affichage selon au moins l'une des revendications 1 à 4, caractérisé en ce que le mélange de cristaux liquides nématiques est composé de 30 à 60 % en poids du composant C, de 20 à 70 % en poids de composés des groupes A et B, et d'une quantité du composant E assurant le complément à 100 % en poids.

6. Dispositif d'affichage selon au moins l'une des revendications 1 à 5, caractérisé en ce que le mélange de cristaux liquides nématiques contient au moins deux composés de formules AIII ou AV.

7. Dispositif d'affichage selon la revendication 6, caractérisé en ce que le mélange de cristaux liquides nématiques contient des composés de formules AIII et AV.

8. Dispositif d'affichage selon au moins l'une des revendications 1 à 7, caractérisé en ce que le mélange de cristaux liquides nématiques contient des composés de formule BIII : 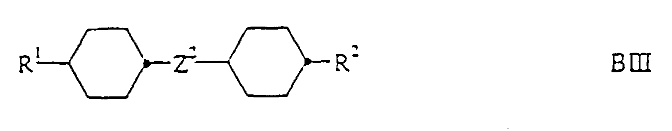 où R¹, R² et Z² ont les significations données dans la revendication 3.

9. Dispositif d'affichage selon la revendication 8, caractérisé en ce que le mélange de cristaux liquides contient des composés de formule 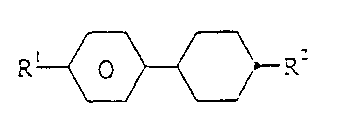 dans laquelle R¹ est CH₃-(CH₂)ₙ-O- ou trans-H-(CH₂)ᵣ-CH=CH-(CH₂CH₂)ₛ-CH₂O-, et R² est CH₃-(CH₂)ₜ-, où
n vaut 1, 2, 3 ou 4,
r vaut 0, 1, 2 ou 3
s vaut 0 ou 1, et
t vaut 1, 2, 3 ou 4.

10. Dispositif d'affichage selon la revendication 8 ou 9, caractérisé en ce que le mélange de cristaux liquides contient des composés de formules 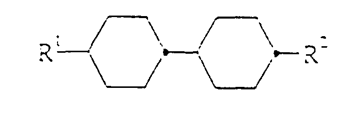 ou 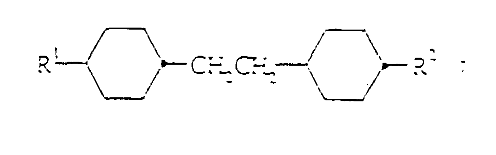 où
R¹ est CH₃-(CH₂)ₙ-O-, CH₃-(CH₂)ₜ-, trans-H-(CH₂)ᵣ-CH=CH-(CH₂CH₂)ₛ-CH₂O- ou trans-H-(CH₂)ᵣ-CH=CH-(CH₂CH₂)ₛ-, et
R² est CH₃-(CH₂)ₜ-,
où n, r, s et t ont les significations données dans la revendication 8.

11. Dispositif d'affichage selon au moins l'une des revendications 1 à 10, caractérisé en ce que le composant C contient un ou plusieurs composés ayant un groupe 4-fluorophényle ou un groupe 3,4-difluorophényle.

12. Dispositif d'affichage selon la revendication 11, caractérisé en ce que le mélange de cristaux liquides contient au moins un composé choisi dans le groupe suivant : 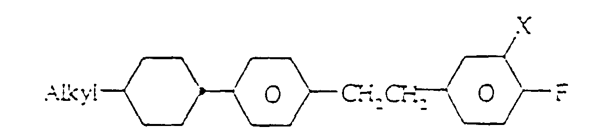 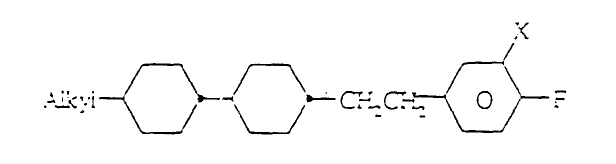 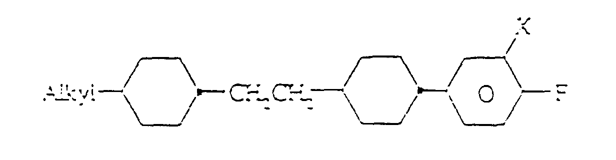 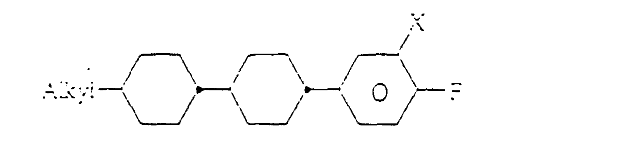 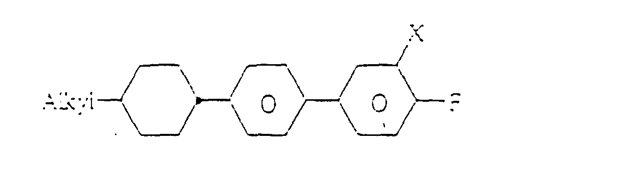 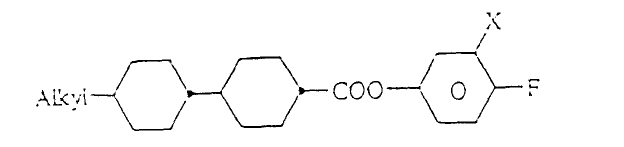 où alkyl désigne un groupe alkyle à chaîne droite ayant de 2 à 7 atomes de carbone, et X est H ou F.

13. Dispositif d'affichage selon au moins l'une des revendications 1 à 12, caractérisé en ce que le mélange de cristaux liquides contient un ou plusieurs composés, où R est un groupe trans-alcényle ou un groupe trans-alcényloxy.

14. Mélanges de cristaux liquides nématiques ayant la composition définie dans au moins l'une des revendications 1 à 13.
